(19) **Europäisches Patentamt**
**European Patent Office**
**Office européen des brevets**

(11) **EP 4 676 072 A1**

(12) **EUROPEAN PATENT APPLICATION**
published in accordance with Art. 153(4) EPC

(43) Date of publication:
**07.01.2026 Bulletin 2026/02**

(51) International Patent Classification (IPC):
*H04N 23/60* (2023.01)  *G03B 5/00* (2021.01)
*G03B 7/095* (2021.01)  *G03B 35/08* (2021.01)
*G06T 7/579* (2017.01)  *H04N 23/67* (2023.01)
*H04N 23/68* (2023.01)  *H04N 23/71* (2023.01)
*H04N 23/74* (2023.01)  *H04N 23/75* (2023.01)
*H04N 23/76* (2023.01)

(21) Application number: **24763620.2**

(22) Date of filing: **15.02.2024**

(52) Cooperative Patent Classification (CPC):
**G03B 5/00; G03B 7/095; G03B 35/08; G06T 7/579;**
**H04N 23/60; H04N 23/67; H04N 23/68;**
**H04N 23/71; H04N 23/74; H04N 23/75; H04N 23/76**

(86) International application number:
**PCT/JP2024/005160**

(87) International publication number:
**WO 2024/181137 (06.09.2024 Gazette 2024/36)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **27.02.2023 JP 2023028391**

(71) Applicant: **Sony Group Corporation**
**Tokyo 108-0075 (JP)**

(72) Inventor: **UYAMA Keisuke**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE AND METHOD**

(57)    The present disclosure relates to an information processing device and method to make it possible to reduce a decrease in quality of a 3D model generated using a captured image.

An imaging parameter applied to imaging for generating a captured image to be used for generation of second three-dimensional shape information is controlled on the basis of position and orientation information indicating a position and an orientation of an imaging unit and first three-dimensional shape information. Furthermore, an illumination environment of a space in which imaging is performed is detected, imaging for generating a captured image to be used for generation of three-dimensional shape information expressing a three-dimensional shape of a 3D object is performed in the space, and information regarding the detected illumination environment is associated with the captured image. The present disclosure is applicable to, for example, an information processing device, an imaging device, an imaging communication device, electronic equipment, an information processing method, a program, an infor-
mation processing system, or the like.

FIG. 4

## Description

TECHNICAL FIELD

The present disclosure relates to an information processing device and method, and more particularly relates to an information processing device and method capable of reducing a decrease in quality of a 3D model generated using a captured image.

BACKGROUND ART

As a known method for 3D modeling of a 3D object having a three-dimensional shape, there is a method called photogrammetry that images the 3D object from multiple directions and generates 3D data on the basis of the plurality of captured images (See, for example, Patent Document 1.). Furthermore, there has been a method of removing a shadow from a 3D model obtained by 3D modeling (See, for example, Non-Patent Document 1.).

CITATION LIST

PATENT DOCUMENT

Patent Document 1: Japanese Patent Application Laid-Open No. 2018-63693

NON-PATENT DOCUMENT

Non-Patent Document 1:
https://agisoft.freshdesk.com/support/solutions/articles/31000158376-agisoft-texture-de-lighter-general-work flow

SUMMARY OF THE INVENTION

PROBLEMS TO BE SOLVED BY THE INVENTION

However, in imaging for generating a captured image used for 3D modeling such as photogrammetry, if an imaging parameter is not appropriate for 3D modeling, quality of a 3D model generated by the 3D modeling may be reduced. For example, although the shadow can be removed from the 3D model by the method described in Non-Patent Document 1, it is difficult to sufficiently suppress the reduction in the quality of the 3D model even if the texture information of the 3D model is processed.

The present disclosure has been made in view of such a situation, and an object thereof is to make it possible to reduce a decrease in quality of a 3D model generated using a captured image.

SOLUTIONS TO PROBLEMS

An information processing device according to one aspect of the present technology is an information processing device including an imaging parameter control unit that controls an imaging parameter applied to imaging for generating a captured image to be used for generation of second three-dimensional shape information on the basis of position and orientation information indicating a position and an orientation of an imaging unit and first three-dimensional shape information, in which the first three-dimensional shape information includes information expressing a three-dimensional shape of a 3D object, and is generated on the basis of the position and orientation information and a captured image of the 3D object, and the second three-dimensional shape information includes information expressing a three-dimensional shape of the 3D object, and is generated on the basis of the captured image of the 3D object generated by the imaging to which the imaging parameter is applied.

An information processing method according to one aspect of the present technology is an information processing method including controlling an imaging parameter applied to imaging for generating a captured image to be used for generation of second three-dimensional shape information on the basis of position and orientation information indicating a position and an orientation of an imaging unit and first three-dimensional shape information, in which the first three-dimensional shape information includes information expressing a three-dimensional shape of a 3D object, and is generated on the basis of the position and orientation information and a captured image of the 3D object, and the second three-dimensional shape information includes information expressing a three-dimensional shape of the 3D object, and is generated on the basis of the captured image of the 3D object generated by the imaging to which the imaging parameter is applied.

An information processing device according to another aspect of the present technology is an information processing device including: an illumination environment detection unit that detects an illumination environment of a space in which imaging is performed; an imaging unit that performs, in the space, the imaging for generating a captured image to be used for generation of three-dimensional shape information expressing a three-dimensional shape of a 3D object; and an association unit that associates information regarding the detected illumination environment with the captured image.

An information processing method according to another aspect of the present technology is an information processing method including: detecting an illumination environment of a space in which imaging is performed; performing, in the space, the imaging for generating a captured image to be used for generation of three-dimensional shape information expressing a three-dimensional shape of a 3D object; and associating information regarding the detected illumination environment with the captured image.

In the information processing device and method according to one aspect of the present technology, the imaging parameter applied to imaging for generating a captured image to be used for generation of the second three-dimensional shape information is controlled on the basis of the position and orientation information indicating a position and an orientation of the imaging unit and the first three-dimensional shape information. The first three-dimensional shape information includes information expressing the three-dimensional shape of the 3D object, and is generated on the basis of the position and orientation information and a captured image of the 3D object. The second three-dimensional shape information includes information expressing the three-dimensional shape of the 3D object, and is generated on the basis of the captured image of the 3D object generated by imaging to which the imaging parameter is applied.

In the information processing device and method according to another aspect of the present technology, the illumination environment of the space in which imaging is performed is detected, imaging for generating a captured image to be used for generation of the three-dimensional shape information expressing the three-dimensional shape of the 3D object is performed in the space, and information regarding the detected illumination environment is associated with the captured image.

BRIEF DESCRIPTION OF DRAWINGS

Fig. 1 is a diagram for describing an overview of photogrammetry.
Fig. 2 is a diagram for describing an overview of real-time 3D modeling.
Fig. 3 is a diagram comparing photogrammetry and real-time 3D modeling.
Fig. 4 is a diagram illustrating an example of a method for assisting in imaging for 3D modeling.
Fig. 5 is a diagram illustrating an example of how imaging control and imaging guidance are performed.
Fig. 6 is a diagram illustrating an example of overlap.
Fig. 7 is a diagram illustrating an example of how imaging is performed in accordance with a distance from a subject.
Fig. 8 is a diagram illustrating an example of how parallel processing is performed.
Fig. 9 is a diagram illustrating an example of scoring processing.
Fig. 10 is a diagram illustrating an example of scoring processing.
Fig. 11 is a diagram illustrating an example of scoring processing.
Fig. 12 is a diagram illustrating an example of scoring processing.
Fig. 13 is a diagram illustrating an example of scoring processing.
Fig. 14 is a diagram illustrating an example of output of a scoring result.

Fig. 15 is a diagram illustrating an example of output of overlap information.
Fig. 16 is a diagram illustrating a display example of guidance information.
Fig. 17 is a diagram illustrating a display example of guidance information.
Fig. 18 is a diagram illustrating a display example of guidance information.
Fig. 19 is a diagram illustrating a display example of guidance information.
Fig. 20 is a diagram illustrating a display example of guidance information.
Fig. 21 is a diagram illustrating a display example of guidance information.
Fig. 22 is a diagram illustrating a display example of guidance information.
Fig. 23 is a diagram illustrating a display example of guidance information.
Fig. 24 is a diagram illustrating a display example of guidance information.
Fig. 25 is a diagram illustrating a display example of guidance information.
Fig. 26 is a diagram illustrating a setting example of a detection region.
Fig. 27 is a diagram illustrating an example of control of focus and diaphragm.
Fig. 28 is a diagram illustrating an example of control of camera shake correction.
Fig. 29 is a diagram illustrating an example of exposure control.
Fig. 30 is a diagram illustrating an example of exposure control.
Fig. 31 is a diagram illustrating an example of shadow correction.
Fig. 32 is a diagram illustrating an example of an illumination environment detection unit.
Fig. 33 is a diagram illustrating an example of color matching control.
Fig. 34 is a diagram describing an example of a sequence.
Fig. 35 is a diagram describing increment processing.
Fig. 36 is a block diagram illustrating a main configuration example of an imaging device.
Fig. 37 is a flowchart describing an example of a flow of 3D modeling processing.
Fig. 38 is a flowchart describing an example of a flow of real-time 3D modeling processing.
Fig. 39 is a flowchart describing an example of a flow of photogrammetry processing.
Fig. 40 is a block diagram illustrating a main configuration example of an information processing system.
Fig. 41 is a block diagram illustrating a main configuration example of an imaging communication device.
Fig. 42 is a block diagram illustrating a main configuration example of an imaging device.

Fig. 43 is a block diagram illustrating a main configuration example of a server.

Fig. 44 is a flowchart describing an example of a flow of 3D modeling processing.

Fig. 45 is a flowchart describing an example of a flow of 3D modeling processing, following the flowchart in Fig. 44.

Fig. 46 is a block diagram illustrating a main configuration example of an imaging communication device.

Fig. 47 is a block diagram illustrating a main configuration example of a server.

Fig. 48 is a flowchart describing an example of a flow of 3D modeling processing.

Fig. 49 is a flowchart describing an example of a flow of 3D modeling processing, following the flowchart in Fig. 48.

Fig. 50 is a block diagram illustrating a main configuration example of an imaging device.

Fig. 51 is a flowchart describing an example of a flow of 3D modeling processing.

Fig. 52 is a flowchart describing an example of a flow of focus control processing.

Fig. 53 is a flowchart describing an example of a flow of diaphragm control processing.

Fig. 54 is a flowchart describing an example of a flow of camera shake correction control processing.

Fig. 55 is a block diagram illustrating a main configuration example of an imaging device.

Fig. 56 is a flowchart describing an example of a flow of exposure control processing.

Fig. 57 is a flowchart describing an example of a flow of shadow correction control processing.

Fig. 58 is a flowchart describing an example of a flow of color matching control processing.

Fig. 59 is a block diagram illustrating a main configuration example of a computer.

MODE FOR CARRYING OUT THE INVENTION

Modes for carrying out the present disclosure (hereinafter, referred to as embodiments) are hereinafter described. Note that the description will be given in the following order.

1. 3D modeling
2. Imaging control
3. Imaging guidance output
4. Combination
5. Imaging parameter control processing
6. First embodiment (imaging device)
7. Second embodiment (information processing system)
8. Third embodiment (imaging device)
9. Supplementary note

<1. 3D modeling>

<Photogrammetry>

As a known method for generating (reconstructing) a three-dimensional shape model of an object having a three-dimensional shape (also referred to herein as a 3D object), there is a method called photogrammetry that images the 3D object from multiple directions and generates 3D data on the basis of the plurality of captured images. Note that generating a three-dimensional shape model of a 3D object is also referred to herein as 3D modeling.

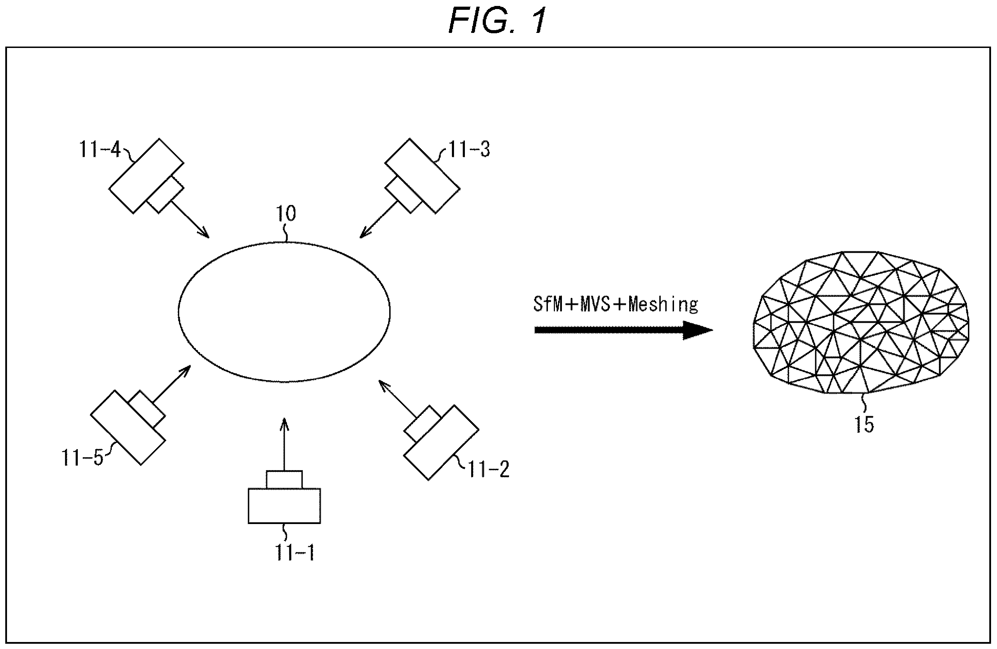

Photogrammetry is a method for reconstructing a highly accurate three-dimensional model from a plurality of images captured from various viewpoints using the principle of triangulation. Note that the "accuracy" of the 3D data (3D model) may herein include not only reproducibility (accuracy, resolution, or the like) of the three-dimensional shape of the target 3D object but also reproducibility (accuracy, resolution, or the like) of the texture applied to the surface of the 3D model. For example, cameras such as cameras 11-1 to 11-5 illustrated in Fig. 1 image a 3D object 10 from a plurality of viewpoints to obtain a plurality of captured images. Then, processing called structure from motion (SfM) and processing called multi view stereo (MVS) are performed using these captured images and the like, and meshing and texturing are further performed as post-processing to generate 3D data 15.

In SfM, for example, a corresponding point is searched for between the captured images, the position and orientation of each camera are derived using epipolar constraint, and the position of each corresponding point in the three-dimensional space is determined by triangulation based on the position and orientation of the camera. This point on the three-dimensional space is also referred to herein as a three-dimensional point. That is, the three-dimensional point for each corresponding point is determined. Then, the three-dimensional point cloud determined as described above is entirely optimized using bundle adjustment.

Moreover, in MVS, for example, denser corresponding points are searched for using the three-dimensional point cloud derived as described above, and resultant three-dimensional points are added.

As described above, in photogrammetry, global optimization calculation, that is, bundle adjustment, is performed to minimize an error, so that a highly accurate result can be obtained, but the computation load is high. Furthermore, photogrammetry is based on geometric calculation rather than physical measurement, so that, in principle, the higher the resolution of the image being used, the more accurate the model being restored.

<Real-time 3D modeling>

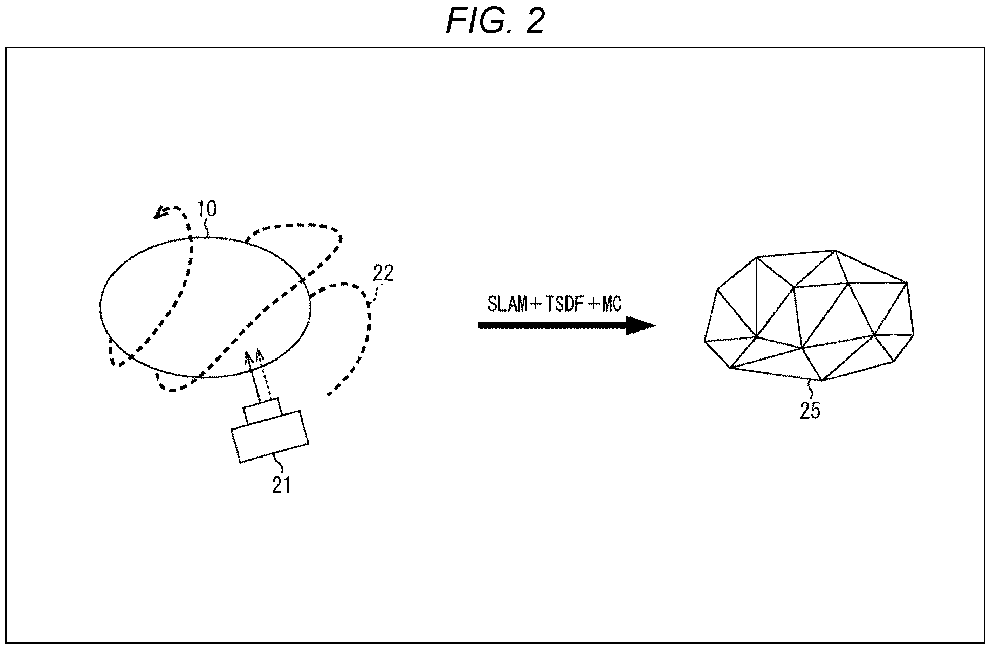

As a 3D modeling method different from such photogrammetry, there is a method called real-time 3D modeling that generates 3D data instantaneously (in real time) on the basis of information such as captured images, orientation information, and depth. In the case of this method, for example, as illustrated in Fig. 2, the 3D object 10 is imaged while a camera 21 is moved around the 3D object 10 as indicated by a dotted line 22. The camera 21 includes not only an image sensor but also a light detection and ranging (Lidar) scanner (direct time of flight (dToF) module), and obtains a captured image and detects a depth (distance to the subject).

In recent years, with the development of science and technology, miniaturization and functionality enhancement of the dToF module have progressed, and a relatively long-distance depth (for example, about 5 m) can also be accurately measured regardless of whether it is indoors or outdoors. This makes it easy to experience real-time modeling and capturing at the consumer level.

Moreover, the camera 21 further includes an inertial sensor, and detects acceleration and angular velocity of (also referred to herein as inertial information regarding) the camera 21.

In the real-time 3D modeling, processing called simultaneous localization and mapping (SLAM) is performed to generate orientation information indicating the position and orientation of the camera 21. Furthermore, a truncated signed distance function (TSDF) is updated using the orientation information and the depth, and 3D data 25 (mesh and texture) is generated by processing called marching cubes (MC).

In SLAM, for example, the position and orientation of the camera are estimated on the basis of the captured image and the inertial information (self-localization). In updating the TSDF, the correspondence between the depth and voxels are established, and the volume is detected. In MC, the calculation of isosurfaces is performed using adjacent voxels. With SLAM real-time orientation information, it is possible to detect the volume of voxels (not via the point cloud) by superimposing a plurality of frames of depth (how far the light beam has reached). Voxel representation allows for estimation of a viewpoint (missing viewpoint) that is overshadowed and needs to be captured. This makes it possible to detect a perforated structure or a protruding structure of the 3D object.

<Neural Rendering>

Moreover, in recent years, a method collectively called Neural Rendering (for example, neural radiance fields (NeRF) and the like) has been proposed in which Neural Fields are constructed on the basis of the orientations of captured images and the captured images to generate an image or a three-dimensional model from any viewpoint.

<Comparison>

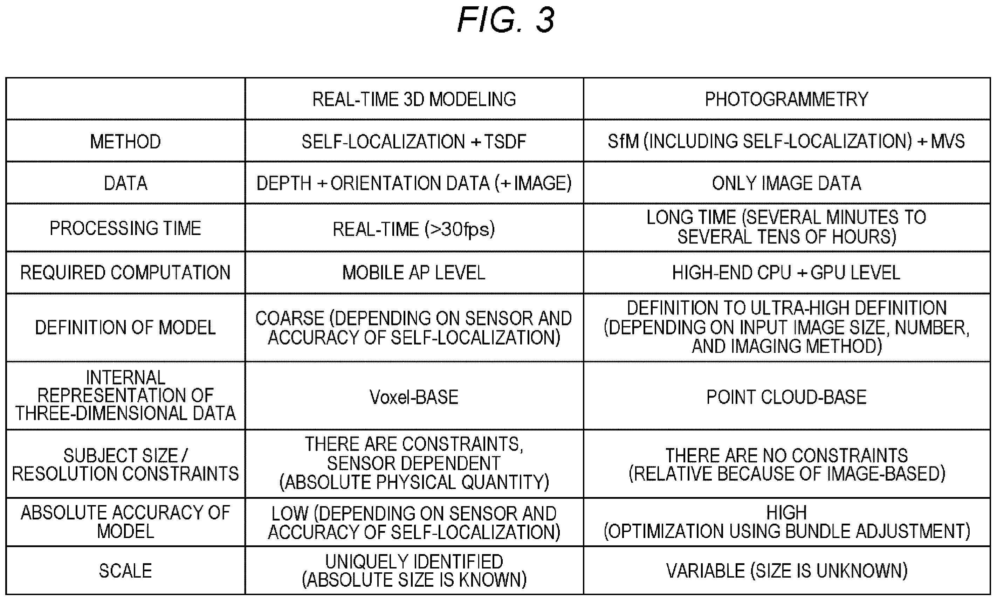

Each 3D modeling method as described above has different characteristics, and no single method excels in all aspects. Fig. 3 illustrates the results of comparing the characteristics of photogrammetry and real-time 3D modeling. As illustrated in Fig. 3, when comparing the methods, photogrammetry uses SfM (including self-localization) and MVS, whereas real-time 3D modeling uses self-localization (SLAM) and TSDF. Furthermore, when comparing the data to be used, photogrammetry uses only image data, whereas real-time 3D modeling uses depth and orientation data in addition to image data. Furthermore, when comparing the processing times, photogrammetry requires a longer time ranging from several minutes to several tens of hours, whereas real-time 3D modeling allows near-instantaneous (real-time) processing such as 30 fps (frame/sec).

Furthermore, when comparing the required computational power, photogrammetry requires high-end central processing unit (CPU) and graphics processing unit (GPU) level computational power, and real-time 3D modeling requires mobile application processor (AP) level computational power. Furthermore, when comparing the definitions of the models to be generated, photogrammetry, although depending on the factors such as the resolution, number, and imaging method of captured images, results in relatively high definition, and real-time 3D modeling, although depending on factors such as the depth and the accuracy of self-localization, results in relatively low definition.

Furthermore, regarding the internal representation of three-dimensional data to be generated, photogrammetry is point cloud-based, whereas real-time 3D modeling is voxel-based. Furthermore, photogrammetry has no subject size and resolution constraints, whereas real-time 3D modeling depends on the sensor. Furthermore, when comparing the absolute accuracy of the models, photogrammetry results in relatively high absolute accuracy due to the optimization using bundle adjustment, and real-time 3D modeling, although depending on factors such as the sensor and the accuracy of self-localization, results in relatively low absolute accuracy. Furthermore, when comparing the scales, the scale is variable (size is unknown) for photogrammetry, whereas the scale is uniquely identified (absolute size is known) for real-time 3D modeling.

There are such differences in characteristics between photogrammetry and real-time 3D modeling, for example. That is, it is possible to reduce a workload and processing volume of 3D modeling in a case where real-time 3D modeling is applied as compared with a case where photogrammetry or Neural Rendering is applied. It is, however, possible to generate highly accurate 3D data in a case where photogrammetry or Neural Rendering is applied as compared with a case where real-time 3D modeling is applied.

<Facilitation of 3D modeling>

For example, in order to obtain more accurate 3D data, photogrammetry or Neural Rendering is only required to be applied as described above. However, in this case as well, it is desirable that the workload and processing volume of 3D modeling be smaller. In order to reduce the workload and processing volume of 3D modeling, it is required to generate 3D data with as high accuracy as possible using as few imaging number of times as possible.

For example, in a case where captured images necessary for 3D modeling cannot be obtained, there is a possibility that the accuracy of 3D data decreases. Conversely, if an attempt is made to obtain an excessive number of captured images to avoid a shortage, there is a possibility that the imaging frequency increases unnecessarily, and the user's workload increases accordingly. Furthermore, in that case, since 3D modeling processing is performed using unnecessary captured images, there is a possibility that the processing volume increases unnecessarily.

That is, in order to obtain more accurate 3D data with less workload and processing volume, it is required that the 3D object be imaged in a more appropriate position and orientation. However, in each of the known 3D modeling methods, it is difficult for the photographer to identify the appropriate position and orientation for imaging.

For example, photogrammetry requires a significant amount of time for 3D modeling processing, so that it is difficult for the photographer to instantaneously review a 3D modeling result during imaging. It is therefore difficult for the photographer to identify, during imaging, the appropriate position and orientation for imaging. As a result, for example, there is a possibility that the number of images captured in the appropriate position and orientation is not sufficient, and the accuracy of 3D data obtained by photogrammetry decreases. Furthermore, when imaging is performed excessively and haphazardly in any position and orientation to avoid a shortage of images captured in the appropriate position and orientation, there is a possibility that not only the user's workload increases, but also the number of captured images increases unnecessarily, and the load (processing volume, processing time, and the like) of the 3D modeling processing increases unnecessarily.

<2. Imaging control>

<Imaging control based on scoring result>

Therefore, 3D modeling is performed twice, and imaging for the second 3D modeling is controlled using the result of the first 3D modeling.

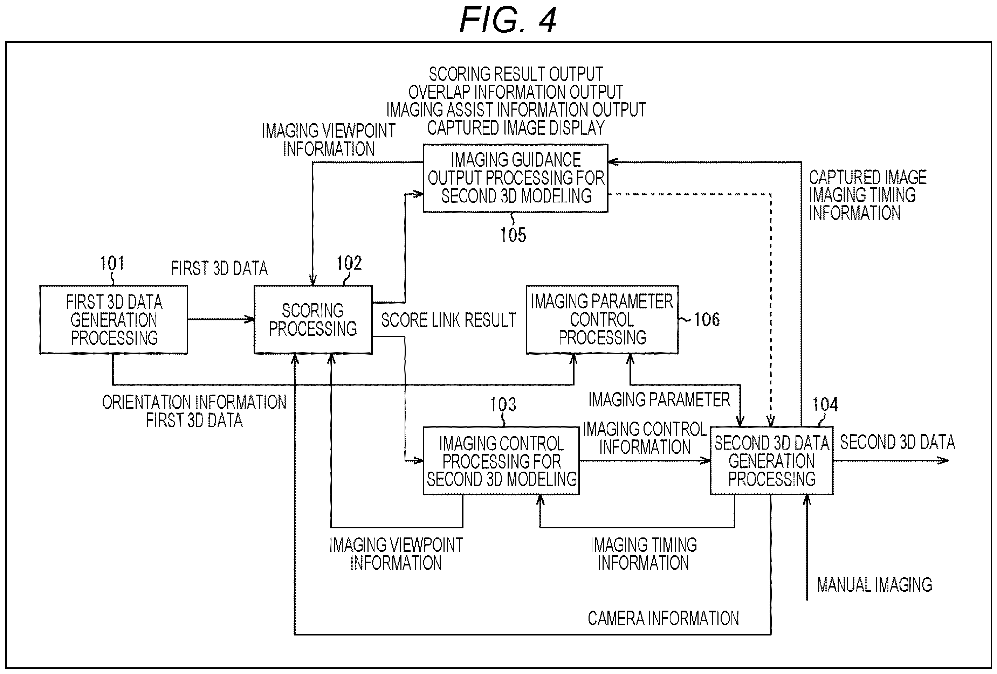

For example, it is assumed that second imaging for imaging a 3D object having a three-dimensional shape and second 3D modeling processing of generating second 3D data (second three-dimensional shape information) representing the three-dimensional shape of the 3D object using a second captured image obtained by the second imaging are performed (second 3D data generation processing 104 in Fig. 4). At that time, the second imaging for the second 3D modeling processing is controlled so that the second imaging is performed in a more appropriate position and orientation (imaging control processing for second 3D modeling 103 in Fig. 4). In order to achieve such control, first 3D data generation processing 101 and scoring processing 102 in Fig. 4 are performed.

The first 3D data generation processing 101 is processing of generating first 3D data (first three-dimensional shape information) representing the three-dimensional shape of the 3D object. That is, in the first 3D data generation processing 101, first imaging of imaging the 3D object and first 3D modeling processing of generating the first 3D data using the first captured image obtained by the first imaging are performed.

The scoring processing 102 is processing of evaluating (scoring) the accuracy of the second 3D data that can be generated using the second captured image generated by the second imaging performed so far. This scoring is performed on the basis of the first 3D data generated by the first 3D modeling processing. In the imaging control processing for second 3D modeling 103, the second imaging is controlled on the basis of the scoring result.

That is, on the basis of the first 3D data generated on the basis of the first captured image obtained by the first imaging, the accuracy of the second 3D data that can be generated on the basis of the second captured image obtained by the second imaging up to this point is evaluated (scoring is performed). By doing so, it is possible to generate the scoring result more easily. Furthermore, the second imaging is controlled on the basis of the scoring result. By doing so, it is possible to control the second imaging so that the second imaging is performed in a more appropriate position and orientation. That is, it is possible to perform the second 3D modeling processing using the second captured image captured in a more appropriate position and orientation. It is therefore possible to generate more accurate 3D data while suppressing an increase in the load (workload or processing volume) of the 3D modeling. That is, it is possible to perform the 3D modeling more easily.

Note that the captured image refers herein to any image captured by an image sensor or the like unless otherwise specified. For example, with the use of an imaging device or the like, the following images are typically obtained. For example, a still image is captured by the image sensor or the like at the timing when a shutter button or the like is operated, and is stored in a storage medium or the like as an imaging result. Furthermore, the capturing of a moving image by the image sensor or the like starts at the timing when the shutter button or the like is operated, and the moving image is stored in the storage medium or the like as an imaging result. Furthermore, an image (also referred to as an acquired image in some cases) is captured by the image sensor or the like before the shutter button or the like is operated, is not stored in the storage medium as an imaging result, and is used for display on a monitor or the like. Herein, the captured image includes these images. That is, the captured image may be a still image or a moving image. Furthermore, the captured image may or may not be stored in the storage medium or the like as an imaging result. Furthermore, the captured image may or may not be displayed on the monitor or the like. Furthermore, the captured image may be captured before the shutter button or the like is operated, may be captured at the timing when the shutter button or the like is operated, or may be captured after the shutter button or the like is operated. Furthermore, the captured image may be data itself (so-called RAW data) captured by the image sensor or the like. Furthermore, the captured image may be an image subjected to color separation processing or color conversion processing. Furthermore, the captured image may be an image subjected to signal processing such as defect correction, noise reduction, automatic white balance (AWB), or gamma correction. Moreover, other image processing may be performed.

<First imaging>

Herein, an imaging unit (image sensor) that performs the first imaging is also referred to as a first imaging unit. Furthermore, an imaging unit (image sensor) that performs the second imaging is also referred to as a second imaging unit.

As described above, the first imaging is performed in the first 3D data generation processing 101. That is, the first captured image is generated by the first imaging unit. At that time, the distance (depth) from the first imaging unit to the subject (3D object) appearing in the first captured image may be detected by a depth sensor. The depth detection method using the depth sensor may be any method. Furthermore, the depth sensor may be a sensor integrated with the first imaging unit, or may be a sensor that is different from the first imaging unit and is installed at a different position from the first imaging unit. Note that the "Integration of first imaging unit and depth sensor" includes not only detecting the depth using the pixels of the first imaging unit but also arranging the depth sensor and the first imaging unit on the same imaging surface (For example, arranging depth pixels for detecting depth in a pixel region of the first imaging unit, stacking pixels of the first imaging unit and depth pixels of the depth sensor, or the like.). Note that, in the following description, unless otherwise specified, it is assumed that this depth is appropriately calibrated for the first captured image. Furthermore, when the first imaging is performed, inertial information regarding (angular velocity and acceleration of) the first imaging unit may be detected by an inertial information sensor. The method for detecting the inertial information using the inertial information sensor may be any method. Furthermore, the inertial information sensor may be a sensor integrated with the first imaging unit, or may be a sensor that is different from the first imaging unit and is installed at a different position from the first imaging unit.

The generated first captured image is used in the first 3D data generation processing. Furthermore, in a case where the depth and the inertial information are generated, they are also used in the first 3D data generation processing.

Note that the number of first imaging units (image sensors), depth sensors, and inertial information sensors may each be any number, whether singular or plural. That is, the number of first imaging units, depth sensors, and inertial information sensors may all be the same, or two of them may be the same or different from each other.

<First 3D modeling processing>

As described above, the first 3D modeling processing is performed in the first 3D data generation processing 101. In the first 3D modeling processing, the first 3D data (first three-dimensional shape information) representing the three-dimensional shape of the 3D object is generated on the basis of the first captured image generated by the first imaging of imaging the 3D object.

This first 3D data may have less information volume and be of less accuracy than the second 3D data (second three-dimensional shape information) generated by the second 3D data generation processing 104.

By doing so, it is possible to suppress an increase in the load of the scoring processing 102 and the imaging control processing for second 3D modeling 103. That is, by further simplifying (reducing the information volume and accuracy of) the first 3D data, it is possible to suppress an increase in the load of scoring and imaging control performed using the first 3D data. Furthermore, in general, it is also possible to suppress an increase in the load of the first 3D data generation (first 3D modeling processing). That is, it is possible to control the second imaging with a lower load.

Furthermore, the method of the first 3D modeling processing may be any method. For example, in the first 3D modeling processing, orientation information corresponding to the angle of view of the first captured image may be derived, and the first 3D data may be generated on the basis of the orientation information, the first captured image, and the depth of the subject (3D object) in the first captured image. For example, the first 3D data may be generated by updating TSDF and performing MC on the basis of these pieces of information.

Note that this orientation information is information indicating the position and orientation of the first imaging unit in the three-dimensional space. The method for deriving the orientation information may be any method. For example, the orientation information may be derived on the basis of the inertial information regarding (acceleration and angular velocity of) the first imaging unit. For example, SLAM may be applied.

That is, the real-time 3D modeling described above may be applied as the first 3D modeling processing. By doing so, it is possible to perform the first 3D modeling processing instantaneously (in real time), and obtain the first 3D data instantaneously (in real time). Therefore, the imaging control processing for second 3D modeling can be performed instantaneously (in real time). That is, it is possible to perform the 3D modeling more easily. Note that the orientation information regarding the first imaging unit and the first 3D data may be generated using a neural network that takes the first captured image, the inertial information regarding the first imaging unit, and the depth as inputs.

Furthermore, the first 3D data may be any data as long as the first 3D data represents the three-dimensional shape of the 3D object; for example, the first 3D data may be a point cloud, or may include a mesh representing the three-dimensional shape of the 3D object through vertex connections and a texture applied to the surface of the mesh. This first 3D data is supplied to the scoring processing 102.

<Scoring processing>

In the scoring processing 102, as described above, the accuracy of the second 3D data that can be generated using the second captured image generated by the second imaging performed so far is evaluated. This scoring is performed on the basis of the first 3D data generated by the first 3D modeling processing and the position and orientation of the second imaging performed so far. That is, the first 3D data is regarded as the 3D object to be modeled in the second 3D modeling processing, and the score is calculated for each local portion of the first 3D data. For example, in a case where the first 3D data includes a mesh representing the three-dimensional shape of the 3D object through vertex connections and a texture applied to the surface of the mesh, a scoring result is generated for each polygon of the mesh. That is, a portion of the first 3D data from which more accurate second 3D data is obtained is evaluated higher (set to a higher score).

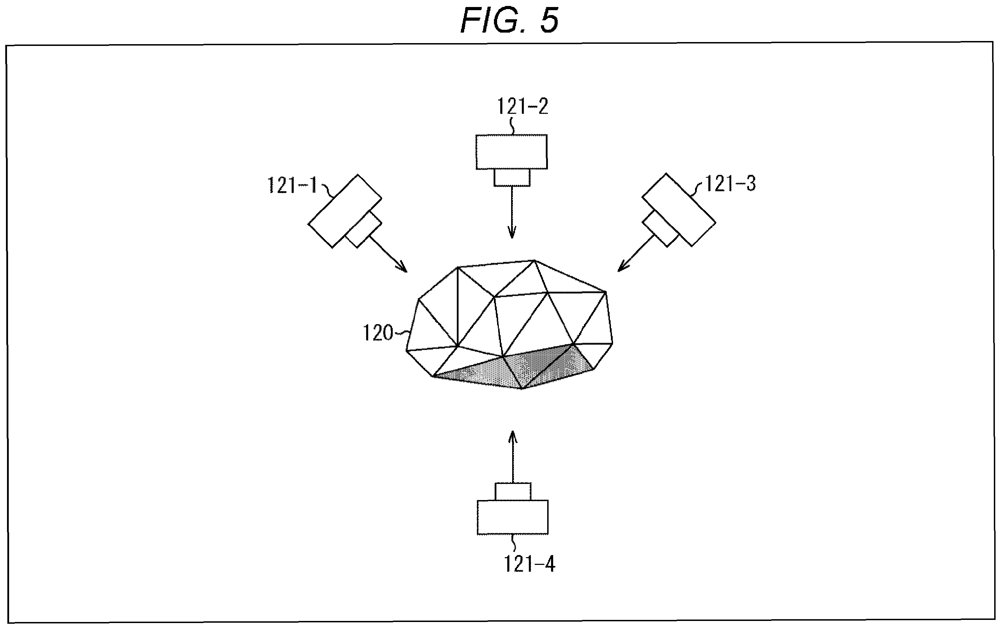

For example, it is assumed that the first 3D data 120 illustrated in Fig. 5 is generated by the first 3D data generation processing 101 in Fig. 4. Then, it is assumed that the second imaging has been performed on the 3D object corresponding to the first 3D data 120 in the positions and orientations of the camera 121-1 to the camera 121-3. In that case, in the scoring processing 102, the upper side of the first 3D data 120 in the drawing is evaluated with a relatively high score, and the lower side (gray portion) of the first 3D data 120 in the drawing is evaluated with a relatively low score. An example of the scoring method will be described later.

Note that, in Fig. 5, for convenience of description, only two score types: the high score and the low score, are illustrated as scoring results, but the number of score types (the number of clusters) may be any number. For example, the score may be classified into three levels (for example, low score, medium score, high score), may be classified into 10 levels (for example, 0 to 9 points), may be classified into 100 levels (for example, 0 to 99 points), or may be classified into other levels.

The scoring result generated by the scoring processing 102 is supplied to the imaging control processing for second 3D modeling 103.

<Imaging control processing for second 3D modeling>

In the imaging control processing for second 3D modeling 103, the second imaging is controlled on the basis of the position and orientation of the second imaging unit and the scoring result obtained by the scoring processing 102. For example, the control is performed so that the second imaging is performed in a position and orientation that leads to a better scoring result.

For example, it is assumed that the scoring result as illustrated in Fig. 5 is obtained by the scoring processing 102. This scoring result clearly shows that imaging of the lower side (for example, the gray portion) of the 3D object in the drawing corresponding to the first 3D data 120 is insufficient.

Therefore, in the imaging control processing for second 3D modeling 103, in order to obtain a captured image of a gray portion where imaging is insufficient, the second imaging is controlled so as to capture an image from the lower side of the 3D object in the drawing. For example, the position and orientation of the camera 121-4 are determined to be more appropriate as the position and orientation in which the second imaging is performed, and the second imaging is controlled so that the imaging is performed in the position and orientation of the camera 121-4.

By doing so, it is possible to generate the second captured image captured in the more appropriate position and orientation. In other words, the second 3D modeling processing can be performed using the second captured image captured in a more appropriate position and orientation. It is therefore possible to generate more accurate 3D data while suppressing an increase in the load (workload or processing volume) of the 3D modeling. That is, it is possible to perform the 3D modeling more easily.

The method for obtaining the position and orientation in which the second imaging is to be performed may be any method. For example, in the imaging control processing for second 3D modeling 103, (the range of) the position and orientation that allow an increase in the score of the portion (gray portion) where the second imaging is insufficient may be determined on the basis of the scoring result. Furthermore, the current orientation information regarding (the position and orientation of) the second imaging unit may be provided to the scoring processing 102 as imaging viewpoint information, a scoring result in a case where the second captured image obtained in the current position and orientation is added temporarily may be acquired, and in a case where the score is higher than a score before the addition of the second captured image by a predetermined threshold or more, the current position and orientation may be determined to be the position and orientation in which the second imaging is to be performed.

Note that, if the position and orientation relationship between the first imaging unit and the second imaging unit is known, the orientation information regarding the first imaging unit may be provided to the scoring processing 102 as the imaging viewpoint information instead of the orientation information regarding the second imaging unit. In that case, in the scoring processing 102, the orientation information regarding the second imaging unit may be derived using the orientation information regarding the first imaging unit, and the scoring result may be generated using the orientation information regarding the second imaging unit. Furthermore, the scoring result may be generated using a neural network that takes the orientation information regarding the first imaging unit as an input parameter.

Furthermore, in the imaging control processing for second 3D modeling 103, whether or not the position and orientation are the position and orientation in which the second imaging is to be performed may be determined on the basis of an overlap rate with the imaging range of the second imaging performed so far. The overlap rate indicates a degree (proportion) of a region (overlap region) where imaging ranges overlap. That is, whether or not the position and orientation of the second imaging are a more appropriate position and orientation may be determined on the basis of how much the imaging range of the second imaging to be performed overlaps the region captured in the second captured images obtained so far.

For example, in a case where a method, like photogrammetry, in which 3D modeling is performed on the basis of the corresponding point between a plurality of second captured images is applied as the second 3D modeling processing, the imaging ranges of the plurality of second captured images need to at least partially overlap (overlap region exists) in order to obtain the corresponding point. Therefore, with respect to the second captured images obtained so far, the position and orientation in which the second captured image with an overlap rate that makes the second 3D modeling processing easier (allows more accurate 3D modeling processing to be performed) can be obtained may be determined to be a more appropriate position and orientation (position and orientation in which the second imaging is to be performed).

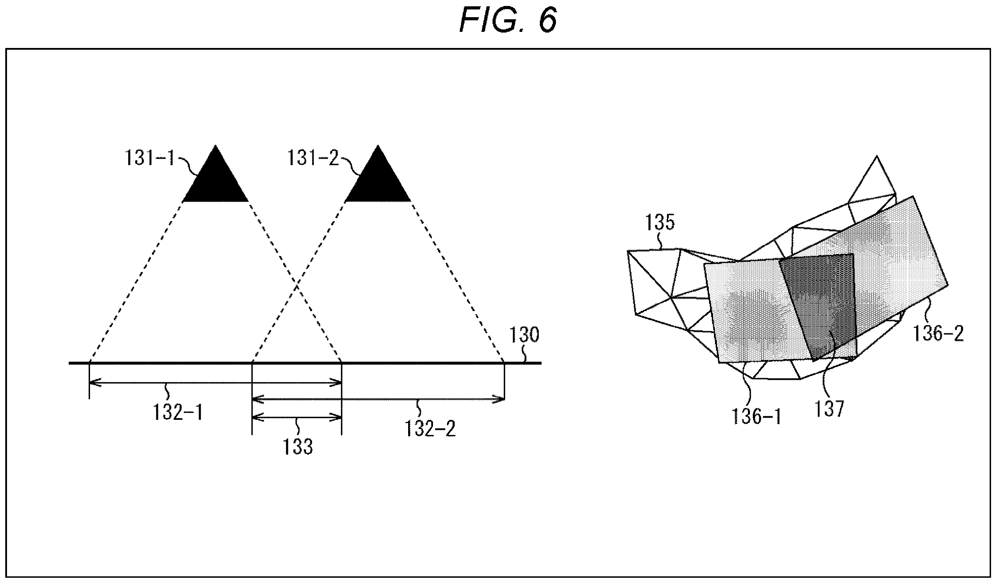

Note that what the overlap rate that makes the second 3D modeling processing easier (allows more accurate 3D modeling processing) is also depends on the three-dimensional shape of the 3D object, or the like. For example, in a case of imaging using a so-called drone, the subject can be regarded as a plane 130 as illustrated on the left side of Fig. 6. For example, an imaging range in a case where the plane 130 is imaged from a camera 131-1 is indicated by a double-headed arrow 132-1. Similarly, an imaging range in a case where the plane 130 is imaged from a camera 131-2 is indicated by a double-headed arrow 132-2. Therefore, an overlap region between these captured images is a range indicated by a double-headed arrow 133. In such a case, the captured images overlap in a simple manner, so that more accurate 3D modeling processing can be performed as long as an overlap rate greater than or equal to a predetermined rate can be obtained.

However, in a case of the second imaging, the subject is a 3D object (first 3D data 135) and the subject is fully imaged, so that the images overlap in a stereoscopic manner as in a second captured image 136-1 and a second captured image 136-2 of the right example in Fig. 6. Therefore, what level of the overlap rate is required for sufficiently accurate 3D modeling processing depends on the three-dimensional shape of the 3D object, or the like. Therefore, in a case where the overlap rate with respect to the second captured images obtained so far is taken into consideration when the position and orientation in which the second imaging is to be performed are obtained, it is desirable that the three-dimensional shape (first 3D data) of the 3D object be also taken into consideration (the position and orientation in which the second imaging is to be performed can be obtained more accurately).

Furthermore, when obtaining the position and orientation in which the second imaging is to be performed, the distance from the imaging position to the subject (3D object) may be controlled. That is, not only which portion of the 3D object is imaged from which angle, but also the distance from which the portion is imaged may be controlled.

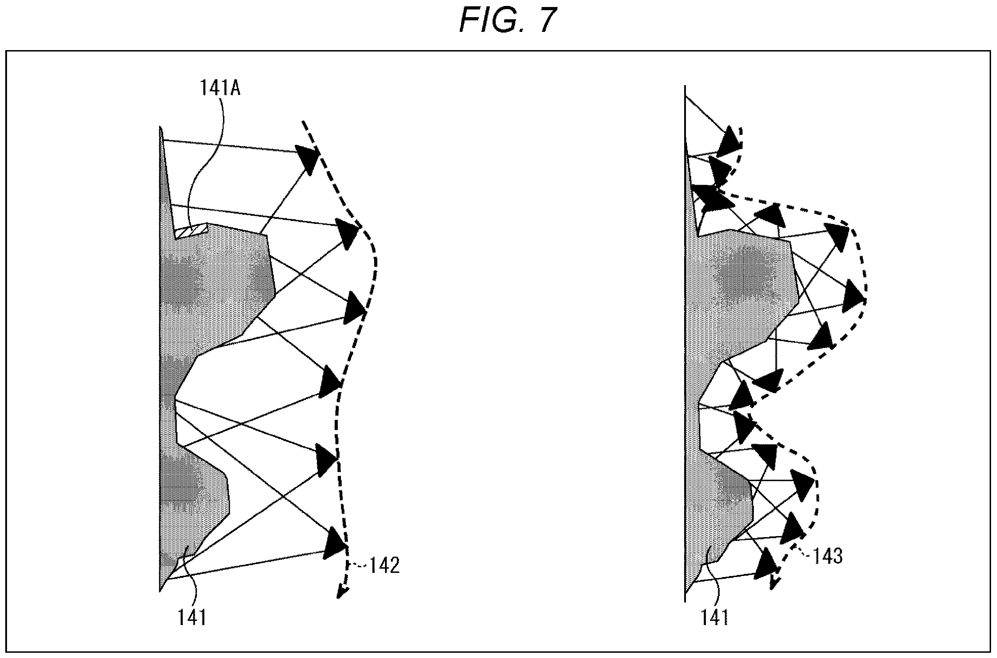

As in the example illustrated on the left side of Fig. 7, when imaging is performed in a position far away from a 3D object 141 (position indicated by black triangles in the drawing) as indicated by a dotted line 142, the 3D object 141 can be fully imaged with a low imaging frequency. However, there may be a case where a portion (for example, a hatched portion 141A and the like) having a complicated three-dimensional shape of the 3D object 141 cannot be imaged. Therefore, there is a possibility that the accuracy of the second 3D modeling processing (accuracy of the second 3D data) decreases.

On the other hand, as in the example illustrated on the right side of Fig. 7, when imaging is performed in a position close to the 3D object 141 (position indicated by black triangles in the drawing) as indicated by a dotted line 143, the imaging frequency required to image the entire 3D object 141 increases as compared with the example on the left side of Fig. 7. However, the portion of the 3D object 141 having a complicated three-dimensional shape (for example, the hatched portion 141A and the like) can be imaged as compared with the left example of Fig. 7. That is, it is possible to image the entire 3D object 141 more reliably than the left example of Fig. 7. It is therefore possible to suppress a decrease in the accuracy of the second 3D modeling processing (accuracy of the second 3D data).

That is, the appropriate distance from the 3D object as the position of the second imaging depends on the three-dimensional shape of the 3D object. Therefore, in the imaging control processing for second 3D modeling 103, the distance from the position of the second imaging to the 3D object (subject) may be controlled in accordance with (the complexity of) the three-dimensional shape of the 3D object. By doing so, as described above, it is possible to suppress an unnecessary increase in the frequency of the second imaging while suppressing a decrease in the accuracy of the second 3D modeling processing (accuracy of the second 3D data). That is, it is possible to perform control so that the second imaging is performed in a more appropriate position and orientation.

Note that the method for deriving the complexity of the three-dimensional shape of the 3D object may be any method. For example, this complexity may be derived on the basis of the first 3D data. However, in that case, for example, the first 3D data may be processed as a two-dimensional image, and the complexity of the three-dimensional shape of the 3D object may be derived from the pattern or the like. By doing so, it is possible to suppress an increase in processing load related to the derivation of the complexity of the three-dimensional shape of the 3D object.

Furthermore, a detection frame may be provided, and the complexity of the three-dimensional shape of the 3D object within the detection frame may be derived. The detection frame may have any shape or any size. For example, how many polygons of the first 3D data directly face the imaging surface of the second imaging within the detection frame is obtained, the degree of variation in the direction of the normal line to each polygon within the detection frame is quantified, and the complexity of the three-dimensional shape of the 3D object within the detection frame may be derived on the basis of the degree of variation. In general, the larger the variation, the more complicated the shape, and in a case of facing the same direction, the shape can be regarded as being close to a planar shape. Furthermore, the average of the direction of the normal line to each polygon within the detection frame may be used as a representative value of the degree of alignment with the imaging surface, and the complexity of the three-dimensional shape of the 3D object may be derived on the basis of the representative value.

Furthermore, in the Marching Cubes method, in a case where there are many vertex arrangements that easily form a plane within the detection frame, it may be determined that the complexity of the three-dimensional shape of the 3D object is low.

That is, the complexity of the three-dimensional shape of the 3D object may be (a value based on) any parameter as long as it is a quantitative value serving as a criterion for estimating the necessary direction, frequency, and distance of imaging from the outline of the subject in a certain region. Furthermore, the method for controlling the distance of the second imaging from the 3D object based on the complexity of the three-dimensional shape of the 3D object may be any method. For example, as the three-dimensional shape of the 3D object is more complicated, the control may be performed so that the second imaging is performed in a position close to the 3D object. Furthermore, as the three-dimensional shape of the 3D object is simpler, the control may be performed so that the second imaging is performed in a position far from the 3D object.

In the imaging control processing for second 3D modeling 103, as described above, the position and orientation (more appropriate position and orientation) in which the second imaging is to be performed are obtained, and control information (imaging control information) on the basis of which the control is performed so that the second imaging is performed in the position and orientation is generated. Then, the imaging control information is supplied to the second 3D data generation processing 104. For example, when the user or the like moves the second imaging unit and the position and orientation of the second imaging unit match the obtained "position and orientation in which the second imaging is to be performed", the imaging control information instructing the second imaging may be generated and supplied to the second 3D data generation processing 104 (that is, the second imaging is performed in the "position and orientation in which the second imaging is to be performed").

<Second imaging>

In the second 3D data generation processing 104, the second imaging unit performs the second imaging in accordance with the control of the imaging control processing for second 3D modeling 103 to generate the second captured image. For example, the second imaging unit may perform the second imaging on the basis of the imaging control information generated in the imaging control processing for second 3D modeling 103. For example, the second imaging unit may perform the second imaging in a case where imaging is instructed by the imaging control information (at the timing when imaging is instructed). Furthermore, the control unit that controls the position and orientation of the second imaging unit may move the second imaging unit to the position designated by the imaging control information and set the second imaging unit to the orientation designated by the imaging control information, and the second imaging unit may perform the second imaging in the position and orientation.

The number of second imaging units may be any number, whether singular or plural. Furthermore, the first imaging unit and the second imaging unit may be a common imaging unit (the same imaging unit), or may be different imaging units installed in different positions.

The specification (for example, the number of pixels) of the second imaging unit may be the same as or different from the specification of the first imaging unit. For example, the second captured image may have a higher image quality than the first captured image. Furthermore, the second captured image may have a higher resolution than the first captured image. Furthermore, the second captured image may have a higher dynamic range than the first captured image.

<Second 3D modeling processing>

Furthermore, the method of the second 3D modeling processing performed in the second 3D data generation processing 104 may be any method. For example, the method of the second 3D modeling processing may be the same as or different from that of the first 3D modeling processing.

For example, the above-described photogrammetry may be applied as the second 3D modeling processing. That is, in the second 3D modeling processing, SfM and MVS may be applied, and a point cloud may be generated from a plurality of second captured images. Moreover, meshing and texturing may be performed on the point cloud as post-processing to generate the second 3D data. That is, the second 3D data may be any data as long as the second 3D data represents the three-dimensional shape of the 3D object; for example, the second 3D data may be a point cloud, or may include a mesh representing the three-dimensional shape of the 3D object through vertex connections and a texture applied to the surface of the mesh. Furthermore, the above-described Neural Rendering may be applied as the second 3D modeling processing.

For example, in addition to the second captured image, the second 3D data may be generated using the orientation information (orientation information corresponding to the angle of view of the second captured images obtained so far) regarding the second imaging unit that performs the second imaging. This orientation information is information indicating the position and orientation of the second imaging unit in the three-dimensional space.

Furthermore, if the position and orientation relationship between the first imaging unit that performs the first imaging and the second imaging unit is known, the second 3D data may be generated using the orientation information regarding (position and orientation in the three-dimensional space of) the first imaging unit. That is, the second 3D data may be generated using the orientation information derived in the first 3D modeling processing. For example, the orientation information regarding the second imaging unit may be derived using the orientation information regarding the first imaging unit, and the second 3D data may be generated using the orientation information regarding the second imaging unit. Furthermore, the second 3D data may be generated using a neural network that takes the orientation information regarding the first imaging unit and the second captured image as inputs.

Moreover, the second 3D data may be encoded. This encoding method may be any method.

<Manual imaging>

Furthermore, as illustrated in Fig. 4, in the second 3D data generation processing 104, the second imaging may be performed without relying on the imaging control information (for example, manually). Herein, such an imaging method is also referred to as manual imaging. In a case where the manual imaging is performed, imaging timing information indicating the imaging timing is generated in (the second imaging of) the second 3D data generation processing 104 and supplied to the imaging control processing for second 3D modeling 103. Then, in the imaging control processing for second 3D modeling 103, the orientation information regarding the second imaging unit at the imaging timing is obtained on the basis of the imaging timing information, and the orientation information regarding the second imaging unit at the imaging timing is supplied to the scoring processing 102 as the imaging viewpoint information. Then, in the scoring processing 102, a score is calculated on the basis of the imaging viewpoint information. As described above, (the orientation information regarding the second imaging unit corresponding to the angle of view of) the second captured image obtained by the manual imaging may be reflected in (the scoring result derived by) the scoring processing 102.

<Camera information>

Furthermore, as illustrated in Fig. 4, in (the second imaging of) the second 3D data generation processing 104, camera information regarding the second imaging unit may be generated and supplied to the scoring processing 102. Then, in the scoring processing 102, the scoring result may be generated by performing scoring on the basis of the camera information. The camera information may include any information. For example, the camera information may include the internal parameter of the imaging unit. The camera information may further include external parameters of the imaging unit. The camera information may further include a captured image. The camera information may further include angle-of-view information (focal length information) regarding the second captured image. The camera information may further include distortion correction information. The camera information may further include shading correction information. The camera information may further include breathing correction information. The camera information may further include focus position information. The camera information may further include image plane phase difference information. That is, these pieces of information may be used in scoring (evaluation of the accuracy of the second three-dimensional shape information that can be generated).

<Real-time processing>

Note that the first 3D data generation processing 101 (first imaging and first 3D modeling processing), the scoring processing 102, and the imaging control processing for second 3D modeling 103 in Fig. 4 may be performed in parallel.

For example, in the first 3D data generation processing 101, first 3D data of a portion of the 3D object subjected to the first imaging, the 3D object being the subject, may be sequentially generated. For example, it is possible to generate, by applying real-time 3D modeling as the first 3D modeling processing, the 3D data instantaneously (in real time) on the basis of the captured image, the depth information, and the like. That is, in this case, while performing the first imaging (while obtaining the first captured image), the first 3D modeling can be performed to generate the first 3D data. For example, as described with reference to Fig. 2, each portion of the 3D object as the subject is imaged while the camera is moved around the 3D object, but before the captured image of the entire 3D object is obtained, the 3D modeling can be performed on the basis of the obtained captured image and depth. That is, the 3D data of the imaged portion can be sequentially generated.

Furthermore, in the scoring processing 102, scoring (evaluation of the accuracy of the second three-dimensional shape information that can be generated using the second captured image generated by the second imaging performed so far) for the first 3D data corresponding to the portion of the 3D object may be performed. That is, whenever the first 3D data corresponding to the portion of the 3D object is generated by the first 3D modeling processing (before the first 3D data of the entire 3D object is generated), scoring (evaluation of the accuracy of the second 3D data that can be generated) may be sequentially performed on the portion of the 3D object from which the first 3D data has been generated. By doing so, it is possible to start the scoring processing 102 before the end of the first 3D data generation processing 101 (before the first 3D data of the entire 3D object is generated). That is, the first 3D data generation processing 101 and the scoring processing 102 can be performed in parallel.

Furthermore, in the imaging control processing for second 3D modeling 103, each time the scoring result is obtained by the scoring processing 102 (before the scoring result of the entire 3D object is obtained), the second imaging may be controlled on the basis of the obtained scoring result (scoring result for the first 3D data corresponding to the portion of the 3D object). By doing so, it is possible to start the imaging control processing for second 3D modeling 103 before the end of the scoring processing 102 (before the scoring result of the entire 3D object is obtained). That is, the scoring processing 102 and the imaging control processing for second 3D modeling 103 can be performed in parallel.

It is possible to perform, by combining the methods described above, the first 3D data generation processing 101, the scoring processing 102, and the imaging control processing for second 3D modeling 103 in parallel.

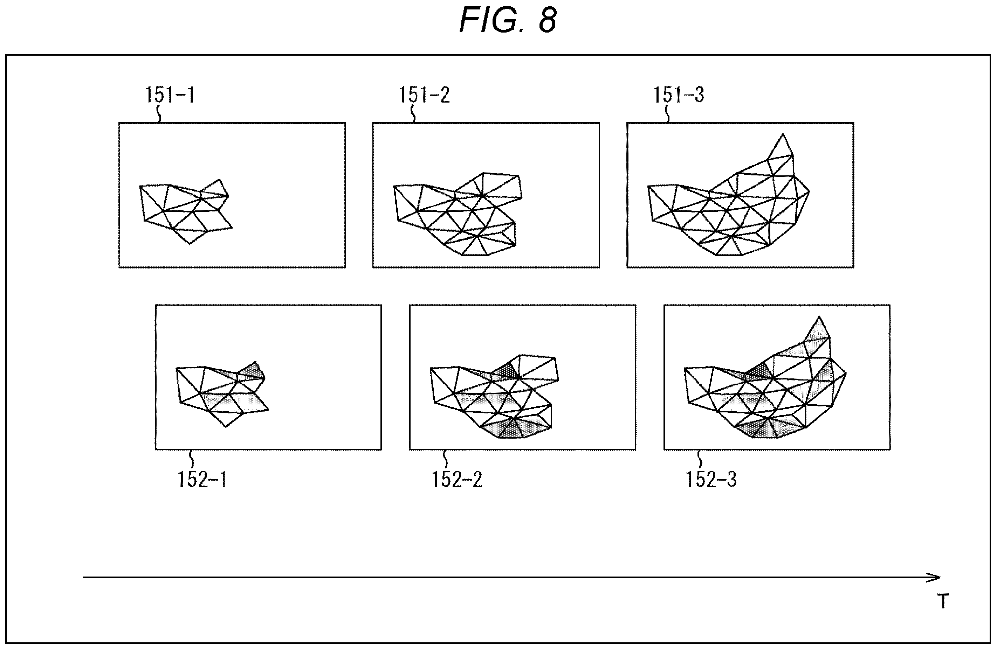

For example, in Fig. 8, it is assumed that the time axis extends from left to right in the drawing as indicated by the arrow. It is possible to generate, by performing the first imaging and the first 3D modeling processing in parallel in the first 3D data generation processing 101, the first 3D data of the portion subjected to the first imaging sequentially, such as first 3D data 151-1, first 3D data 151-2, and first 3D data 151-3. Furthermore, it is possible to derive, by performing the first 3D data generation processing (first 3D modeling processing) and the scoring processing 102 in parallel, the scoring result for the portion from which the first 3D data has been generated sequentially, such as a scoring result 152-1, a scoring result 152-2, and a scoring result 152-3. Moreover, it is possible to control, by performing the scoring processing 102 and the imaging control processing for second 3D modeling 103 in parallel, the second imaging on the basis of the scoring results obtained so far (the scoring result 152-1, the scoring result 152-2, the scoring result 152-3) at each timing.

That is, it is possible to control, by performing the first 3D data generation processing 101, the scoring processing 102, and the imaging control processing for second 3D modeling 103 in parallel, the second imaging while performing the first imaging. That is, the first imaging and the second imaging can be performed in parallel (instantaneously).

<Scoring>

This scoring method will be described. Examples of the condition under which photogrammetry works successfully include ensuring that SfM works successfully, ensuring that MVS works successfully, and ensuring that texturing (texture mapping) works successfully. Examples of the condition under which SfM works successfully include ensuring that a baseline can be secured, ensuring that feature points can be matched, and the like. Furthermore, examples of the condition under which MVS works successfully include ensuring that the baseline can be secured. Examples of the condition under which texturing works successfully include ensuring that a high-definition texture can be obtained from a captured image, and ensuring that a surface to which the texture is applied is imaged as directly as possible from the front. The baseline indicates a distance between imaging viewpoint positions (camera positions during imaging).

<Scoring of polygon>

Examples of the condition under which a certain polygon surface can be restored by SfM or MVS include a minimum visible condition (whether or not a polygon is visible from the imaging position), a favorable condition for accuracy (a condition under which accuracy improves), and a favorable condition for matching (corresponding point detection) (a condition under which matching becomes easier).

Examples of the minimum visible condition include ensuring that the centroid of a target polygon falls within the field of view (within the angle of view of imaging) as viewed from the viewpoint (imaging position), ensuring that the dot product of the normal line to the target polygon and the line-of-sight (vector from the line of sight toward the centroid of the target polygon) is at least positive, there is no other polygons blocking the line-of-sight, and there are two or more (visible) lines of sight where the target polygon is visible.

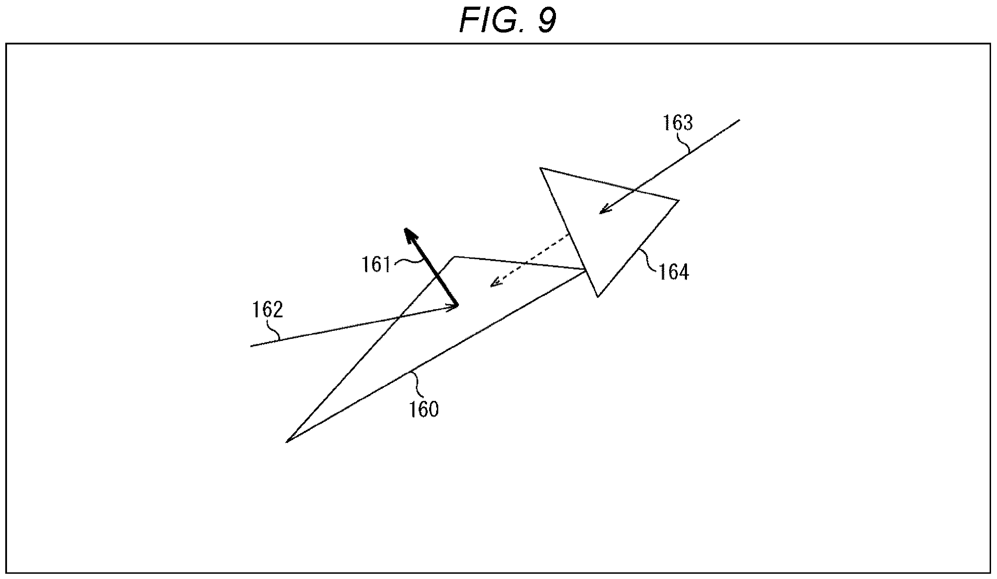

For example, in a case of Fig. 9, there is a line-of-sight 162 from a certain viewpoint toward the centroid of a target polygon 160, so that the target polygon 160 is within the field of view. Furthermore, the dot product of the normal line 161 to the target polygon 160 and the line-of-sight 162 is positive. Furthermore, the line-of-sight 162 reaches the target polygon 160 without being blocked by other polygons, and is the "line-of-sight where the target polygon 160 is visible". Therefore, the line-of-sight 162 satisfies the minimum visible condition.

On the other hand, a line-of-sight 163 is not the "line-of-sight where the target polygon 160 is visible" because the line-of-sight 163 is blocked by a polygon 164.

Furthermore, examples of the favorable condition for accuracy include ensuring that the baseline is sufficiently long, ensuring that a ratio of the length of the baseline to the distance to the subject (the length of the baseline/the distance to the subject) is sufficiently large, and ensuring that there are a sufficient number of visible viewpoints and the variance of angles formed between them is large.

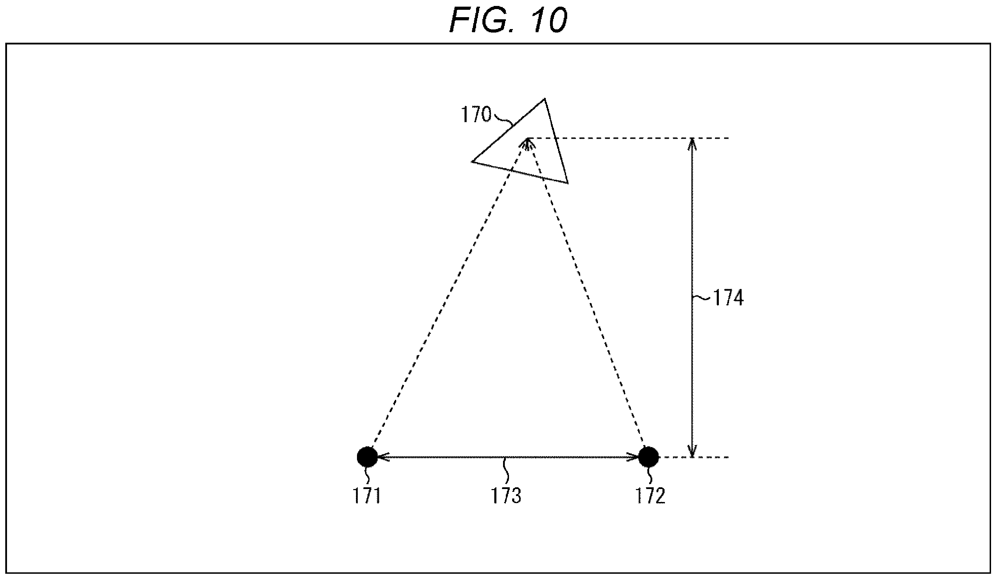

For example, in a case of Fig. 10, examples of the condition under which the accuracy improves include ensuring that a baseline 173 between a viewpoint 171 and a viewpoint 172 from which the target polygon 170 is visible is sufficiently long (that the viewpoint 171 and the viewpoint 172 are sufficiently separated), ensuring that a ratio of the length of the baseline 173 to a distance 174 to the subject is sufficiently large (that the value of "baseline length/distance to subject" is sufficiently large), and the like.

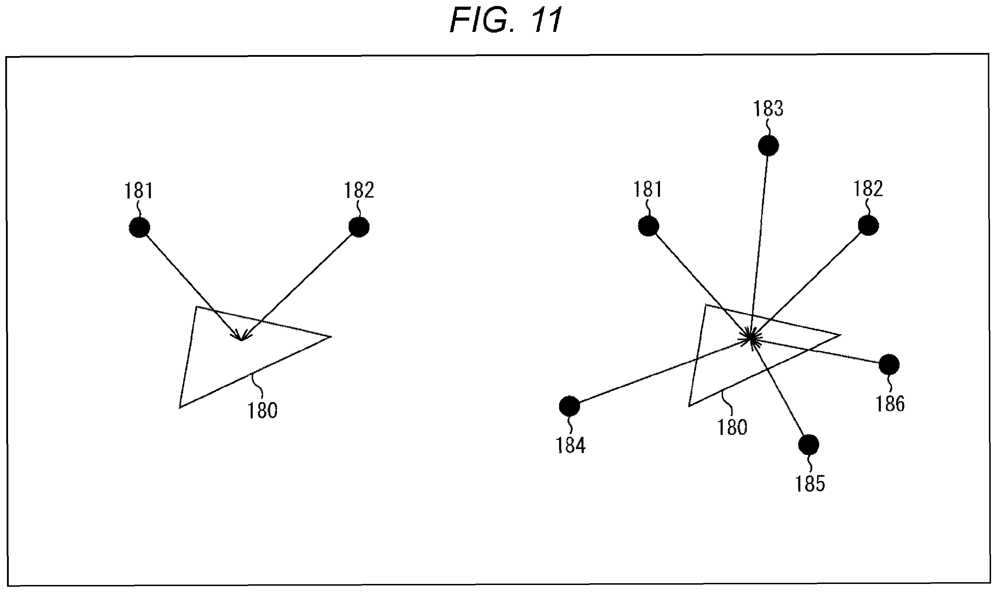

Furthermore, in a case of the left example in Fig. 11, a viewpoint from which a target polygon 180 is visible includes two points, a viewpoint 181 and a viewpoint 182. On the other hand, in a case of the right example in Fig. 11, the viewpoint from which the target polygon 180 is visible includes six points, viewpoints 181 to 186. That is, the right example has more visible viewpoints than the left example, so that the variance of the angles formed between the viewpoints is larger in the right example. A large number of visible points make triangulation more robust than using a plurality of different pieces of information, leading to improved accuracy. Therefore, the right example satisfies the condition under which the accuracy improves better than the left example.

Furthermore, examples of the favorable condition for matching include ensuring that the angle formed between the normal line to the target polygon and the line-of-sight extending from the viewpoint toward the centroid of the target polygon is sufficiently small, ensuring that the ratio of the distance to the subject from the pair of viewpoints is sufficiently small, and ensuring that there is a texture that can be matched.

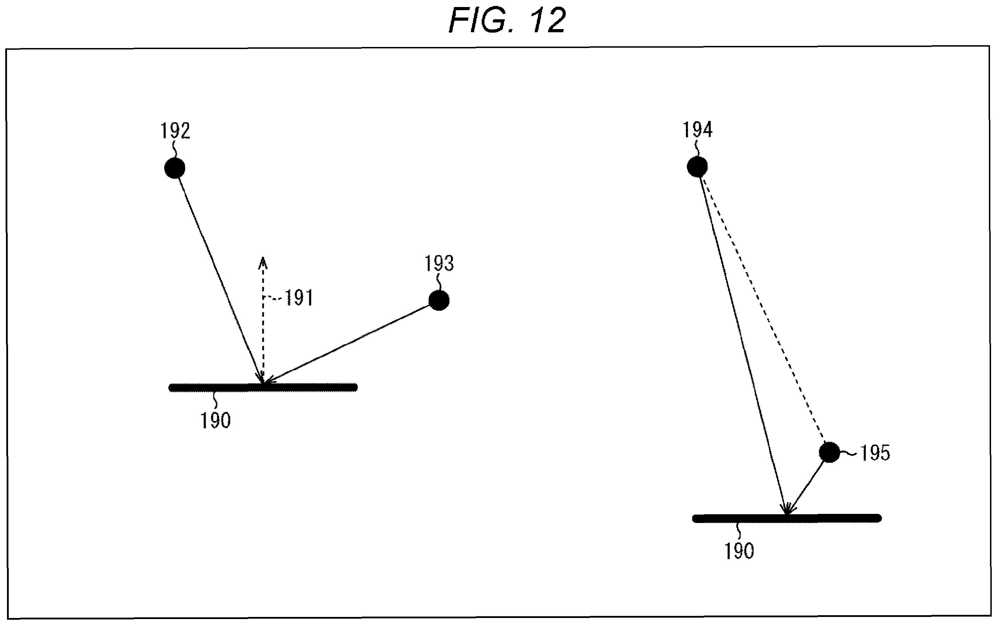

In a case of the left example in Fig. 12, the angle formed between a normal line 191 to a target polygon 190 and a viewpoint 192 is smaller than the angle formed between the normal line 191 and a viewpoint 193. Therefore, the viewpoint 192 allows for more accurate detection of the feature point of the surface of the target polygon 190 than the viewpoint 193. Furthermore, in a case of the right example in Fig. 12, the distance from a viewpoint 194 to the subject (target polygon 190) is significantly longer than the distance from a viewpoint 195 to the subject (target polygon 190). That is, the ratio of the distance to the subject from the viewpoint 194 and the viewpoint 195 is large. In such a case, even if the baseline is long, the appearance of the feature point of the surface of the target polygon 190 significantly varies between the viewpoints, so that there is a possibility that difficulty of matching increases. In other words, the smaller the ratio of the distance to the subject from viewpoints, such as the viewpoint 192 and the viewpoint 193 in the left example in Fig. 12, the easier the matching.

<Scoring of texture>

Examples of the condition for determining whether or not a certain polygon surface has a sufficient number of viewpoints for texturing include a minimum condition (whether or not the polygon surface is visible) and a favorable condition for texturing (condition under which clearer texturing is achieved).

Examples of the minimum condition include ensuring that there is a viewpoint satisfying the above-described minimum visible condition.

Furthermore, examples of the favorable condition for texturing include ensuring that the angle formed between the normal line to the target polygon and the line-of-sight extending from the viewpoint toward the centroid of the target polygon is small, and ensuring that a sufficient resolution can be obtained when the distance from the viewpoint to the subject is less than or equal to a certain limit.

Note that each condition described above is an example. Any condition may be applied to the scoring.

Furthermore, the content may be of any kind. For example, the above-described conditions may be omitted, or a condition other than the above-described conditions may be added.

<Scoring of second captured image>

Scoring of the second captured image obtained by the second imaging may be performed. For example, the scoring of the second captured image may be performed on the basis of the camera information. For example, whether or not a desired position is in focus may be evaluated for the second captured image. Furthermore, whether or not there is camera shake may be evaluated. Furthermore, whether or not the exposure is appropriate may be evaluated. Furthermore, whether or not the feature point is easily obtained may be evaluated.

<Example of scoring calculation>

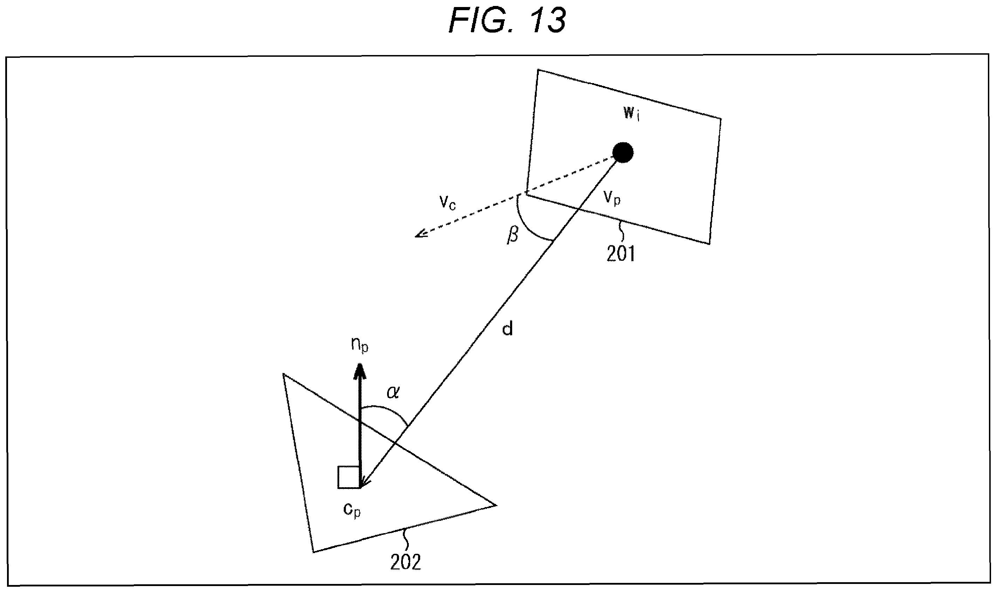

For example, as illustrated in Fig. 13, a distance between a target captured image 201 and a target polygon 202 is denoted as d. Furthermore, an ideal distance to the subject is denoted as $d_{opt}$. Furthermore, $c_d$ denotes a predetermined coefficient. A score $s_d$ in that case may be derived as in the following equation (1).

$$s_d = \frac{1}{1 + c_d \left( d - d_{opt} \right)^2}$$

$$\cdots (1)$$

Furthermore, the center of the target polygon 202 is denoted as $c_p$. The line-of-sight from the target captured image 201 to the center $c_p$ is denoted as $v_p$. Furthermore, the normal line to the target polygon 202 is denoted as $n_p$. Then, an angle formed between the line-of-sight $v_p$ and the normal line $n_p$ is denoted as $\alpha$. The angle $\alpha$ formed in that case can be derived as in the following equation (2). Then, a score $s_\alpha$ based on the angle $\alpha$ may be derived as in the following equation (3). Note that $c_\alpha$ denotes a predetermined coefficient.

$$\alpha = \cos^{-1} \frac{v_p \cdot n_p}{\left| v_p \right| \cdot \left| n_p \right|}$$

$$\cdots (2)$$

$$s_\alpha = \frac{2}{1 + \exp c_\alpha \alpha^2}$$

$$\cdots (3)$$

An optical axis of the camera (a normal vector of the target captured image starting from the center of the target captured image 201) is denoted as $v_c$. Furthermore, an angle formed between the optical axis $v_c$ and the line-of-sight $v_p$ is denoted as $\beta$. The angle $\beta$ formed in that case can be derived as in the following equation (4). Then, a score $s_\beta$ based on the angle $\beta$ may be derived as in the following equation (5). Note that $c_\beta$ denotes a predetermined coefficient.

$$\beta = \cos^{-1} \frac{v_c \cdot v_p}{\left| v_c \right| \cdot \left| v_p \right|}$$

$$\cdots (4)$$

$$s_\beta = \frac{2}{1 + \exp c_\beta \beta^2}$$

$$\cdots (5)$$

A total score $s_{total}$ may be derived as in the following equation (6) using the scores $s_d$, $s_\alpha$, and $s_\beta$ derived as described above.

$$S_{total} = S_d \cdot S_\alpha \cdot S_\beta$$

$$\cdots (6)$$

Then, a weighted sum of the total score of the top two viewpoints among all the viewpoints derived as described above may be used as the final score.

Note that this calculation method is an example. The calculation method applied to the scoring processing 102 may be any method and is not limited to this example.

<Example of configuration for performing processing>

Each processing in Fig. 4 described above may be performed by any device. For example, in an information processing device, the first 3D modeling processing of the first 3D data generation processing 101, the scoring processing 102, and the imaging control processing for second 3D modeling 103 described above may be performed.

That is, an information processing device may include: a first 3D modeling processing unit that generates, on the basis of the first captured image generated by the first imaging of imaging the 3D object, the first three-dimensional shape information representing the three-dimensional shape of the 3D object; a scoring processing unit that uses the first three-dimensional shape information to evaluate the accuracy of the second three-dimensional shape information that can be generated using the second captured image generated by the second imaging performed so far, and generates a scoring result; and an imaging control unit that controls the second imaging of imaging the 3D object on the basis of the scoring result. In this section, this information processing device is also referred to as a first information processing device.

Furthermore, an information processing method performed by the first information processing device may include: generating, on the basis of the first captured image generated by the first imaging of imaging the 3D object, the first three-dimensional shape information representing the three-dimensional shape of the 3D object; evaluating, using the first three-dimensional shape information, the accuracy of the second three-dimensional shape information that can be generated using the second captured image generated by the second imaging performed so far, and generates a scoring result; and controlling the second imaging of imaging the 3D object on the basis of the scoring result.

By doing so, it is possible to image the 3D object (perform the second imaging) in a more appropriate position and orientation and perform the second 3D modeling processing using the obtained second captured image. It is therefore possible to generate more accurate 3D data while suppressing an increase in the load (workload or processing volume) of the 3D modeling. That is, it is possible to perform the 3D modeling more easily.

Furthermore, the first 3D modeling processing unit may include: an orientation information generation unit that generates orientation information indicating the position and orientation of the first imaging unit on the basis of the first captured image and the acceleration and angular velocity of the first imaging unit; and a three-dimensional shape generation unit that generates the first three-dimensional shape information regarding the 3D object on the basis of the orientation information and the depth of the 3D object.

Furthermore, in the first information processing device, the first imaging of the first 3D data generation processing 101 described above may be further performed. For example, the first information processing device may further include the first imaging unit. Furthermore, the first information processing device including the first imaging unit may include a depth detection unit that detects a depth, may include an inertial measurement unit that detects the acceleration and angular velocity of the first imaging unit, or may include both.

Furthermore, in the first information processing device, the second imaging of the second 3D data generation processing 104 described above may be further performed. For example, the first information processing device may further include the second imaging unit.

Note that the second captured image generated by the second imaging may be encoded. For example, the first information processing device including the second imaging unit may include an encoding unit that encodes the second captured image generated by the second imaging unit. The encoded second captured image may be supplied to another information processing device through communication, or may be stored in a storage medium.

Furthermore, in the first information processing device, the second 3D modeling processing of the second 3D data generation processing 104 described above may be further performed. For example, the first information processing device including the second imaging unit may further include a second 3D modeling processing unit that generates the second three-dimensional shape information on the basis of the second captured image generated by the second imaging unit. For example, the second 3D modeling processing unit may include a corresponding point position deriving unit that derives a three-dimensional position of each corresponding point between a plurality of second captured images, and a three-dimensional point adding unit that adds a three-dimensional point on the basis of the three-dimensional position of the corresponding point. In the second 3D modeling processing, meshing and texturing may be further performed as post-processing. For example, the second three-dimensional shape information may include a mesh representing the three-dimensional shape of the 3D object through vertex connections and a texture applied to the surface of the mesh.

Note that the second 3D data generated by the second 3D modeling processing may be encoded. For example, the first information processing device including the second imaging unit and the second 3D modeling processing unit may further include an encoding unit that encodes the second three-dimensional shape information generated by the second 3D modeling processing unit. The encoded second three-dimensional shape information (second 3D data) may be supplied to another information processing device through communication, or may be stored in a storage medium.

Note that the second imaging of the second 3D data generation processing 104 described above may be performed in a second information processing device different from the first information processing device. For example, the first information processing device may include a communication unit that communicates with the second information processing device (imaging device) including the second imaging unit, the imaging control unit may generate imaging control information on the basis of which the second imaging is controlled, and the communication unit may supply the imaging control information to the second information processing device.

Furthermore, in that case, the first information processing device may acquire the second captured image generated by the second information processing device. For example, the first information processing device including the communication unit may acquire the second captured image supplied from the second information processing device. This second captured image may be encoded. For example, the first information processing device including the communication unit may include an encoding unit that encodes the second captured image acquired by the communication unit. The encoded second captured image may be supplied to another information processing device through communication, or may be stored in a storage medium.

Furthermore, the second captured image supplied from the second information processing device may be encoded. That is, the communication unit may acquire coded data of the second captured image. Then, the coded data may be supplied to another information processing device through communication, or may be stored in a storage medium. Furthermore, the first information processing device may decode the coded data acquired by the communication unit to generate (restore) the second captured image. For example, the first information processing device including the communication unit may include a decoding unit that decodes the coded data of the second captured image acquired by the communication unit.

Even in a case where the second imaging is performed in the second information processing device as described above, the second 3D modeling processing of the second 3D data generation processing 104 described above may be further performed in the first information processing device. For example, the first information processing device including the communication unit may further include a second 3D modeling processing unit that generates the second three-dimensional shape information on the basis of the second captured image acquired by the communication unit. For example, the second 3D modeling processing unit may include a corresponding point position deriving unit that derives a three-dimensional position of each corresponding point between a plurality of second captured images, and a three-dimensional point adding unit that adds a three-dimensional point on the basis of the three-dimensional position of the corresponding point. In the second 3D modeling processing, meshing and texturing may be further performed as post-processing. For example, the second three-dimensional shape information may include a mesh representing the three-dimensional shape of the 3D object through vertex connections and a texture applied to the surface of the mesh.

Note that the second 3D data generated by the second 3D modeling processing may be supplied to another information processing device through communication, or may be stored in a storage medium. Furthermore, the second 3D data may be encoded. For example, the first information processing device including the communication unit and the second 3D modeling processing unit may further include an encoding unit that encodes the second three-dimensional shape information generated by the second 3D modeling processing unit. Then, the coded data of the generated second three-dimensional shape information (second 3D data) may be supplied to another information processing device through communication, or may be stored in a storage medium.

Incidentally, as described above, the second imaging can be performed by manual imaging. In this case, the second captured image obtained by the manual imaging may be used in the second 3D modeling processing. In the scoring processing 102, as described above, the accuracy of the second three-dimensional shape information that can be generated using the second captured images obtained so far is evaluated. At that time, the second captured images may include the second captured image obtained by the manual imaging. That is, orientation information regarding the manual imaging may be reflected in the scoring processing 102. For example, the scoring processing unit of the first information processing device may generate the scoring result on the basis of the position and orientation of the second information processing device corresponding to the second imaging timing indicated by the imaging timing information indicating the second imaging timing without relying on the imaging control information. For example, the imaging control unit may obtain the orientation information regarding the second imaging unit at the imaging timing on the basis of the imaging timing information, and the scoring processing unit may calculate the score on the basis of the orientation information. By doing so, the orientation information regarding the manual imaging is reflected in the scoring result.

Note that, in this case, the second imaging (manual imaging) may be performed in the first information processing device or may be performed in the second information processing device. In a case where the first information processing device includes the second imaging unit, for example, when performing the manual imaging, the second imaging unit may generate the imaging timing information indicating the timing and supply the imaging timing information to the imaging control unit. Furthermore, in a case where the first information processing device includes the communication unit, for example, the communication unit may acquire the imaging timing information supplied from the second information processing device and supply the imaging timing information to the imaging control unit.

By doing so, it is possible to perform control so that the second imaging is performed in a more appropriate position and orientation on the basis of the imaging timing information.

Incidentally, in the first information processing device, as described above, the camera information regarding the second imaging unit may be reflected in the scoring processing 102. For example, the scoring processing unit of the first information processing device may generate the scoring result on the basis of the camera information. In this case, the second imaging may be performed in the first information processing device or may be performed in the second information processing device. In a case where the first information processing device includes the second imaging unit, for example, the second imaging unit may generate the camera information and supply the camera information to the scoring processing unit. Furthermore, in a case where the first information processing device includes the communication unit, for example, the communication unit may acquire the camera information supplied from the second information processing device and supply the camera information to the scoring processing unit.

By doing so, it is possible to perform control so that the second imaging is performed in a more appropriate position and orientation on the basis of the camera information.

Incidentally, the second information processing device may perform the second imaging of the second 3D data generation processing 104 described above. For example, the second information processing device may include a second imaging unit and a communication unit that communicates with the first information processing device, the communication unit may acquire imaging control information supplied from the first information processing device, and the second imaging unit may image the 3D object on the basis of the imaging control information to generate the second captured image. The imaging control information is information on the basis of which the second imaging is controlled, the information being generated on the basis of the scoring result derived on the basis of the first 3D data.

Furthermore, in the information processing method performed by the second information processing device, the imaging control information supplied from the first information processing device may be acquired, the second imaging may be performed on the basis of the imaging control information, and the second captured image used to generate the second 3D data may be generated.

By doing so, it is possible to image the 3D object (perform the second imaging) in a more appropriate position and orientation and perform the second 3D modeling processing using the obtained second captured image. It is therefore possible to generate more accurate 3D data while suppressing an increase in the load (workload or processing volume) of the 3D modeling. That is, it is possible to perform the 3D modeling more easily.

The generated second captured image may be supplied to the first information processing device. For example, the communication unit may supply the second captured image generated by the second imaging unit to the first information processing device. The second captured image is a captured image used to generate three-dimensional shape information representing the three-dimensional shape of the 3D object. Furthermore, the second captured image may be encoded. For example, the second information processing device may include an encoding unit that encodes the second captured image generated by the second imaging unit. Then, the communication unit may supply the coded data of the second captured image generated by the encoding unit to the first information processing device. Note that the second captured image (or the coded data of the second captured image) may be supplied to an information processing device other than the first information processing device. For example, the communication unit may supply the second captured image (or the coded data of the second captured image) to another information processing device. Furthermore, the second captured image (or the coded data of the second captured image) may be stored in a storage medium. For example, the second information processing device may include a storage unit that stores the coded data of the second captured image generated by the encoding unit.

Furthermore, the second information processing device may perform the second 3D modeling processing described above. That is, in the second information processing device, the second 3D modeling processing may be performed using the second captured image generated by the second imaging to generate the second 3D data. For example, the second information processing device may further include a second 3D modeling processing unit that generates the second three-dimensional shape information (second 3D data) representing the three-dimensional shape of the 3D object on the basis of the second captured image generated by the second imaging unit. For example, the second 3D modeling processing unit may include a corresponding point position deriving unit that derives a three-dimensional position of each corresponding point between a plurality of second captured images, and a three-dimensional point adding unit that adds a three-dimensional point on the basis of the three-dimensional position of the corresponding point. In the second 3D modeling processing, meshing and texturing may be further performed as post-processing. For example, the second three-dimensional shape information may include a mesh representing the three-dimensional shape of the 3D object through vertex connections and a texture applied to the surface of the mesh.

Note that the second 3D data generated by the second 3D modeling processing may be supplied to another information processing device through communication, or may be stored in a storage medium. Furthermore, the second 3D data may be encoded. For example, the second information processing device including the second 3D modeling processing unit may further include an encoding unit that encodes the second three-dimensional shape information generated by the second 3D modeling processing unit. Then, the coded data of the generated second three-dimensional shape information (second 3D data) may be supplied to another information processing device through communication, or may be stored in a storage medium.

Incidentally, as described above, the second imaging can be performed by manual imaging. In this case, the second captured image obtained by the manual imaging may be used in the second 3D modeling processing. In the scoring processing 102, as described above, the accuracy of the second three-dimensional shape information that can be generated using the second captured images obtained so far is evaluated. At that time, the second captured images may include the second captured image obtained by the manual imaging. That is, orientation information regarding the manual imaging may be reflected in the scoring processing 102.

In that case, imaging timing information indicating the timing of the manual imaging may be generated in the second information processing device and supplied to the first information processing device. For example, the second imaging unit of the second information processing device may generate the imaging timing information indicating the timing when the manual imaging is performed, and the communication unit may supply the imaging timing information to the first information processing device.

By doing so, it is possible to image the 3D object (perform the second imaging) in a more appropriate position and orientation on the basis of the imaging timing information.

Incidentally, as described above, the camera information regarding the second imaging unit may be reflected in the scoring processing 102. For example, the second imaging unit of the second information processing device may generate the camera information, and the communication unit may supply the camera information to the first information processing device. Furthermore, in this case, the communication unit may acquire imaging control information generated on the basis of the camera information, and the second imaging unit may perform the second imaging on the basis of the imaging control information. Furthermore, in the information processing method performed by the second information processing device, the camera information regarding the second imaging unit may be generated, and the camera information may be supplied to the first information processing device. Furthermore, the imaging control information generated on the basis of the camera information may be acquired, and the second imaging may be performed on the basis of the imaging control information.

By doing so, it is possible to image the 3D object (perform the second imaging) in a more appropriate position and orientation on the basis of the camera information.

<3. Imaging guidance output>

<Imaging guidance output processing for second 3D modeling>

Furthermore, instead of controlling the imaging for the second 3D modeling, guidance information used to assist in the imaging for the second 3D modeling may be output. For example, in Fig. 4, after the first 3D data generation processing 101 and the scoring processing 102 are performed, imaging guidance output processing for second 3D modeling 105 may be further performed. Also in this case, the first 3D data generation processing 101 and the scoring processing 102 are performed similarly to the case described above in <2. Imaging control>. However, the scoring processing 102 supplies the scoring result to the imaging guidance output processing for second 3D modeling 105.

In the imaging guidance output processing for second 3D modeling 105, guidance information for the second imaging is generated on the basis of the scoring result obtained by the scoring processing 102, and the output of the guidance information is controlled and output by an output device.

The user or the like refers to such guidance information and manually performs the second imaging. That is, in this case, the second imaging is manual imaging (imaging without relying on the imaging control information). It is possible to generate, by performing the second imaging in this manner, the second captured image captured in a more appropriate position and orientation. Then, the second 3D data generation processing 104 (second imaging and second 3D modeling processing) is performed using the second captured image to generate desired second 3D data. In other words, the second 3D modeling processing can be performed using the second captured image captured in a more appropriate position and orientation. It is therefore possible to generate more accurate 3D data while suppressing an increase in the load (workload or processing volume) of the 3D modeling. That is, it is possible to perform the 3D modeling more easily.

<Generation of guidance information>

In order to generate this guidance information, in the imaging guidance output processing for second 3D modeling 105, the position and orientation in which the second imaging is to be performed (more appropriate position and orientation as the position and orientation in which the second imaging is to be performed) are obtained on the basis of the scoring result. The method for obtaining such a position and orientation in which the second imaging is to be performed may be any method. For example, the method may be similar to the method applied to the imaging control processing for second 3D modeling 103 described above. For example, (the range of) the position and orientation that allow an increase in the score of the portion (gray portion) where the second imaging is insufficient may be determined on the basis of the scoring result.

Furthermore, in the imaging guidance output processing for second 3D modeling 105, whether or not the current position and orientation are the position and orientation in which the second imaging is to be performed may be determined on the basis of the variation of the scoring result based on the current orientation information regarding (position and orientation of) the second imaging unit. For example, as a result of reflecting (the orientation information regarding) the second captured image obtained in a case where the second imaging unit performs the second imaging in the current position and orientation in the scoring, in a case where the score is higher than the score before the addition of the second captured image by a predetermined threshold or more, the current position and orientation may be determined to be the position and orientation in which the second imaging is to be performed. That is, in this case, in the scoring processing 102, the scoring results are derived and compared between a case where the second imaging performed by the second imaging unit in the current position and orientation is included in "the second imaging performed so far" and a case where the second imaging is not included in "the second imaging performed so far". Therefore, in this case, in the scoring processing 102, scoring is performed on the basis of the current orientation information (imaging viewpoint information) regarding the second imaging unit.

This imaging viewpoint information may be supplied by the imaging guidance output processing for second 3D modeling 105. As described above, in this case, the imaging guidance output processing for second 3D modeling 105 is performed, and the second imaging is performed manually. Therefore, similarly to the case described above in <2. Imaging control>, imaging timing information indicating the imaging timing may be generated in (the second imaging of) the second 3D data generation processing 104 and supplied to the imaging guidance output processing for second 3D modeling 105. Then, in the imaging guidance output processing for second 3D modeling 105, on the basis of the imaging timing information, the orientation information regarding the second imaging unit at the imaging timing may be obtained, and the orientation information regarding the second imaging unit at the imaging timing may be supplied to the scoring processing 102 as the imaging viewpoint information.

Furthermore, if the position and orientation relationship between the first imaging unit and the second imaging unit is known, the orientation information regarding the first imaging unit may be supplied to the scoring processing 102 as the imaging viewpoint information instead of the orientation information regarding the second imaging unit.

Furthermore, in the imaging guidance output processing for second 3D modeling 105, whether or not the position and orientation are the position and orientation in which the second imaging is to be performed may be determined on the basis of the overlap rate with the imaging range of the second imaging performed so far.

Note that, as described above with reference to Fig. 6, what the overlap rate that makes the second 3D modeling processing easier (allows more accurate 3D modeling processing) is also depends on the three-dimensional shape of the 3D object, or the like. Therefore, in a case where the overlap rate with respect to the second captured images obtained so far is taken into consideration when the position and orientation in which the second imaging is to be performed are obtained, it is desirable that the three-dimensional shape (first 3D data) of the 3D object be also taken into consideration (the position and orientation in which the second imaging is to be performed can be obtained more accurately).

Furthermore, as described above with reference to Fig. 7, when obtaining the position and orientation in which the second imaging is to be performed, the distance from the subject (3D object) to the imaging position may be controlled. At that time, the distance may be controlled in accordance with (the complexity of) the three-dimensional shape of the 3D object. By doing so, it is possible to suppress an unnecessary increase in the frequency of the second imaging while suppressing a decrease in the accuracy of the second 3D modeling processing (accuracy of the second 3D data). That is, it is possible to perform control so that the second imaging is performed in a more appropriate position and orientation.

Then, in the imaging guidance output processing for second 3D modeling 105, the guidance information is generated on the basis of the position and orientation in which the second imaging is to be performed obtained as described above. The guidance information may be any type of information, and may include, for example, image information or audio information.

Furthermore, the output of the guidance information is performed so that the content of the guidance information is presented to the user or the like who performs the second imaging, for example. The output device may be any device, and may include, for example, a monitor that displays the image information, or a speaker that outputs the audio information.

<Guidance information>

Next, the content of the guidance information will be described. The content of the guidance information may be of any kind. For example, information indicating a more appropriate position and orientation for the second imaging to the user may be included in the guidance information.

For example, it is assumed that the first 3D data 120 illustrated in Fig. 5 is generated by the first 3D data generation processing 101 in Fig. 4. Then, it is assumed that the second imaging has been performed on the 3D object corresponding to the first 3D data 120 in the positions and orientations of the camera 121-1 to the camera 121-3. In that case, in the scoring processing 102, the upper side of the first 3D data 120 in the drawing is evaluated with a relatively high score, and the lower side (gray portion) of the first 3D data 120 in the drawing is evaluated with a relatively low score. This scoring result clearly shows that imaging of the lower side (for example, the gray portion) of the 3D object in the drawing corresponding to the first 3D data 120 is insufficient.

Therefore, in the imaging guidance output processing for second 3D modeling 105, guidance information used to guide the second imaging is generated and output so that the captured image of the gray portion where imaging is insufficient can be obtained. That is, in this guidance information, the second imaging is guided so that the 3D object is imaged from the lower side in the drawing. For example, the position and orientation of the camera 121-4 are determined to be more appropriate as the position and orientation in which the second imaging is performed, and the user or the like is notified of the determination.

By doing so, it is possible for the user to image the 3D object in a more appropriate position and orientation by performing the second imaging in accordance with the guidance information. That is, it is possible to perform the 3D modeling (second 3D data generation processing 104) using the captured image. It is therefore possible to generate more accurate 3D data while suppressing an increase in the load (workload or processing volume) of the 3D modeling. That is, it is possible to perform the 3D modeling more easily.

<Display of scoring result>

Note that the guidance information may include information indicating the scoring result. That is, in the imaging guidance output processing for second 3D modeling 105, guidance information including information indicating the scoring result may be generated, and an image indicating the scoring result may be displayed on the monitor as the guidance information. Furthermore, information indicating the scoring result within the current angle of view of the second imaging unit may be included in the guidance information. That is, in the imaging guidance output processing for second 3D modeling 105, guidance information including information indicating the scoring result within the angle of view of the second imaging unit may be generated on the basis of the current position and orientation of the second imaging unit, and an image indicating the scoring result may be displayed on the monitor as the guidance information.

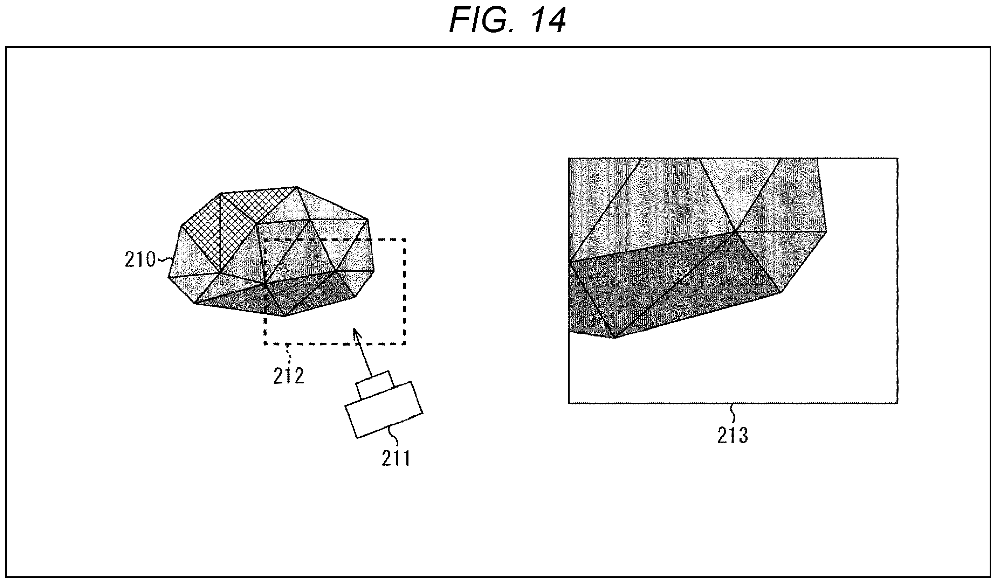

For example, as illustrated in Fig. 14, it is assumed that the second imaging unit is located at the position of a camera 211 and is oriented to image a portion of the scored first 3D data 210 enclosed by a dotted frame 212. In this case, in the imaging guidance output processing for second 3D modeling 105, like an image 213, an image indicating the scoring result within the current angle of view (imaging range) of the second imaging unit, in other words, an image indicating the portion of the first 3D data 210 enclosed by the dotted frame 212 may be displayed on the monitor as the guidance information. By doing so, it is possible to display the scoring result in a state based on the current position and orientation of the second imaging unit. It is therefore possible for the user to identify the position and orientation appropriate for the second imaging more easily.

Furthermore, the guidance information (image indicating the scoring result within the current angle of view of the second imaging unit) may be superimposed on the captured image generated by the second imaging unit for display. For example, the image 213 (image indicating the scoring result within the current angle of view of the second imaging unit) illustrated in Fig. 14 may be superimposed on the captured image generated by the second imaging unit with the current angle of view for display. By doing so, it is possible to superimpose the captured image and the guidance information (image indicating the scoring result) having the same angle of view for display on the monitor. The user can cause, on the basis of such a display, the 3D object in the real space to correspond to the scoring result more easily. It is therefore possible for the user to identify the position and orientation appropriate for the second imaging more easily. Moreover, a bird's-eye view image indicating the scoring result of the entire 3D object may be displayed. It is possible for the user to identify which portion of the entire 3D object corresponds to the portion included in the currently displayed captured image of the 3D object more easily by displaying such a bird's-eye view image.

<Display of overlap region>

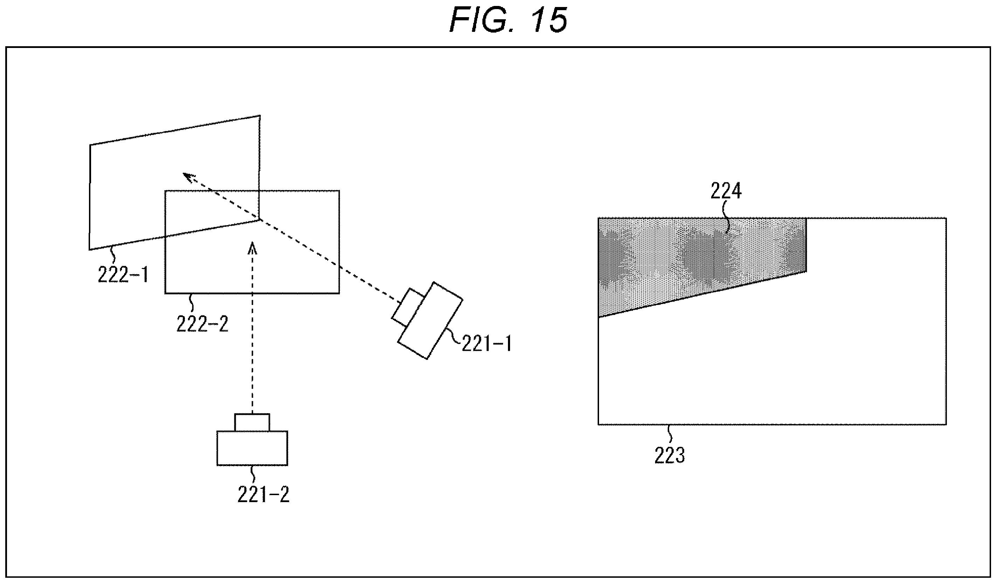

Furthermore, the guidance information may include information indicating an overlap region where the respective imaging ranges of a plurality of second captured images overlap. For example, in the imaging guidance output processing for second 3D modeling 105, guidance information including information indicating an overlap region where the respective imaging ranges of the plurality of second imaging overlap may be generated, and an image indicating the overlap region may be displayed as the guidance information. For example, in a case where the second imaging unit is in the position and orientation of a camera 221-1 on the left side of Fig. 15, it is assumed that its imaging range is an imaging range 222-1. Furthermore, in a case where the second imaging unit is in the position and orientation of a camera 221-2, it is assumed that its imaging range is an imaging range 222-2. In this case, the imaging range 222-1 and the imaging range 222-2 overlap each other. When there is such a region where the respective imaging ranges of the plurality of second captured images overlap, it is possible to detect the corresponding point between the two images. That is, when there is an appropriate overlap region between the plurality of second captured images, it is possible to generate accurate second 3D data in the second 3D modeling processing (suppress a decrease in the accuracy of the second 3D data).

It is therefore desirable to generate the second captured image (perform the second imaging) so that an appropriate overlap region is formed between the plurality of second captured images. As described above, since the image indicating such an overlap region is displayed on the monitor as the guidance information, the user or the like who operates the second imaging unit can determine the position and orientation of the second imaging while taking the overlap region into consideration on the basis of the guidance information. That is, the user or the like can more easily perform the second imaging in a position and orientation where an appropriate overlap region is formed between the plurality of second captured images. That is, the user or the like can more easily perform the second imaging in an appropriate position and orientation.

Note that the image indicating the overlap region may indicate the overlap region in any manner. For example, the overlap region may be indicated by a color, density, pattern, design, letter, symbol, figure, or the like. For example, the overlap region may be highlighted compared to other regions (made subjectively more noticeable than other regions).

Furthermore, the overlap region may be an overlap region between the current angle of view of the second imaging unit and the imaging range of the second captured images obtained so far. That is, an image indicating an overlap region between the second captured images obtained so far and the second captured image to be generated may be displayed as the guidance information. For example, in the imaging guidance output processing for second 3D modeling 105, guidance information including information indicating the overlap region between the angle of view of the second imaging unit and the imaging range of the second captured images obtained so far may be generated on the basis of the current position and orientation of the second imaging unit, and an image indicating the overlap region may be displayed on the monitor as the guidance information. For example, in Fig. 15, it is assumed that the second imaging unit is at the position of the camera 221-2 and is oriented to image the imaging range 222-2. In this case, an image 223 indicating an overlap region 224 within the imaging range 222-2 may be generated and displayed as the guidance information.

By doing so, it is possible to display the overlap region in a state based on the current position and orientation of the second imaging unit. It is therefore possible for the user or the like who operates the second imaging unit to identify how the imaging range of the second captured images obtained so far overlaps the imaging range of the second captured image obtained by performing the second imaging in the current position and orientation more easily on the basis of the guidance information. That is, the user or the like can more easily perform the second imaging to appropriately overlap the imaging range of the second captured images obtained so far. That is, the user or the like can more easily perform the second imaging in an appropriate position and orientation.

Furthermore, the guidance information (image indicating an overlap region where the respective imaging ranges of the second captured images overlap, or an overlap region where the current angle of view of the second imaging unit and the imaging range of the second captured images obtained so far overlap) may be superimposed on the captured image generated by the second imaging unit for display. For example, the image 223 (image indicating the overlap region where the current angle of view of the second imaging unit and the imaging range of the second captured images obtained so far overlap) illustrated in Fig. 15 may be superimposed on the captured image generated by the second imaging unit with the current angle of view for display.

By doing so, it is possible to superimpose the captured image and the guidance information having the same angle of view (image indicating the overlap region where the current angle of view of the second imaging unit and the imaging range of the second captured images obtained so far overlap) for display on the monitor. The user can cause, on the basis of such a display, the 3D object in the real space to correspond to the overlap region more easily. It is therefore possible for the user to identify the position and orientation appropriate for the second imaging more easily.

Note that an image indicating an overlap rate indicating the proportion of the overlap region within the angle of view may be further displayed. The overlap rate may be represented by, for example, a numerical value, or may be represented by, for example, a color, density, pattern, or the like. Such a display allows the user to identify how much overlap occurs more intuitively.

<Display of imaging assist image>

Furthermore, an imaging assist image used to assist in the second imaging may be included in the guidance information. For example, in the imaging guidance output processing for second 3D modeling 105, guidance information including the imaging assist image used to assist in the second imaging may be generated, and the imaging assist image may be displayed as the guidance information. The content of the imaging assist image may be of any kind.

For example, recommended imaging position and orientation guidance indicating a recommended imaging position and orientation that are a recommended position and orientation of the second imaging may be included in the imaging assist image. For example, in the imaging guidance output processing for second 3D modeling 105, the recommended imaging position and orientation that is the recommended position and orientation of the second imaging may be derived on the basis of the scoring result, and the recommended imaging position and orientation guidance indicating the recommended imaging position and orientation may be displayed as the guidance information (imaging assist image).

For example, in a case where the current position and orientation of the second imaging unit are the same as the recommended imaging position and orientation, an image indicating the state may be displayed as the recommended imaging position and orientation guidance. That is, for example, in a case where the user or the like moves the second imaging unit so that the current position and orientation match the recommended imaging position and orientation, the user or the like may be notified of the state. This notification method may be any method. For example, when the current position and orientation of the second imaging unit match the recommended imaging position and orientation, a completely different image such as a white image may be displayed. Furthermore, instead of such an image, the current position and orientation of the second imaging unit may be indicated as the recommended imaging position and orientation by a letter, pattern, symbol, or the like. The user or the like who operates the second imaging unit can easily identify that the current position and orientation of the second imaging unit match the recommended imaging position and orientation on the basis of such a display (recommended imaging position and orientation guidance). It is therefore possible for the user or the like to perform the second imaging in an appropriate position and orientation more easily.

Furthermore, an image indicating a relative position and orientation of the recommended imaging position and orientation relative to the second imaging unit may be displayed as the recommended imaging position and orientation guidance. That is, the direction and distance of the recommended imaging position and orientation relative to the current position and orientation of the second imaging unit, and the like may be indicated by, for example, a letter, pattern, symbol, or the like. On the basis of such a display, the user or the like who operates the second imaging unit can move the second imaging unit toward the recommended imaging position and orientation more easily even if the current position and orientation of the second imaging unit does not match the recommended imaging position and orientation. It is therefore possible for the user or the like to perform the second imaging in an appropriate position and orientation more easily.

Note that the recommended imaging position and orientation guidance may be superimposed on the captured image generated by the second imaging unit for display. Such a display allows the user to cause the 3D object in the real space to correspond to the recommended imaging position and orientation guidance more easily. It is therefore possible for the user to identify the position and orientation appropriate for the second imaging more easily.

<Imaging guidance based on complexity of subject>

That is, as described above with reference to Fig. 7, the appropriate distance from the 3D object as the position of the second imaging depends on the three-dimensional shape of the 3D object. Therefore, the distance from the 3D object (subject) may be included in the recommended imaging position and orientation of the second imaging derived in the imaging guidance output processing for second 3D modeling 105. Then, when the recommended imaging position and orientation of the second imaging is derived in the imaging guidance output processing for second 3D modeling 105, the distance from the 3D object may be derived on the basis of the complexity of the three-dimensional shape of the 3D object.

The method for deriving the complexity of the three-dimensional shape of the 3D object may be any method, and may be, for example, the method described above in <2. Imaging control>. Furthermore, the method for deriving the distance from the 3D object (recommended imaging position and orientation) based on the complexity of the three-dimensional shape of the 3D object may be any method. For example, as the three-dimensional shape of the 3D object is more complicated, a position closer to the 3D object may be set as the recommended imaging position and orientation. Furthermore, as the three-dimensional shape of the 3D object is simpler, a position farther from the 3D object may be set as the recommended imaging position and orientation.

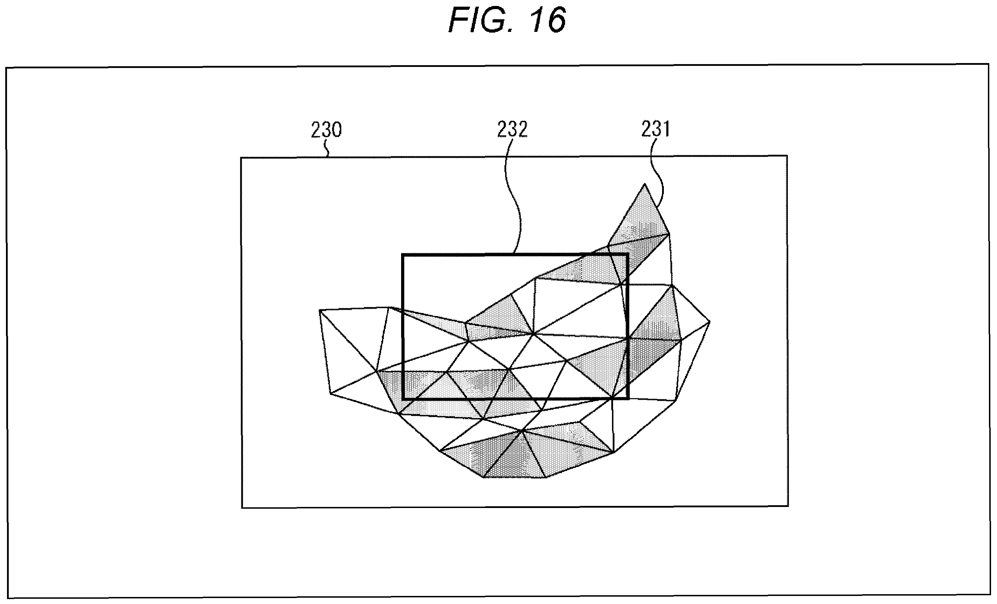

Furthermore, in the guidance information displayed on the monitor, a detection frame may also be displayed as illustrated in Fig. 16. In Fig. 16, a display image 230 is guidance information displayed on the monitor by the imaging guidance output processing for second 3D modeling 105. In the display image 230, scored first 3D data 231 and a detection frame 232 are displayed. Displaying the detection frame 232 as described above allows the user to perform an operation to bring the second imaging unit closer to the portion of interest of the 3D object (subject) or separate the second imaging unit from the portion of interest easily on the basis of the complexity of the three-dimensional shape of the 3D object. It goes without saying that the detection frame need not necessarily be displayed.

For example, the captured image generated by the second imaging unit may be displayed on the monitor, the detection frame and the first 3D data corresponding to the 3D object (subject) may be further superimposed on the captured image for display as the guidance information, and the portion of the first 3D data (3D object) to be imaged may be indicated. Then, to ensure that the second imaging unit is in a position and orientation appropriate for performing the second imaging, the user may move the second imaging unit to align the portion of the first 3D data to be imaged with the detection frame in the display.

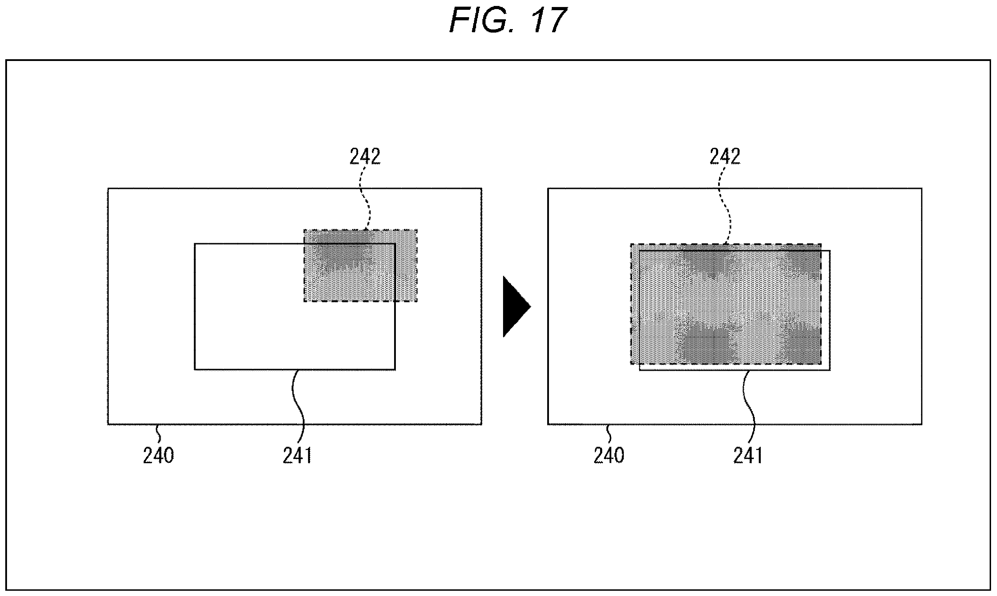

For example, as illustrated in Figs. 17 to 19, with a display image 240 displayed on the monitor, a detection frame 241 and a portion 242 of the 3D object to be imaged derived on the basis of the first 3D data may be displayed in the display image 240. Then, to ensure that the second imaging unit is in a position and orientation more appropriate for performing the second imaging, the user may move the second imaging unit to bring the portion 242 to be imaged closer to (ideally align the portion 242 with) the detection frame 241 in the display image 240.

For example, in the left case in Fig. 17, the portion 242 to be imaged is displayed smaller than the detection frame 241. In that case, to align the display of the portion 242 to be imaged with (or approximate the portion 242 to) the detection frame 241 as illustrated on the right side of Fig. 17, the user brings the second imaging unit closer to the 3D object to make the portion 242 appear larger. When the second imaging unit is moved as described above, the second imaging unit is in a position and orientation more appropriate for performing the second imaging.

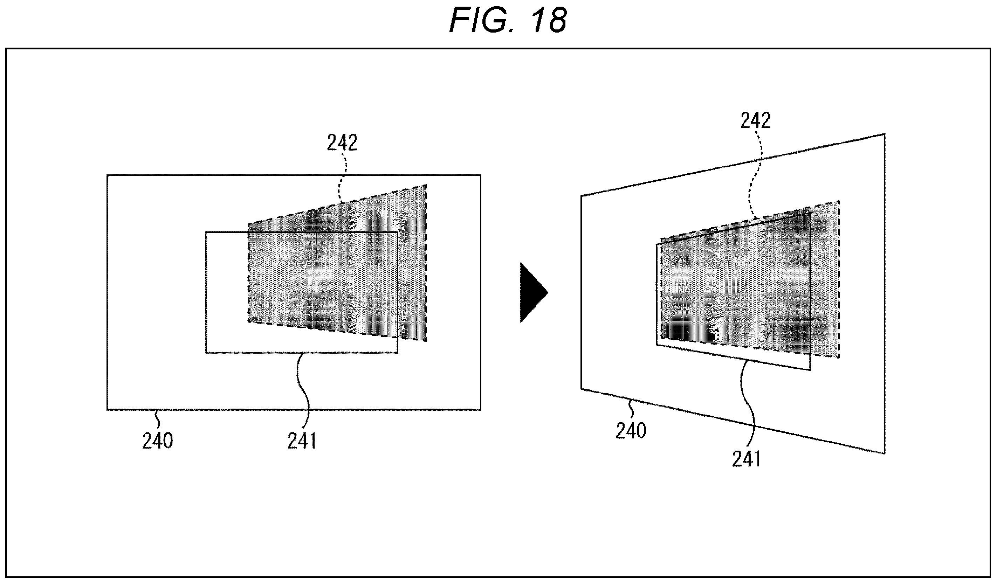

Furthermore, in a case of the left example in Fig. 18, the imaging direction and the direction of the normal line to the portion 242 to be imaged are misaligned (the portion 242 to be imaged and the detection frame 241 (imaging surface) are not facing each other directly). In that case, the user adjusts the direction of the second imaging unit (that is, the imaging direction) or the like to cause the portion 242 to be imaged to directly face (more directly face) the detection frame 241 as illustrated on the right side of Fig. 18. When the second imaging unit is moved as described above, the second imaging unit is in a position and orientation more appropriate for performing the second imaging.

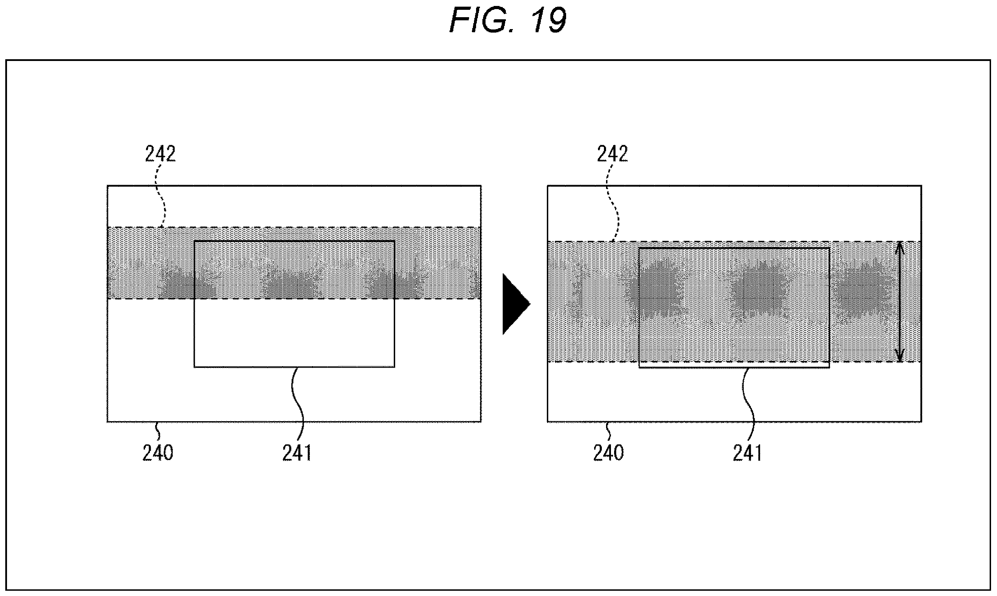

Furthermore, in a case of the left example in Fig. 19, the portion 242 to be imaged is different in height from the detection frame 241. In that case, the user adjusts the distance between the second imaging unit and the 3D object or the like to match (or approximate) the height of the portion 242 to be imaged to the height of the detection frame 241 as illustrated on the right side of Fig. 19. When the second imaging unit is moved as described above, the second imaging unit is in a position and orientation more appropriate for performing the second imaging.

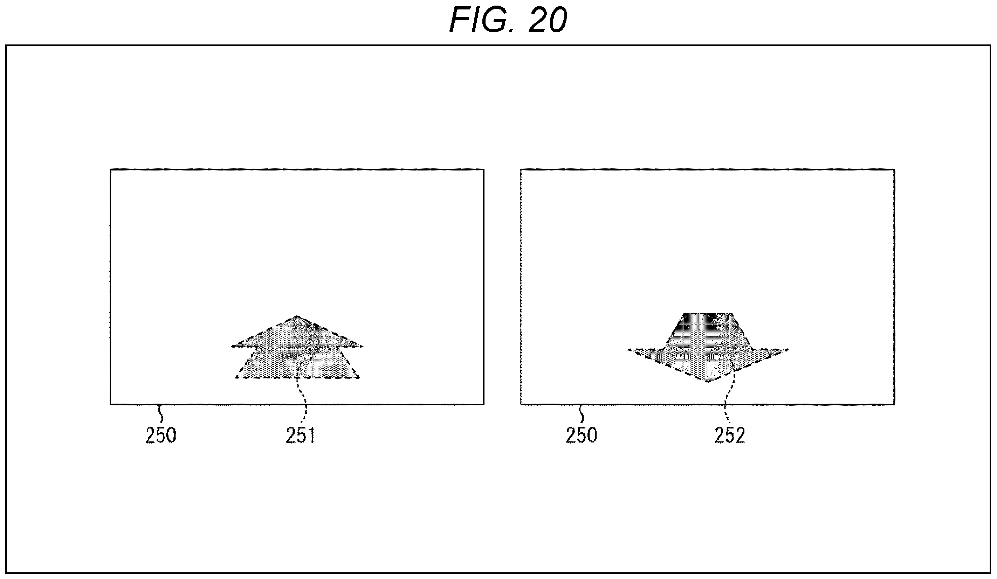

Furthermore, as in the example in Fig. 20, an arrow indicating a recommended movement direction of the second imaging unit (movement direction toward the recommended imaging position and orientation) may be displayed as the guidance display. For example, in the left case in Fig. 20, a display image 250 for displaying the guidance display on the monitor is displayed, and an arrow 251 is displayed as the guidance display in the display image 250. The arrow 251 is an arrow pointing toward the far side (pointing forward) in the drawing, and guides the second imaging unit to move forward (move toward the 3D object (subject)). Furthermore, in a case of the right example in Fig. 20, an arrow 252 is displayed as the guidance display in the display image 250 displayed on the monitor. The arrow 252 is an arrow pointing toward the near side (pointing backward) in the drawing, and guides the second imaging unit to move backward (move away from the 3D object (subject)). When the user moves the second imaging unit in accordance with these arrows, the second imaging unit can be brought closer to the recommended imaging position and orientation.

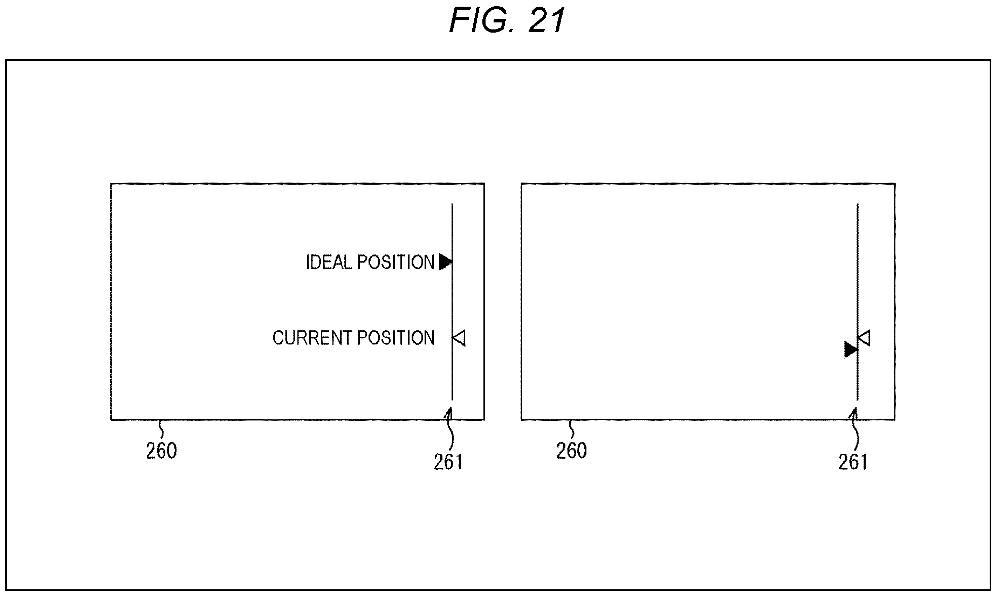

Furthermore, as in the example in Fig. 21, an indicator indicating the positional relationship in the depth direction between the current position of the second imaging unit and the recommended imaging position and orientation may be displayed. For example, in the left case in Fig. 21, a display image 260 for displaying the guidance display on the monitor is displayed, and an indicator 261 is displayed as the guidance display in the display image 260. The indicator 261 indicates the positional relationship in the depth direction between the current position of the second imaging unit and the recommended imaging position and orientation. In a case of the left example in Fig. 21, the indicator 261 indicates that the position of the recommended imaging position and orientation is misaligned with (in front of) the current position of the second imaging unit, and guides the second imaging unit to move forward (move toward the 3D object (subject)). Furthermore, in a case of the right example in Fig. 21, the indicator 261 indicates that the current position of the second imaging unit and the position of the recommended imaging position and orientation are approximately aligned (approximate). That is, in this case, the indicator 261 guides that there is little need to move the second imaging unit. When the user moves the second imaging unit in accordance with the indicator 261, the second imaging unit can be brought closer to the recommended imaging position and orientation.

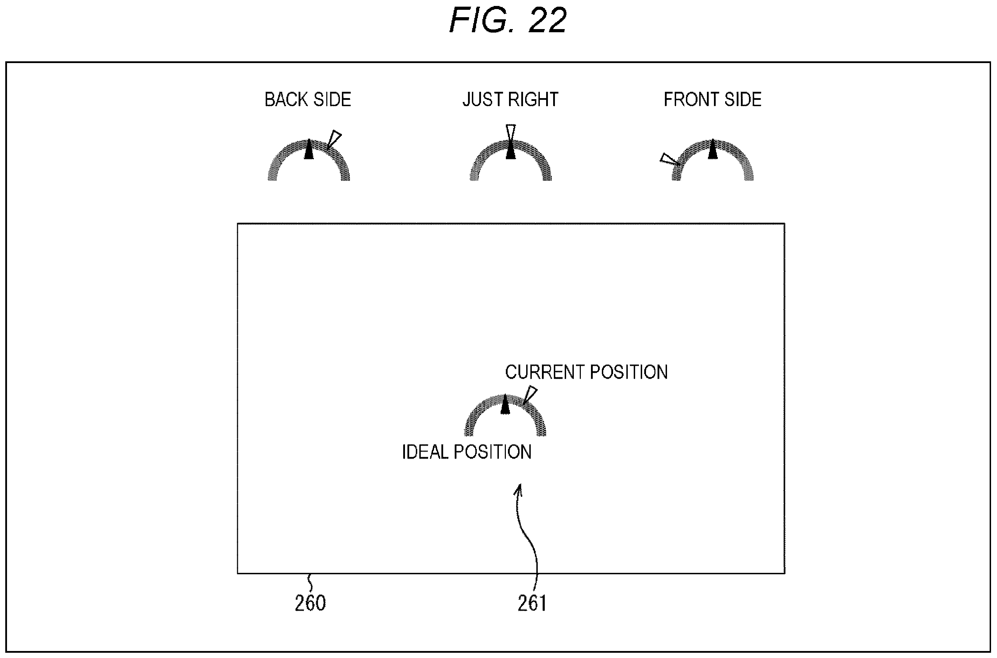

Note that the indicator 261 may have any design, and is not limited to the example in Fig. 21. For example, such a design as illustrated in Fig. 22 may be used. In a case of this example, the display changes as illustrated on the upper side in the drawing in a manner that depends on the positional relationship in the depth direction between the current position of the second imaging unit and the recommended imaging position and orientation.

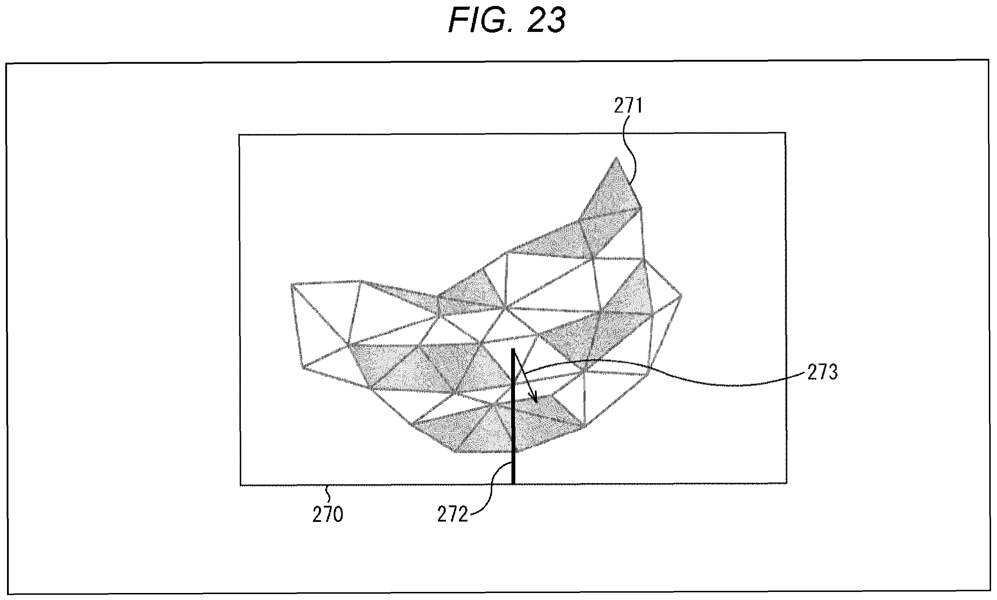

Furthermore, as in the example in Fig. 23, the distance between the portion of the first 3D data (3D object) to be imaged and the second imaging unit and the degree of alignment (orientation relationship) may be displayed as the guidance information. For example, in a case of Fig. 23, a display image 270 for displaying the guidance display on the monitor is displayed, and scored first 3D data 271 is displayed in the display image 270. Furthermore, in the display image 270, a line (or a line in accordance therewith) 272 connecting the optical axis of the second imaging unit (the center of the pixel region of the second imaging unit) and the center of the portion of the first 3D data (3D object) 271 to be imaged is displayed as the guidance display. Moreover, in the display image 270, an arrow 273 indicating the orientation of the subject surface in the center region of the portion of the first 3D data (3D object) 271 to be imaged is displayed as the guidance display.

In the display image 270, the line 272 and the arrow 273 indicate the positional relationship between the current position of the second imaging unit and the recommended imaging position and orientation, and the distance between the portion of the first 3D data (3D object) to be imaged and the second imaging unit and the degree of alignment (orientation relationship).

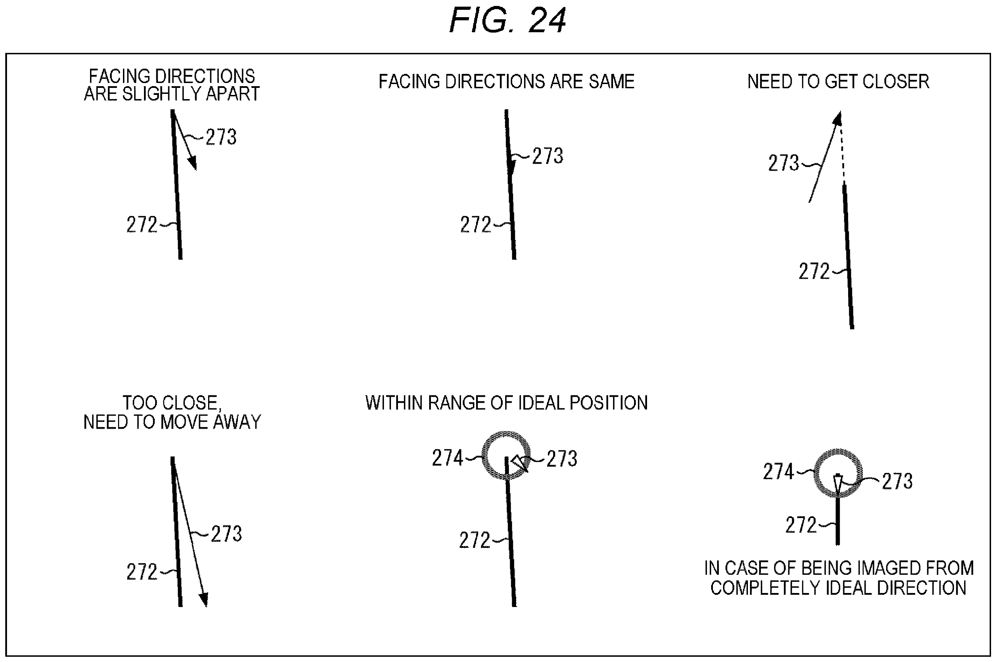

For example, as illustrated on the left side of the upper section of Fig. 24, in a case where the directions of the line 272 and the arrow 273 are different from each other, it indicates that (the direction of the normal line to) the surface of the portion of the first 3D data (3D object) to be imaged is misaligned with (not directly facing) the imaging surface (the orientation of the second imaging unit) by the difference (angle).

On the other hand, as illustrated in the center of the upper section of Fig. 24, in a case where the directions of the line 272 and the arrow 273 align with each other, it indicates that (the direction of the normal line to) the surface of the portion of the first 3D data (3D object) to be imaged directly faces the imaging surface (the orientation of the second imaging unit).

Furthermore, as illustrated on the right side of the upper section of Fig. 24, in a case where the line 272 and the arrow 273 are separated, it indicates that the distance between the portion of the first 3D data (3D object) to be imaged and the second imaging unit is longer than the distance appropriate for the second imaging. That is, in this case, guidance to move the second imaging unit toward the first 3D data (3D object) is provided.

Furthermore, as illustrated on left side of the lower section of Fig. 24, in a case where the line 272 is shorter than the arrow 273, it indicates that the distance between the portion of the first 3D data (3D object) to be imaged and the second imaging unit is shorter than the distance appropriate for the second imaging. That is, in this case, guidance to move the second imaging unit away from the first 3D data (3D object) is provided.

Furthermore, as illustrated in the center of the lower section of Fig. 24, in a case where a circle 274 is displayed at the connection portion between the line 272 and the arrow 273, it indicates that the distance between the portion of the first 3D data (3D object) to be imaged and the second imaging unit approximates the distance appropriate for the second imaging. That is, in this case, guidance not to move the second imaging unit in the depth direction is provided.

Furthermore, as illustrated on the right side of the lower section of Fig. 24, in a case where the circle 274 is displayed at the connection portion between the line 272 and the arrow 273, and the directions of the line 272 and the arrow 273 align with each other, it indicates that the distance between the portion of the first 3D data (3D object) to be imaged and the second imaging unit approximates the distance appropriate for the second imaging, and (the direction of the normal line to) the surface of the portion of the first 3D data (3D object) to be imaged directly faces the imaging surface (orientation of the second imaging unit). That is, in this case, guidance indicating that the current position and orientation of the second imaging unit align with or approximate the recommended imaging position and orientation is provided.

It is possible for the user to bring, by moving the second imaging unit in accordance with such guidance information, the second imaging unit closer to the recommended imaging position and orientation more easily.

Note that, since the orientation information regarding the second imaging unit (first imaging unit) is derived by SLAM or the like, the distance between the second imaging unit and the subject can be easily derived. It is therefore possible to update the display example described above in real time (instantaneously).

<Real-time processing>

Note that the first 3D data generation processing 101 (first imaging and first 3D modeling processing), the scoring processing 102, and the imaging guidance output processing for second 3D modeling 105 in Fig. 4 may be performed in parallel. As described above in <2. Imaging control>, the 3D data of the portion of the 3D object subjected to the first imaging can be sequentially generated by the first 3D modeling processing. Furthermore, the first 3D data generation processing 101 and the scoring processing 102 can be performed in parallel.

Furthermore, in the imaging guidance output processing for second 3D modeling 105, each time the scoring result is obtained by the scoring processing 102 (before the scoring result of the entire 3D object is obtained), the guidance information for the second imaging may be generated and output on the basis of the obtained scoring result (the scoring result for the first 3D data corresponding to the portion of the 3D object). By doing so, it is possible to start the imaging guidance output processing for second 3D modeling 105 before the end of the scoring processing 102 (before the scoring result of the entire 3D object is obtained). That is, the scoring processing 102 and the imaging guidance output processing for second 3D modeling 105 can be performed in parallel.

It is possible to perform, by combining the methods described above, the first 3D data generation processing 101, the scoring processing 102, and the imaging guidance output processing for second 3D modeling 105 in parallel.

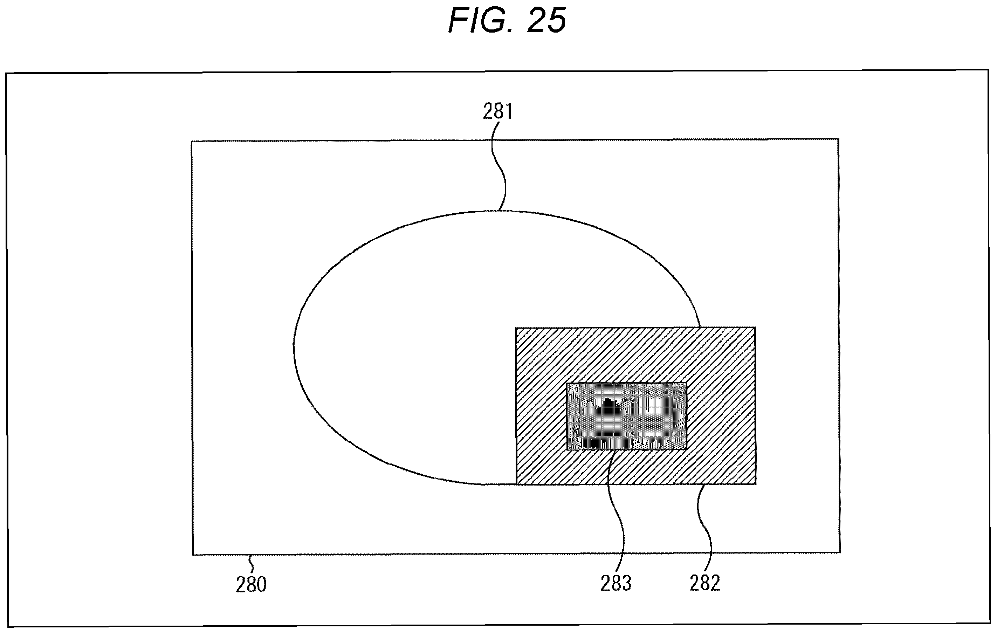

For example, as illustrated in Fig. 25, it is assumed that a display image 280 is displayed on the monitor and the captured image captured by the second imaging unit is displayed in the display image 280. In the captured image, a 3D object 281 appears as the subject. As described above, the first 3D data generation processing 101, the scoring processing 102, and the imaging guidance output processing for second 3D modeling 105 are performed in parallel so that the guidance information can be displayed in the display image 280 before the end of the first 3D data and scoring of the entire 3D object 281. In the display image 280 in Fig. 25, a hatched display 282 indicates a portion of the 3D object 281 of which the first 3D data has been generated. Furthermore, a gray display 283 indicates a portion where the second captured image is insufficient as a result of the scoring. It is possible to display, by performing the first 3D data generation processing 101, the scoring processing 102, and the imaging guidance output processing for second 3D modeling 105 in parallel, imaging guidance while performing the first imaging. It is therefore possible for the user to perform the second imaging in parallel (instantaneously) with the first imaging.

<Camera information>

Note that, also in a case where the imaging guidance output processing for second 3D modeling 105 is performed, similarly to the case described above in <2. Imaging control>, camera information regarding the second imaging unit may be generated in (the second imaging of) the second 3D data generation processing 104 and supplied to the scoring processing 102. Then, in the scoring processing 102, the scoring result may be generated by performing scoring on the basis of the camera information. Similarly to the case described above in <2. Imaging control>, the camera information may include any information.

<Example of configuration for performing processing>

Each processing in Fig. 4 described above may be performed by any device. For example, in the information processing device, the first 3D modeling processing of the first 3D data generation processing 101, the scoring processing 102, and the imaging guidance output processing for second 3D modeling 105 described above may be performed.

That is, an information processing device may include: a first 3D modeling processing unit that generates, on the basis of the first captured image generated by the first imaging of imaging the 3D object, the first three-dimensional shape information representing the three-dimensional shape of the 3D object; a scoring processing unit that uses the first three-dimensional shape information to evaluate the accuracy of the second three-dimensional shape information that can be generated using the second captured image generated by the second imaging performed so far; and a guidance information output control unit that generates guidance information for the second imaging of imaging the 3D object on the basis of the scoring result and controls output of the guidance information. In this section, this information processing device is also referred to as a first information processing device.

Furthermore, an information processing method performed by the first information processing device may include: generating, on the basis of the first captured image generated by the first imaging of imaging the 3D object, the first three-dimensional shape information representing the three-dimensional shape of the 3D object; evaluating, using the first three-dimensional shape information, the accuracy of the second three-dimensional shape information that can be generated using the second captured image generated by the second imaging performed so far; and generating guidance information for the second imaging of imaging the 3D object on the basis of the scoring result and controlling output of the guidance information.

By doing so, it is possible for the user to image the 3D object in a more appropriate position and orientation by performing the second imaging in accordance with the guidance information. That is, it is possible to perform the 3D modeling (second 3D modeling processing) using the captured image. It is therefore possible to generate more accurate 3D data while suppressing an increase in the load of the 3D modeling. That is, it is possible to perform the 3D modeling more easily.

Note that the guidance information output control unit may generate an image indicating the scoring result as the guidance information and display the image. Furthermore, the guidance information output control unit may generate an image indicating a scoring result within the angle of view of the second imaging unit on the basis of the position and orientation of the second imaging unit, and display the image. Furthermore, the guidance information output control unit may superimpose the captured image generated by the second imaging unit on the image indicating the scoring result within the angle of view of the second imaging unit for display. Furthermore, the guidance information output control unit may further display a bird's-eye view image indicating the scoring result of the entire 3D object.

Furthermore, the guidance information output control unit may generate an image indicating an overlap region where the imaging ranges of the plurality of second captured images overlap as the guidance information and display the image. Furthermore, the guidance information output control unit may generate an image indicating an overlap region where the current angle of view of the second imaging unit and the imaging range of the second captured images obtained so far overlap on the basis of the position and orientation of the second imaging unit, and display the image. Furthermore, the guidance information output control unit may superimpose the captured image generated by the second imaging unit on the image for display. Furthermore, the guidance information output control unit may further display an image indicating an overlap rate indicating a proportion of the overlap region within the current angle of view of the second imaging unit.

Furthermore, the guidance information output control unit may generate an imaging assist image used to assist in the second imaging as the guidance information and display the imaging assist image. Furthermore, the guidance information output control unit may derive a recommended imaging position and orientation that is a recommended position and orientation of the second imaging on the basis of the scoring result, and display recommended imaging position and orientation guidance indicating the recommended imaging position and orientation as the guidance information. Furthermore, in a case where the position and orientation of the second imaging unit are the same as the recommended imaging position and orientation, the guidance information output control unit may display an image indicating that the current position and orientation of the second imaging unit are the recommended imaging position and orientation as the recommended imaging position and orientation guidance. Furthermore, the guidance information output control unit may display an image indicating a relative position and orientation of the recommended imaging position and orientation relative to the second imaging unit as the recommended imaging position and orientation guidance. Furthermore, the guidance information output control unit may superimpose the captured image generated by the imaging unit that performs the second imaging on the recommended imaging position and orientation guidance for display.

Incidentally, in the first information processing device described above, the first three-dimensional shape information may have less information volume and be of less accuracy than the second three-dimensional shape information. Furthermore, the first 3D modeling processing unit of the first information processing device may include: an orientation information generation unit that generates orientation information indicating the position and orientation of the first imaging unit on the basis of the first captured image and the acceleration and angular velocity of the first imaging unit; and a three-dimensional shape generation unit that generates the first three-dimensional shape information on the basis of the orientation information and the depth of the 3D object. Note that, in this case, the first three-dimensional shape information may include a mesh representing the three-dimensional shape of the 3D object through vertex connections and a texture applied to the surface of the mesh.

Furthermore, in the first information processing device described above, the scoring processing unit may generate the scoring result for each local portion of the first three-dimensional shape information on the basis of the first three-dimensional shape information and the position and orientation of the second imaging performed so far. Furthermore, the first three-dimensional shape information may include a mesh indicating the three-dimensional shape of the 3D object through vertex connections and a texture applied to the surface of the mesh, and the scoring processing unit may generate the scoring result for each polygon of the mesh.

Furthermore, in the first information processing device, the second imaging of the second 3D data generation processing 104 described above may be further performed. The configuration of the first information processing device in that case is similar to the case described above in <2. Imaging control>. Furthermore, in the first information processing device, the second 3D modeling processing of the second 3D data generation processing 104 described above may be further performed. The configuration of the first information processing device in that case is also similar to the case described above in <2. Imaging control>.

Note that, as described above, the second imaging is performed by manual imaging. Therefore, the scoring processing unit of the first information processing device may generate the scoring result on the basis of the position and orientation of the second information processing device corresponding to the second imaging timing indicated by the imaging timing information indicating the second imaging timing. For example, the guidance information output control unit may obtain the orientation information regarding the second imaging unit at the imaging timing on the basis of the imaging timing information, and the scoring processing unit may calculate the score on the basis of the orientation information. By doing so, the orientation information regarding the manual imaging is reflected in the scoring result. The configuration of the first information processing device in this case is also similar to the case described above in <2. Imaging control>. However, the imaging timing information generated by the second imaging unit or the imaging timing information acquired by the communication unit is supplied to the guidance information output control unit. By doing so, it is possible to perform control so that the second imaging is performed in a more appropriate position and orientation on the basis of the imaging timing information.

Furthermore, in the first information processing device, as described above, the camera information regarding the second imaging unit may be reflected in the scoring processing 102. For example, the scoring processing unit of the first information processing device may generate the scoring result on the basis of the camera information. The configuration of the first information processing device in this case is also similar to the case described above in <2. Imaging control>. By doing so, it is possible to perform control so that the second imaging is performed in a more appropriate position and orientation on the basis of the camera information.

Incidentally, also in a case where the first information processing device performs the imaging guidance output processing for second 3D modeling 105, the second information processing device may perform the second imaging of the second 3D data generation processing 104 described above. The configuration of the second information processing device in that case is also similar to the case described above in <2. Imaging control>. Then, the second information processing device may further perform the second 3D modeling processing described above. The configuration of the second information processing device in that case is also similar to the case described above in <2. Imaging control>.

Furthermore, imaging timing information indicating the timing of the manual imaging may be generated in the second information processing device and supplied to the first information processing device. The configuration of the second information processing device in that case is also similar to the case described above in <2. Imaging control>.

Furthermore, the camera information regarding the second imaging unit may be reflected in the scoring processing 102. The configuration of the second information processing device in that case is also similar to the case described above in <2. Imaging control>.

<4. Combination>

<Combination of imaging control and guidance information output>

Note that, in Fig. 4, both the imaging control processing for second 3D modeling 103 and the imaging guidance output processing for second 3D modeling 105 may be performed. It is possible for the user to perform, by performing both the imaging control and the guidance information output, the second imaging in an appropriate position and orientation more easily.

For example, the first information processing device described above in <2. Imaging control> may further include a guidance information output control unit that generates guidance information for the second imaging of imaging the 3D object on the basis of the scoring result. In this case, the guidance information output control unit performs similar processing to the case described above in <3. Imaging guidance output>.

Furthermore, the first information processing device described above in <3. Imaging guidance output> may further include an imaging control unit that controls the second imaging of imaging the 3D object on the basis of the scoring result. In this case, the imaging control unit performs similar processing to the case described above in <2. Imaging control>.

<5. Imaging parameter control processing>

<Reduction of quality of 3D model>

Meanwhile, as described above, in a case where 3D modeling is performed on the basis of a captured image such as real-time 3D modeling or photogrammetry, imaging for generating the captured image is controlled by an imaging parameter set for the imaging unit. The imaging parameters can include various parameters such as a parameter related to focus position control, a parameter related to diaphragm control, a parameter related to camera shake correction, a parameter related to exposure control, a parameter related to shadow correction, and a parameter related to color matching. By applying such various parameters, the imaging unit can generate captured images with various settings. In general, such imaging parameters are set such that the captured image becomes a more appropriate image as one two-dimensional image.

However, settings suitable as two-dimensional images are not always suitable for 3D modeling. Therefore, in imaging for generating a captured image used for 3D modeling, if an imaging parameter for controlling the imaging is not appropriate for 3D modeling, quality of a 3D model generated by photogrammetry may be reduced.

For example, since 3D modeling is performed using a plurality of captured images, when imaging parameters change between the captured images, there is a possibility that consistency in appearance (color tone, brightness, and the like) of texture generated from each captured image cannot be maintained. As a result, for example, there is a possibility that the subjective image quality of the 3D model is reduced, such as a change in the color and brightness of the texture in a portion of the 3D model where the texture is originally uniform.

On the other hand, a method of fixing the imaging parameter so that the imaging parameter does not change between the captured images is considered. However, in a natural environment, the illumination environment generally changes at all times, and the light amount changes at all times. Furthermore, the light amount greatly changes between a case where the light source enters the angle of view and a case where the light source does not enter the angle of view. Therefore, if the imaging parameter is fixed, there is a possibility that the color tone, brightness, and the like change between the captured images without being able to cope with this change. Therefore, similarly to the above example, the appearance consistency of the texture generated from each captured image cannot be maintained, and the subjective image quality of the 3D model may be reduced.

Furthermore, in general, a 3D object that is a three-dimensional object has a portion that receives light and a portion that becomes a shadow due to an illumination environment. When 3D modeling is performed using a captured image in which contrast occurs due to such an illumination environment, there is a possibility that the contrast is applied to the texture of the 3D model. That is, there is a possibility that a shadow generated under a certain illumination environment is generated in the texture, and a visual effect in which the 3D model appears to exist under the illumination environment is generated.

In recent years, various processing processes can be performed on 3D models. For example, a virtual illumination environment is set, and processing such as casting a shadow on the texture of the 3D model can be performed so that the 3D model appears to exist in the virtual illumination environment. However, as described above, since the contrast due to a specific illumination environment is applied to the texture of the 3D model, there is a possibility that processing for changing such an illumination environment becomes difficult. That is, there is a possibility that the degree of freedom in editing the 3D model (editability, usability, and ease of use) is reduced.

Note that, as described in Non-Patent Document 1, there is a method of performing processing of removing a shadow or the like on a 3D model. However, in the case of this method, the texture of the 3D model is edited. The texture of the 3D model generally has a smaller bit depth and a lower gradation than that of the captured image used for 3D modeling. Therefore, when the brightness is increased so as to remove the shadow portion, there is a possibility that the subjective image quality of the texture is reduced, such as noise is generated due to insufficient gradation.

Furthermore, complicated work such as designation of a portion to be manually processed (for example, a shadow portion or the like) by a user or the like is required. Therefore, it is difficult to apply to 3D modeling (increment processing to be described later) performed using images captured up to that time during imaging work.

Furthermore, the designation of the brightness after processing can be performed only by selection from the binary of light and dark, and there is a possibility that a correction residue will occur. That is, it is difficult to sufficiently remove the illumination environment component from the texture of the 3D model. Therefore, there is a possibility that the degree of freedom in editing the 3D model is reduced.

<Imaging control for 3D modeling>

Therefore, imaging for generating a captured image used for 3D modeling is controlled so that a more appropriate image for 3D modeling can be obtained. That is, the imaging parameter applied to the imaging is controlled so that the value is appropriate for 3D modeling. For example, as illustrated in Fig. 4, imaging parameter control processing 106 is executed to control the imaging parameter applied to the second imaging unit (second imaging). That is, in the imaging parameter control processing 106, the imaging parameter applied in the second 3D data generation processing 104 is controlled on the basis of the orientation information generated in the first 3D data generation processing 101 and the first 3D data.

Note that here, the first 3D data is 3D data generated in the first 3D data generation processing 101. The 3D model corresponding to the first 3D data is also referred to as a first 3D model. The first 3D modeling is 3D modeling that generates its first 3D data (first 3D model), which is performed in the first 3D data generation processing 101. The first captured image is a captured image used for its first 3D modeling. The first imaging is imaging for generating the first captured image. The first imaging unit is an imaging unit that performs the first imaging.

Furthermore, the second 3D data is 3D data generated in the second 3D data generation processing 104. The 3D model corresponding to the second 3D data is also referred to as a second 3D model. The second 3D modeling is 3D modeling that generates its second 3D data (second 3D model), which is performed in the second 3D data generation processing 104. The second captured image is a captured image used for its second 3D modeling. The second imaging is imaging for generating the second captured image. The second imaging unit is an imaging unit that performs the second imaging.

The orientation information used in the imaging parameter control processing 106 is information (alternatively, information for deriving the position and orientation of the second imaging unit) indicating the position and orientation of the second imaging unit that generates the second captured image applied to the second 3D modeling that generates the second 3D data. However, the orientation information generated in the first 3D data generation processing 101 is information indicating the position and orientation of the first imaging unit that generates the first captured image applied to the first 3D modeling that generates the first 3D data. This orientation information may be applied to the imaging parameter control processing 106 as information indicating the position and the orientation of the second imaging unit. For example, the first imaging unit and the second imaging unit may be the same imaging unit. Furthermore, the position and orientation of the first imaging unit and the position and orientation of the second imaging unit may be considered to be the same. Furthermore, in a stage applied to the imaging parameter control processing 106, orientation information indicating the position and orientation of the first imaging unit may be converted (calibrated) into information indicating the position and orientation of the second imaging unit. For example, by reflecting a difference in position and orientation between the first imaging unit and the second imaging unit, orientation information indicating the position and orientation of the first imaging unit may be applied to the imaging parameter control processing 106 as information indicating the position and orientation of the second imaging unit.

Furthermore, the first 3D data used in the imaging parameter control processing 106 may have any format as long as the first 3D data can express the three-dimensional shape of the 3D object. For example, the point cloud may be a mesh (polygon) or a point cloud.

That is, the imaging parameter control processing 106 controls the imaging parameter such that the value is more appropriate for the second 3D modeling on the basis of the position and orientation of the second imaging unit that performs the second imaging and the three-dimensional shape of the 3D object to be the subject of the second imaging.

By doing so, in the second imaging, the imaging parameter of a more appropriate value is applied to the second 3D modeling, and the second imaging is performed. Therefore, the second 3D modeling is performed using the second captured image that is more suitable for the second 3D modeling, and the second 3D data (second 3D model) is generated. Therefore, a reduction in the quality of the second 3D data (second 3D model) can be suppressed.

<Detection region>

For example, similarly to general automatic exposure (AE), automatic focus (AF), automatic white balance (AWB), and the like, for example, information such as a distance, a light amount, a color, and the like is collected in order to control the imaging parameter. A target region for collecting information for controlling the imaging parameter within the angle of view is also referred to as a detection region.

The detection region may be set in any manner. For example, the detection region may be set so as to be a more appropriate region for the second 3D modeling on the basis of the orientation information and the first 3D data described above.

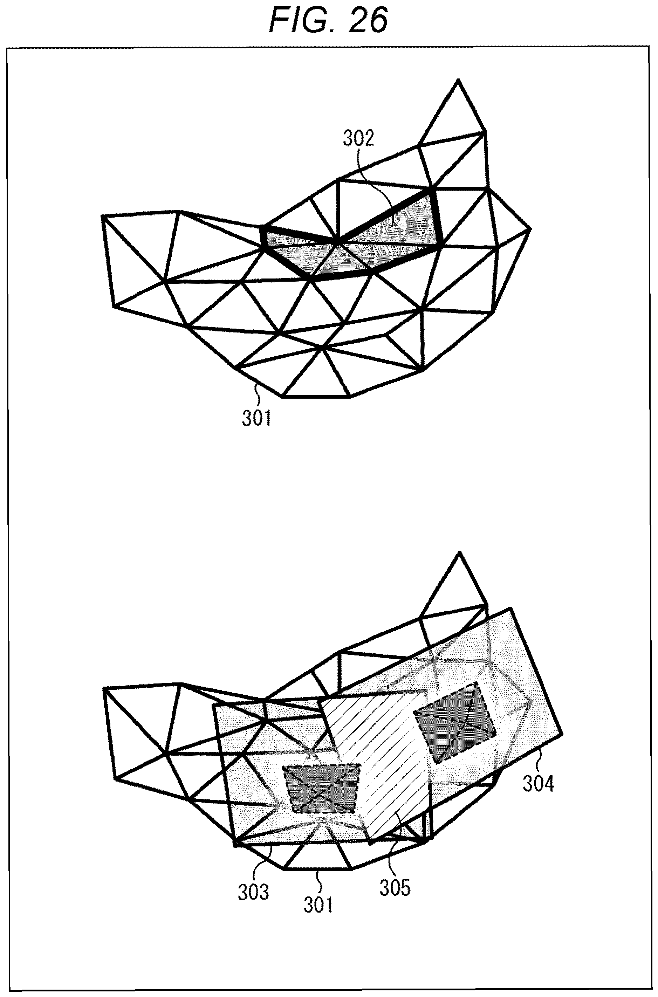

For example, as in the example illustrated in the upper side of Fig. 26, a region of the 3D object to be the subject of the second imaging, the region directly facing the second imaging unit, may be set as the detection region. In the case of the example illustrated on the upper side of Fig. 26, a region 302 directly facing the second imaging unit is set as the detection region on the basis of the relationship in position and orientation between the 3D model 301 and the second imaging unit. By doing so, the exposure and white balance of the region actually used as the texture can be made appropriate. These are continuously repeated to obtain an actual 3D object shape.

Furthermore, as in the example illustrated on the lower side of Fig. 26, a region (also referred to as an overlap region) overlapping between the current angle of view of the second imaging unit and the angle of view of the second captured image captured so far may be set as the detection region. In the case of the example illustrated on the lower side of Fig. 26, an overlap region 305 (shaded portion) between the current angle of view 303 of the second imaging unit and the angle of view 304 of the second captured image obtained in the past is set as the detection region. In the second 3D modeling, matching between the second captured images is performed in the overlap region in order to restore the three-dimensional shape. Therefore, by setting the overlap region as the detection region and controlling the imaging parameter on the basis of the information of the overlap region, the second captured image more appropriate for this matching can be obtained.

In this manner, by setting the detection region so as to be a more appropriate region for the second 3D modeling, it is possible to suppress a decrease in quality of the second 3D data (second 3D model).

<Imaging parameter>

The imaging parameter to be controlled may be any parameter as long as the parameter is related to imaging. Furthermore, the number of imaging parameters to be controlled may be any number, and may be singular or plural.

<Focus control parameter>

For example, the imaging parameter to be controlled may include a focus control parameter for controlling the focus position. As a result, more appropriate focus control can be performed for the second 3D modeling, and a reduction in the quality of the second 3D data (second 3D model) can be suppressed.

For example, the focus position may be predicted on the basis of orientation information (also referred to as position and orientation information) obtained by the first 3D modeling and first 3D data (also referred to as first three-dimensional shape information), and the prediction result may be reflected in the focus control parameter. For example, the focus position in the current frame may be predicted on the basis of the position and orientation of the second imaging unit in the past frame and the three-dimensional shape of the 3D object that is the subject, and the prediction result may be reflected in the focus control parameter.

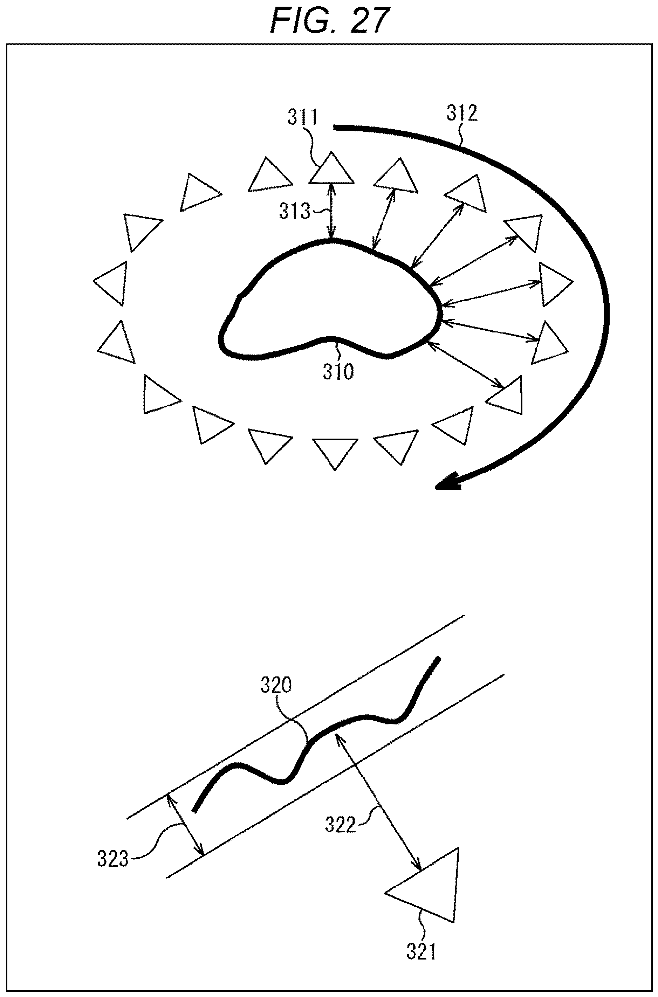

For example, as in the example illustrated in the upper side of Fig. 27, it is assumed that the second imaging unit performs the second imaging on the 3D object 310 at the position and orientation of the imaging point 311 while moving as indicated by an arrow 312. In Fig. 27, the positions and orientations of triangles of the imaging points 311 indicate the imaging positions and the imaging orientations (orientations). Furthermore, in the upper side of Fig. 27, only one triangle is denoted by a reference sign, but all triangles illustrated around the 3D object 310 are the imaging points 311 (at each time). By continuously performing the first 3D data generation processing 101, the movement (change in position and orientation) of the imaging point 311 up to the present becomes known. Therefore, the position and orientation of the imaging point 311 in the next frame can be predicted on the basis of the movement. That is, the distance 313 between the imaging point 311 and the 3D object 310 in the next frame can be predicted. That is, the focus position in the next frame can be predicted. Therefore, on the basis of the prediction result, the position of the focus lens can be moved such that the actual focus position matches the predicted focus position. Note that the focus lens is a lens for adjusting a focus position. By controlling the position of the focus lens in this manner and then performing conventional autofocus processing (control of the focus position), it is possible to focus at a higher speed (suppress an increase in time until focusing). Furthermore, in the autofocus process, scanning in an unnecessary range (movement of the focus lens) can be suppressed, so that focusing can be performed at a correct position with higher accuracy. That is, in the case of the example illustrated on the upper side of Fig. 27, the 3D object 310 can be focused at a higher speed and with higher accuracy. Therefore, in the second 3D modeling, a higher definition texture can be obtained, and a reduction in quality of the second 3D data (second 3D model) can be suppressed.

Note that, in the case of general autofocus, the focus position is simply controlled on the basis of the distance to the subject within the angle of view. Therefore, in a case where the detection region is set as the overlap region between the current angle of view of the second imaging unit and the past frame (for example, the previous frame) as described above, it may be difficult to focus on the overlap region in the general autofocus. On the other hand, as described above, the focus position is predicted on the basis of the orientation information and the first 3D data, and the focus control parameter is controlled on the basis of the prediction result, whereby the overlap region can be easily focused.

The focus control parameter may be any parameter as long as it is a parameter for controlling the focus. For example, the focus control parameter may include a command value of the focus lens position. The command value of the focus lens position is a control value for setting the position of the focus lens.

<Diaphragm control parameter>

For example, the imaging parameter to be controlled may include a diaphragm control parameter for controlling a diaphragm (depth of field). The diaphragm is a shield used to adjust the amount of light passing through. The diaphragm of the diaphragm is variable in size, and the amount of passing light (that is, the amount of incident light to the imaging unit (imaging element)) is adjusted by the size of the diaphragm. As a result, more appropriate diaphragm control can be performed for the second 3D modeling, and a decrease in quality of the second 3D data (second 3D model) can be suppressed.

For example, an appropriate depth of field may be predicted on the basis of the orientation information obtained by the first 3D modeling and the first 3D data, and the prediction result may be reflected in the diaphragm control parameter. For example, an appropriate depth of field in the current frame may be predicted on the basis of the position and orientation of the second imaging unit in the past frame and the three-dimensional shape of the 3D object that is the subject, and the prediction result may be reflected in the diaphragm control parameter.

For example, as in the example illustrated on the lower side of Fig. 27, it is assumed that the second imaging unit images the 3D object 320 from the imaging point 321. Then, it is assumed that the focus position 322 is controlled as described above.

In this case, since the shape of the front face of the 3D object 320 is known from the first 3D data (first 3D model), the diaphragm (depth of field) can be controlled such that (the unevenness of) the surface of the 3D object in the detection region is entirely within the focusing range 323. That is, by controlling the diaphragm in this manner, it is possible to obtain a higher definition texture in the second 3D modeling, and it is possible to suppress a decrease in quality of the second 3D data (second 3D model).

The diaphragm control parameter may be any parameter as long as it is a parameter for controlling a diaphragm (depth of field). For example, the diaphragm control parameter may include a command value of a diaphragm position. The command value of the diaphragm position is a control value for setting the size of the diaphragm of the diaphragm.

<Camera shake correction control parameter>

For example, the imaging parameter to be controlled may include a camera shake correction control parameter for controlling camera shake correction. As a result, more appropriate camera shake correction control can be performed for the second 3D modeling, and a reduction in the quality of the second 3D data (second 3D model) can be suppressed.

For example, the motion of the second imaging unit may be estimated on the basis of the orientation information obtained by the first 3D modeling and the first 3D data, and the estimation result may be reflected in the camera shake correction control parameter. For example, the moving speed of the second imaging unit and the three-dimensional subject position in the next frame can be predicted on the basis of the position and orientation of the second imaging unit in the past frame and the three-dimensional shape of the 3D object that is the subject.

On the basis of the prediction result, for example, the correction speed at the time of correction may be optimized for the movement of the 3D object with respect to the second imaging unit. Such control can further increase the effect of the camera shake correction.

Furthermore, for example, before the next shooting, the position of the correction lens or the imager (imaging element) of the second imaging unit may be returned to the position where the correction lens or the imager can be used to the maximum on the basis of the prediction result. The correction angle can be maximized by such control.

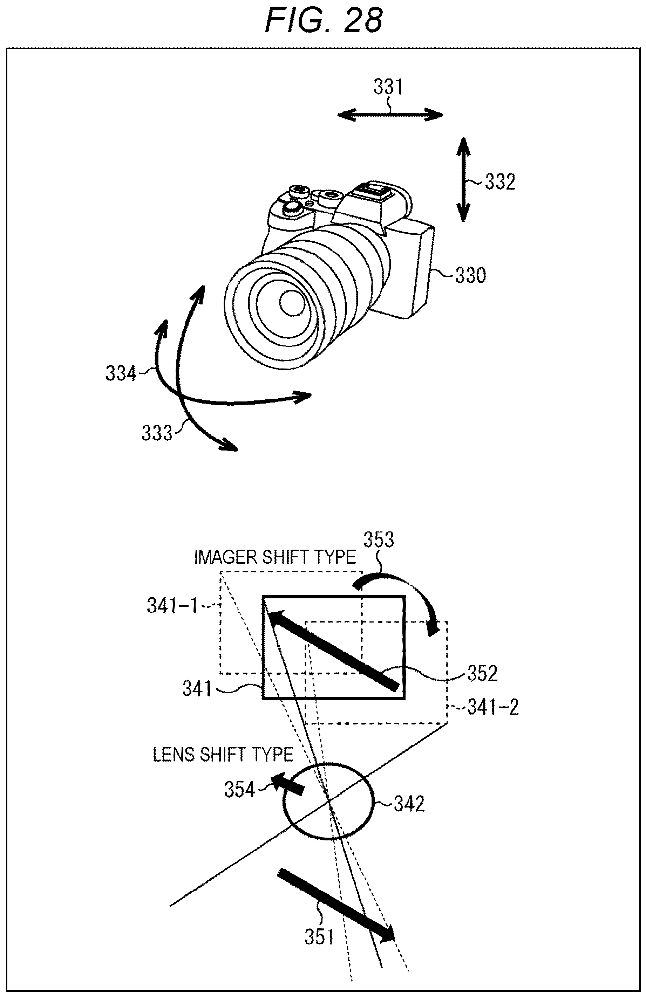

As illustrated on the upper side of Fig. 28, camera shake of the imaging device 330 generally occurs as movement in a horizontal direction (double-headed arrow 331), a vertical direction (double-headed arrow 332), a rotation direction (double-headed arrow 333 and double-headed arrow 334), and the like. The camera shake correction is a technique for suppressing occurrence of blurring of the captured image due to such movement of the imaging device 330. As illustrated on the lower side of Fig. 28, there are an imager shift method of moving the imager (imaging element) 341 and a lens shift method of moving the camera shake correction lens 342 for the camera shake correction.

For example, in the case of the imager shift method, when the 3D object moves as indicated by an arrow 351 with respect to the imaging device 330, the imager 341 moves as indicated by an arrow 352 by the camera shake correction function. For example, in the direction of the arrow 352, it is assumed that the movable range of the imager 341 is from the imager 341-2 to the imager 341-1. Then, it is assumed that the position of the imager 341 is the imager 341-1 at the time when a certain imaging is completed. In this state, since the imager 341 cannot move in the direction of the arrow 352 anymore, the effect of the camera shake correction cannot be enhanced.

Therefore, the imager 341 is moved to the position of the imager 341-2 before the next imaging (arrow 353). In this way, during the next imaging, the imager 341 can be moved from the imager 341-2 to the imager 341-1, so that the effect of the camera shake correction with respect to the direction of this arrow 352 can be maximized.

The similarity applies to the case of the lens shift method. When the 3D object moves with respect to the imaging device 330 as indicated by an arrow 351, the camera shake correction lens 342 moves as indicated by an arrow 354 by the camera shake correction function. Therefore, the effect of the camera shake correction in the direction of the arrow 354 can be maximized by moving the camera shake correction lens 342 in the opposite direction before the next imaging.

As described above, the movement of the camera shake correction is optimized for 3D modeling on the basis of the position and orientation of the second imaging unit and the shape of the 3D object, whereby the effect of the camera shake correction is further enhanced. That is, since blurring due to camera shake at the time of imaging is less likely to occur, the shutter speed can be made slower, and the exposure time can be made longer. Therefore, a reduction in the image quality of the second captured image is suppressed. That is, by controlling the camera shake correction in this way, it is possible to obtain a higher definition texture in the second 3D modeling, and it is possible to suppress a reduction in the quality of the second 3D data (second 3D model).

The camera shake correction control parameter may be any parameter as long as it is a parameter for controlling the camera shake correction. For example, in a case where the camera shake correction is performed by the imager shift method, the camera shake correction control parameter may include an imager shaft position that is a control value for setting the position of the imager (imaging element). Furthermore, in a case where the camera shake correction is performed by the lens shift method, the camera shake correction control parameter may include a camera shake correction lens position that is a control value for setting the position of the camera shake correction lens.

<Exposure control parameter>

For example, the controlled imaging parameter may include an exposure control parameter for controlling exposure. Thereby, more appropriate exposure control can be performed for the second 3D modeling, and a reduction in the quality of the second 3D data (second 3D model) can be suppressed.

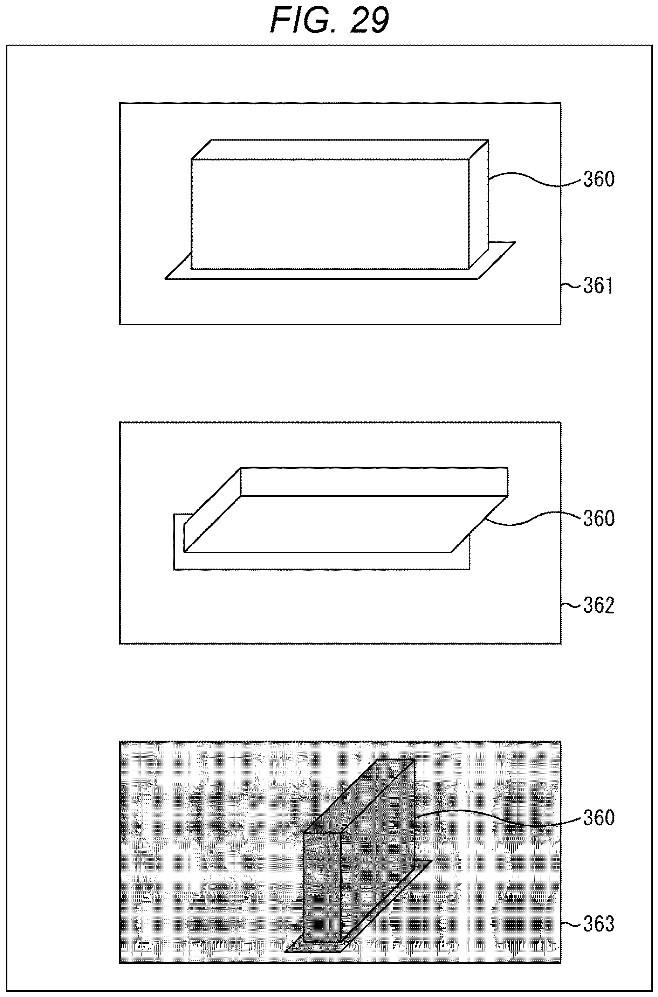

A general AE is optimized in its captured image, and the range of the detection region and the like are not considered for use in 3D modeling. Therefore, the exposure of the subject is not necessarily constant in all captured images used for 3D modeling. For example, in Fig. 29, captured images 361 to 363 are captured images obtained by imaging the 3D object 360 from different imaging points. That is, although these captured images are images of the same subject in the same space, captured image 363 is darker than captured image 361 and captured image 362 as illustrated in Fig. 29. That is, the exposure amount of the captured image 363 is set to be smaller than that of the other captured images. When the exposure is controlled by the AE to capture an image, the exposure amount may change depending on the position and orientation of the imaging. For example, in a case where there is a light source such as the sun or a lighting facility, the exposure amount may greatly change depending on whether the light source enters the angle of view or does not enter the angle of view.

In this way, when 3D modeling is performed using the captured images 361 to 363 of the exposure amounts independently set for each imaging, for example, there is a possibility that the texture generated using the captured image 363 becomes darker than the texture generated using the captured image 361 or the captured image 362. That is, there is a possibility that the brightness consistency of the texture generated from each captured image cannot be maintained. As a result, there is a possibility that the subjective image quality of the 3D model is reduced, for example, the brightness of the texture changes in a portion of the 3D model where the texture is originally uniform.

On the other hand, a method of fixing the imaging parameter so that the imaging parameter does not change between the captured images is considered. However, in a natural environment, the illumination environment generally changes at all times, and the light amount changes at all times. Furthermore, as described above, the light amount greatly changes between a case where the light source enters the angle of view and a case where the light source does not enter the angle of view. Therefore, when the imaging parameter is fixed, there is a possibility that brightness changes between captured images without being able to cope with this change. Therefore, similarly to the above example, the appearance consistency of the texture generated from each captured image cannot be maintained, and the subjective image quality of the 3D model may be reduced.

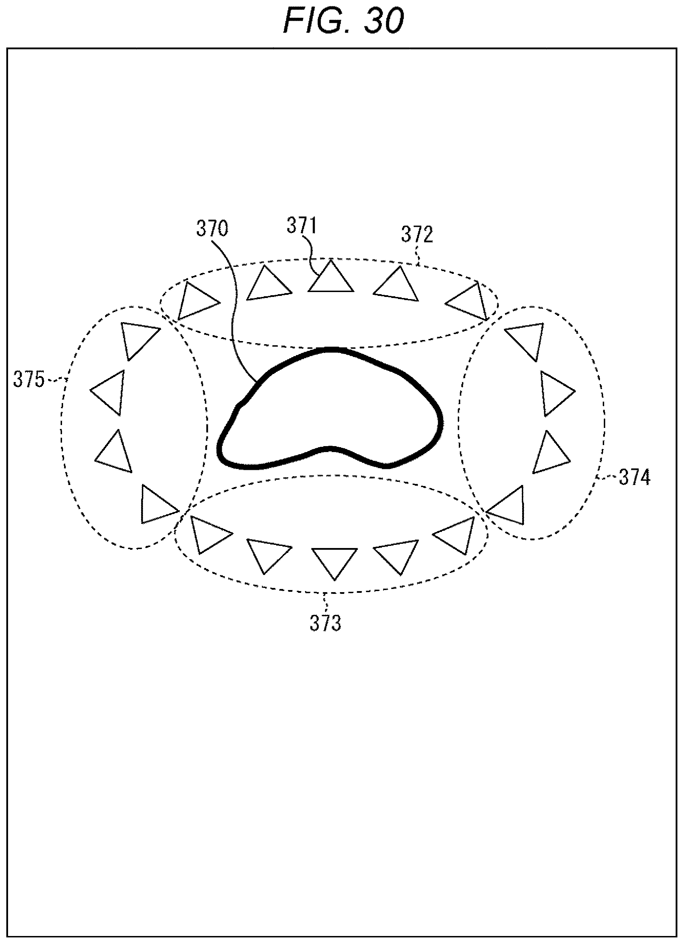

Therefore, the exposure is controlled according to the movement amount of the second imaging unit and the shape of the 3D object that is the subject. For example, in Fig. 30, it is assumed that a 3D object 370 is a subject, and imaging for generating a captured image used for 3D modeling for generating a 3D model of the 3D object 370 is performed from an imaging point 371. Note that, in Fig. 30, only one triangle is denoted by a reference sign, but all triangles surrounding the 3D object 370 are the imaging points 371. That is, imaging is performed from a plurality of imaging points so as to surround the 3D object 370.

In such a case, for example, an imaging point 371 surrounded by a dotted line 372 and a dotted line 373 captures an image of a portion having a relatively simple shape of the 3D object 370, and the amount of change in orientation is small with respect to the amount of change in position between the imaging points 371. Since the shape is simple, it can be estimated that there is little change in how light strikes the 3D object 370. Furthermore, since the change in the imaging direction is small, it can be estimated that the change in the illumination environment (For example, the possibility that the light source enters or leaves the angle of view.) is small. Therefore, control is performed so as to suppress a significant change in the exposure amount between these imaging points 731. That is, on the basis of the orientation information and the first 3D data (3D model), a portion in which the shape of the 3D object as the subject is relatively simple is imaged, and a significant change in the exposure amount is suppressed in the imaging of the imaging point where the change amount of the orientation is small with respect to the change amount of the position. That is, the control amount of the exposure (exposure control parameter) is suppressed.

On the other hand, for example, an imaging point 371 surrounded by a dotted line 374 and a dotted line 375 captures an image of a portion where the shape of the 3D object 370 is relatively complicated, and the amount of change in orientation is large with respect to the amount of change in position between the imaging points 371. Since the shape is complex, it can be estimated that the change in how light strikes the 3D object 370 is large. That is, it is estimated that there is a high possibility that there are a bright portion directly hit by light and a shadow portion. Furthermore, since the imaging direction is greatly changed, it can be estimated that the change in the illumination environment (For example, the possibility that the light source enters or leaves the angle of view.) is large. Therefore, control is performed so as not to suppress a significant change in the exposure amount between these imaging points 731. That is, on the basis of the orientation information and the first 3D data (3D model), a portion in which the shape of the 3D object as the subject is relatively complicated is imaged, and a large change in the exposure amount is allowed for imaging of an imaging point where the change amount of the orientation is large with respect to the change amount of the position. That is, the control amount of the exposure (exposure control parameter) is not suppressed.

For example, an allowable amount of exposure change may be derived on the basis of the orientation information generated by the first 3D data generation processing 101 and the first 3D data, and the exposure control parameter may be controlled so that the exposure change amount is less than or equal to the allowable amount.

By doing so, imaging can be performed so that brightness consistency can be maintained in the texture generated from each captured image in 3D modeling. Therefore, it is possible to suppress a reduction in the subjective quality of the 3D model.

For example, an allowable amount of the exposure change amount of the entire image may be set on the basis of the position and orientation of the second imaging unit and the shape of the 3D model, and the exposure of the detection region may be controlled so that the exposure change amount of the entire image is within the allowable amount. Although it is desirable that the detection region is properly exposed, if the exposure is adjusted only in the detection region, the exposure of the entire screen becomes inappropriate, which may adversely affect the SfM processing for detecting the overlap and the use of the texture. Therefore, as described above, the exposure control parameter is controlled such that the exposure change of the entire screen is equal to or less than the allowable value while the proper exposure of the detection region is adjusted. By controlling the exposure in this manner, the dynamic range of the image used for SfM and MVS can be maximized, and the accuracy and robustness of the three-dimensional shape restoration can be improved.

Note that a part where the shape of the 3D object is relatively simple may be imaged, a part where the shape of the 3D object is relatively complicated may be imaged without suppressing the exposure change amount (exposure control amount) in a case where the change amount of the orientation is small with respect to the change amount of the position, and the exposure change amount (exposure control amount) may be increased in a case where the change amount of the orientation is large with respect to the change amount of the position. Furthermore, a portion where the shape of the 3D object is relatively simple may be imaged, the exposure change amount (exposure control amount) may be suppressed in a case where the change amount of the orientation is small with respect to the change amount of the position, a portion where the shape of the 3D object is relatively complicated may be imaged, and the exposure change amount (exposure control amount) may be increased in a case where the change amount of the orientation is large with respect to the change amount of the position.

Furthermore, the control of the exposure (exposure control parameter) may be a binary value of controlled or not controlled (gain is applied or not applied), or the exposure control amount (gain value) may be set according to the complexity of the shape of the 3D object or the change amount of the imaging orientation. The change in the exposure control amount in that case may be linear or non-linear. Moreover, the exposure (exposure control parameter) may be controlled in consideration of other conditions (an exposure control amount may be set). This "other conditions" may be any condition. For example, a change in a light source (change in illumination environment), a luminance histogram, a detection result of overexposure, a detection result of underexposure, a detection result of a region having a specific luminance value or more, a detection result of a region having a specific luminance value or less, or the like may be included in the "other conditions". Furthermore, a combination of a plurality of conditions may be included in the "other conditions".

Note that the exposure control parameter may be any parameter as long as it is a parameter for controlling exposure. For example, the exposure control parameter may include an analog gain value for controlling the exposure amount. Furthermore, the exposure control parameter may include a digital gain value for controlling the exposure amount. Furthermore, the exposure control parameter may include a shutter speed for controlling the exposure time. Furthermore, the exposure control parameter may include a command value of a diaphragm position. Furthermore, the exposure control parameter may include a variable neutral density (ND) filter setting value. The ND filter is a filter that suppresses the amount of light incident on the imaging unit. The variable ND filter is a filter whose light transmittance is variable. The variable ND filter control value is a control value for setting the light transmittance. Furthermore, the exposure control parameter may include a strobe light emission control value. The strobe is a light emitting device mainly used for photo imaging (also referred to as electronic flash or flash). The strobe light emission control value is a control value for setting a light emission amount of the strobe.

<Shadow correction parameter>

For example, the controlled imaging parameter may include a shadow correction parameter for performing shadow correction. The shadow correction refers to a measure for suppressing brightness/darkness (generation of a so-called shadow) generated on the surface of the 3D object as a subject due to an illumination environment (light source or the like). This shadow correction may be performed by, for example, image processing, or may be performed by devising an imaging method (for example, exposure control). The shadow correction parameter is a parameter for controlling imaging such that shadow correction is performed.

Generally, in a captured image used for 3D modeling, when a bright and dark portion due to an illumination environment (light source) occurs in a 3D object that is a subject (that is, when a so-called shadow occurs), the bright and dark portion may remain in the texture of the 3D model. When the contrast due to a specific illumination environment is applied to the texture in this manner, there is a possibility that the 3D model appears to exist in the illumination environment. In other words, it may be difficult to make the 3D model appear to exist in other lighting environments. That is, processing for changing the illumination environment becomes difficult, and there is a possibility that the degree of freedom in editing the 3D model (editability, usability, and ease of use) is reduced (reusability as a 3D model asset is reduced).

Note that there has been a method of reducing contrast due to an illumination environment by performing cross-polarization imaging using a large amount of flash and a polarizing plate. Cross-polarization imaging is an imaging method in which polarized light that is much stronger than surrounding light sources is applied to a subject, a specular reflection component (specular light component) is removed by photographing the reflected light, and a diffuse reflection component (albedo) is extracted as much as possible. By using this method, the influence of the light source can be suppressed. Furthermore, by suppressing the specular component, the MVS processing of the photogrammetry and the physics-based rendering setting in the texture work well, so that a high-quality 3D model can be created.

However, in order to perform sufficiently effective cross-polarization imaging, it is necessary to generate polarized light that is overwhelmingly brighter than the surroundings. Therefore, for example, in order to perform imaging outdoors, a light emitting device with a large amount of light is required. Therefore, there is a possibility that the imaging facility becomes large in size, or the cost and working time increase. Furthermore, in practice, it is difficult to completely prevent the contrast due to a specific illumination environment from being imparted to the texture even if such measures are taken, and the texture is corrected manually.

Therefore, a light source may be estimated, and the shadow correction parameter may be controlled on the basis of light source information indicating the estimated light source, orientation information indicating the position and orientation of the second imaging unit, and first 3D data (first three-dimensional shape information). That is, the shadow correction parameter may be controlled such that a shadow portion due to a specific illumination environment does not occur in the texture of the 3D model (Even if a shadow portion is generated, the amount (density or range) of the shadow portion is further reduced.) on the basis of the position and orientation of the light source, the position and orientation of the imaging point where imaging is performed, and the three-dimensional shape of the 3D object of the subject.

It is possible to more easily and more accurately specify the bright and dark portions (that is, how the light source illuminates the 3D object) of the 3D object on the basis of the position and characteristics (directivity, light quantity, and the like) of the light source and the three-dimensional shape of the 3D object. Therefore, it is possible to more easily and more accurately specify which part of the brightness/darkness the detection region is on the basis of the position, the orientation, and the like of the imaging unit. Therefore, the shadow correction parameter is controlled such that, for example, the difference in brightness/darkness is suppressed according to which part of brightness/darkness the detection region corresponds.

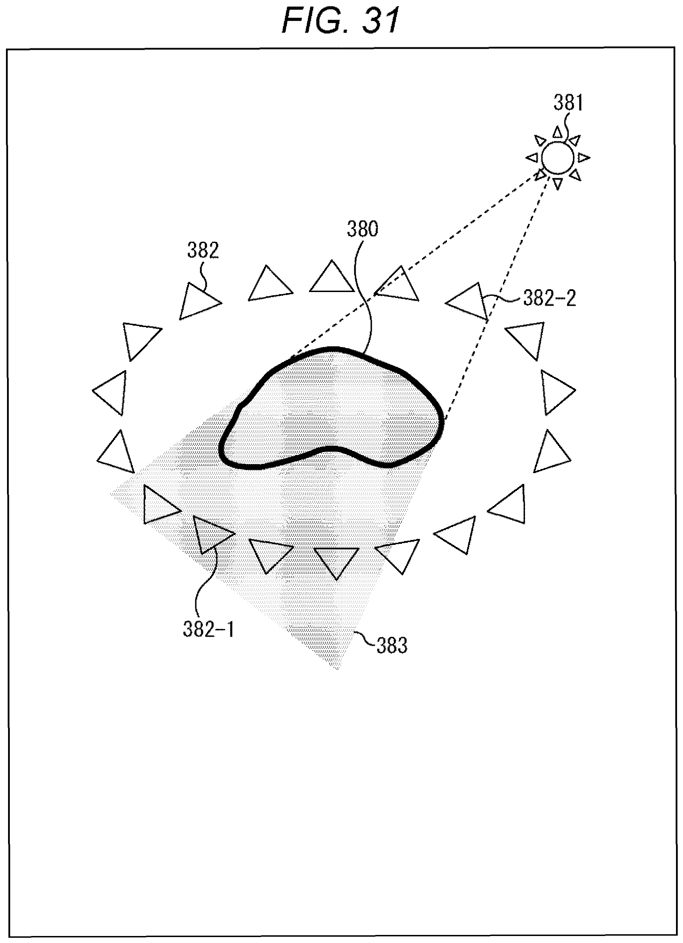

For example, in Fig. 31, it is assumed that a 3D object 380 is a subject, and imaging for generating a captured image used for 3D modeling for generating a 3D model of the 3D object 380 is performed from an imaging point 382. Note that, in Fig. 31, only one triangle is denoted by a reference sign, but all triangles surrounding the 3D object 380 are the imaging points 382. That is, imaging is performed from the plurality of imaging points 382 so as to surround the 3D object 380. Furthermore, a light source 381 exists in this space, and the 3D object 380 is irradiated with light from the light source 381. That is, the shadow portion 383 is formed by the light from the light source 381 and the 3D object 380.

In other words, light and dark portions (so-called shadow portions) are formed on the surface of the 3D object 380 by the light from the light source 381. Therefore, the shadow correction parameter is controlled such that the difference in brightness/darkness is suppressed according to which part of brightness/darkness the detection region corresponds. For example, in a case where imaging is performed from the imaging point 382-1, since the detection region becomes the shadow portion 383, the shadow correction parameter is controlled such that the 3D object 380 becomes brighter in the captured image. Furthermore, in a case where imaging is performed from the imaging point 382-2, since the detection region is a bright portion, the shadow correction parameter is controlled such that the 3D object 380 becomes darker in the captured image.

In this way, it is possible to suppress the provision of contrast by the illumination environment to the texture of the 3D model as compared with a case where imaging is performed by controlling exposure by a general AE or the like. Furthermore, it is possible to more easily and accurately suppress provision of contrast by the illumination environment to the texture of the 3D model than in the case of the cross-polarization imaging described above. Even if the contrast due to the illumination environment is given to the texture, the amount (intensity and range) can be further reduced as compared with those cases.

Note that, although the control of the brightness (exposure) has been described as an example of the control of the shadow correction parameter, the control target is of course arbitrary and is not limited to the brightness. For example, the color tone may be controlled, or other indicators may be controlled. That is, by performing the control as described above, it is possible to suppress application of a shadow portion due to a specific illumination environment to the texture of the 3D model. Even if a shadow portion is generated, the amount (density or range) can be further reduced. Therefore, it is possible to suppress a reduction in the degree of freedom in editing the 3D model (editability, usability, and ease of use).

Furthermore, the control of the shadow correction parameter may be performed in two stages of whether or not the detection region is the shadow portion, or may be performed in more stages. For example, the control amount of the shadow correction parameter may be set according to how much the brightness of the detection region is. The change in the control amount may be linear or non-linear. Furthermore, in a case where the brightness is non-uniform in the detection region, the brightness of any portion may be applied to the setting of the control amount of the shadow correction parameter. For example, a value at an end of the detection region may be applied, or a central value of the detection region may be applied. Furthermore, the brightest value or the darkest value in the detection region may be applied. Furthermore, the control amount of the shadow correction parameter may be set using statistical values of brightness at a plurality of places. For example, the control amount of the shadow correction parameter may be set using an average value, a median value, a total value, a deviation, or the like of the brightness in the detection region. Furthermore, the control amount of the shadow correction parameter may be set by applying a plurality of values among the above-described values. Furthermore, the controlled variable of the shadow correction parameter may be set by applying a value other than the above-described value. Moreover, the control amount of the shadow correction parameter may be set in consideration of arbitrary information other than the brightness of the detection region.

Furthermore, any method may be used as a method of estimating the position and characteristics of the light source. For example, the estimation may be performed on the basis of a captured image captured by the imaging unit. Furthermore, a past captured image may be used.

Furthermore, the light source may be estimated on the basis of the detection result of the illumination environment. For example, an illumination environment detection unit that detects an illumination environment of the periphery (space where imaging is performed) may be provided, and the light source may be estimated on the basis of a detection result of the illumination environment by the illumination environment detection unit.

The illumination environment detection unit may include any sensor as long as the sensor can detect the illumination environment. For example, the illumination environment detection unit may include an image sensor that generates a captured image. In other words, the light source may be estimated on the basis of the captured image obtained by the illumination environment detection unit. Furthermore, the illumination environment detection unit may include an image sensor having a wider viewing angle than a general image sensor. In other words, the light source may be estimated on the basis of the captured image having the wide viewing angle obtained by the illumination environment detection unit.

For example, the viewing angle of the image sensor having the wide viewing angle may be hemispherical. That is, the captured image generated by the image sensor having the wide viewing angle may be a hemispherical image having a hemispherical viewing angle. In other words, the light source may be estimated on the basis of the hemispherical image.

Furthermore, the viewing angle of the image sensor having the wide viewing angle may be spherical. That is, the captured image generated by the image sensor having the wide viewing angle may be an omnidirectional image having a spherical viewing angle. In other words, the light source may be estimated on the basis of the omnidirectional image.

Furthermore, the illumination environment detection unit may detect the illumination environment in the upward direction of the imaging unit. For example, the illumination environment detection unit may include an image sensor that is installed above the imaging unit and captures an image in an upward direction. In other words, the light source may be estimated on the basis of the detection result of the illumination environment in the upward direction of the imaging unit.

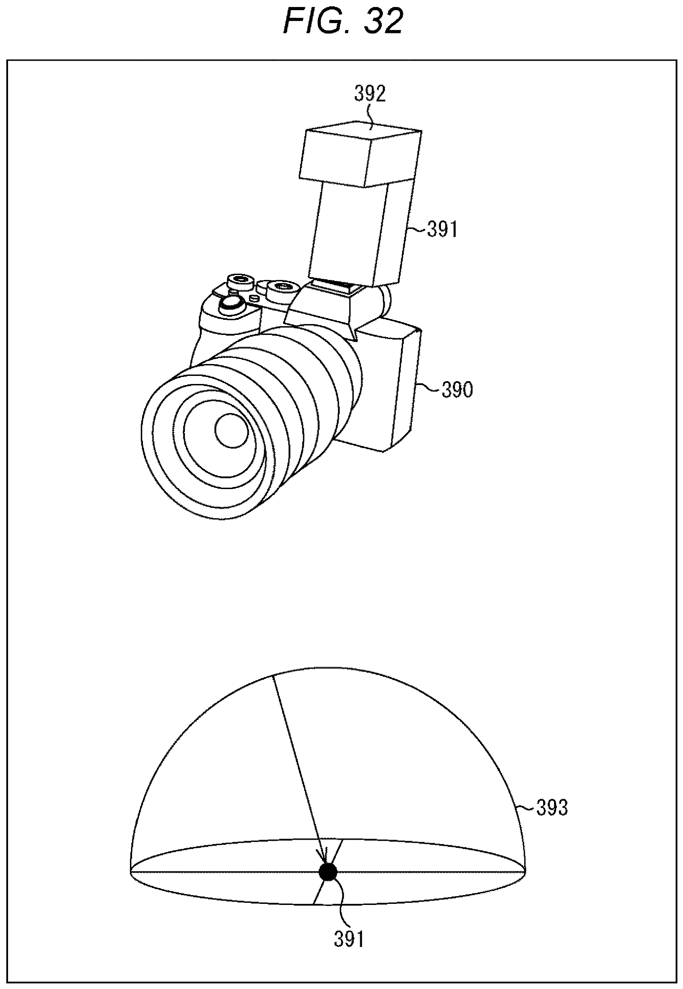

For example, as illustrated in the upper side of Fig. 32, a module 391 having an illumination environment detection unit may be attached (installed) to the imaging device 390, and the surrounding illumination environment may be detected by the module 391. For example, an image sensor (upward camera 392) having a wide viewing angle may be provided on the upper surface of the module 391, and the light source may be estimated on the basis of a captured image (wide viewing angle image) captured by the upward camera 392.

Note that the direction in which the illumination environment detection unit detects the illumination environment is not limited to the upward direction of the imaging unit, and may be any direction. For example, the illumination environment detection unit may detect the illumination environment in the downward direction of the imaging unit. For example, the illumination environment detection unit may be installed downward of the imaging unit and include an image sensor that images the downward direction. In other words, the light source may be estimated on the basis of the detection result of the illumination environment in the downward direction of the imaging unit.

Furthermore, the illumination environment detection unit may detect the illumination environment in multiple directions. For example, the illumination environment detection unit may include a plurality of image sensors that capture images in different directions. For example, the illumination environment detection unit may include a first image sensor that is installed upward of the imaging unit and captures an image in an upward direction, and a second image sensor that is installed downward of the imaging unit and captures an image in a downward direction. In other words, the light source may be estimated on the basis of the detection result of the illumination environment in the upward direction of the imaging unit and the detection result of the illumination environment in the downward direction of the imaging unit. Of course, the direction of the combination of the detection results (the installation direction of the plurality of image sensors) is not limited to this example, and the detection results in arbitrary directions may be combined. Furthermore, detection results in three or more directions may be combined. Furthermore, the detection direction of the illumination environment by the illumination environment detection unit may be variable (movable).

Note that the light source estimation method may be any method. For example, a light source may be detected in a captured image obtained by the illumination environment detection unit, and a direction on the celestial sphere 393 illustrated on the lower side of Fig. 32 may be estimated. Furthermore, the direction and position of the light source at a short distance may be estimated from the imaging unit. Furthermore, the intensity (light intensity) of the light source may also be estimated. Furthermore, the color temperature (peripheral color temperature) of the ambient light may be estimated.

As described above, by detecting the illumination environment at the imaging point, it is possible to more accurately estimate the light source that affects the captured image (3D object). Therefore, it is possible to control the shadow correction parameter so as to further suppress the influence (formation of brightness/darkness) on the captured image (3D object) by the light source.

Furthermore, the captured image used for 3D modeling may be associated with the detection result of the illumination environment (or the estimation result of the light source) corresponding to the captured image. The detection result of the illumination environment (or the estimation result of the light source) associated with the captured image is used in subsequent image processing or the like. Note that, in this case, in the captured image used for 3D modeling, the imaging parameter applied to the imaging may be controlled on the basis of the orientation information or the first 3D data, or may not be controlled. For example, they may be stored in a storage unit or the like in an associated state, or may be transmitted to another device via a communication unit or the like. Furthermore, the captured image associated with the detection result of the illumination environment (or the estimation result of the light source) may be encoded by the encoding unit. The detection result of the illumination environment (or the estimation result of the light source) may be used in subsequent image processing.

For example, since the light source is estimated for each captured image, the light source can be estimated more accurately by combining estimation results of the light source for each of a plurality of captured images used for 3D modeling. Moreover, the light source can be estimated more accurately by combining orientation information (the position and orientation of the imaging unit). Using the light source estimated in this manner, shadow correction (removal of a shadow portion) may be performed on the captured image as image processing. Since the estimation result of the light source is more accurate, the shadow portion can be removed more accurately.

Furthermore, by simultaneously performing the self-localization, it is possible to perform positioning at the time of performing exposure bracket imaging or the like for expanding the dynamic range by performing imaging a plurality of times while changing the exposure and using the plurality of captured images as one set. This makes it easier to acquire a high dynamic range image (HDRI) image for image-based lighting (IBL).

Moreover, it is possible to record surrounding light source information by using the information at the time of superimposition with the 3D model, and it is possible to reproduce a real space more easily by reflecting the information in the 3D model.

Note that the shadow correction parameter may be any parameter as long as it is a parameter for shadow correction. For example, the shadow correction parameter may include an analog gain value for controlling the exposure amount. Furthermore, the shadow correction parameter may include a digital gain value for controlling the exposure amount. Furthermore, the shadow correction parameter may include a shutter speed for controlling the exposure time. Furthermore, the exposure control parameter may include a command value of a diaphragm position. Furthermore, the shadow correction parameter may include a variable ND filter setting value. Furthermore, the shadow correction parameter may include a strobe light emission control value.

<Color matching control parameter>

For example, the imaging parameter to be controlled may include a color matching control parameter for controlling color matching. Color matching indicates a measure for suppressing a difference in color tone between images. This color matching may be performed by, for example, image processing, or may be performed by devising an imaging method (for example, white balance control or the like). The color matching control parameter is a parameter for controlling imaging such that color matching is performed.

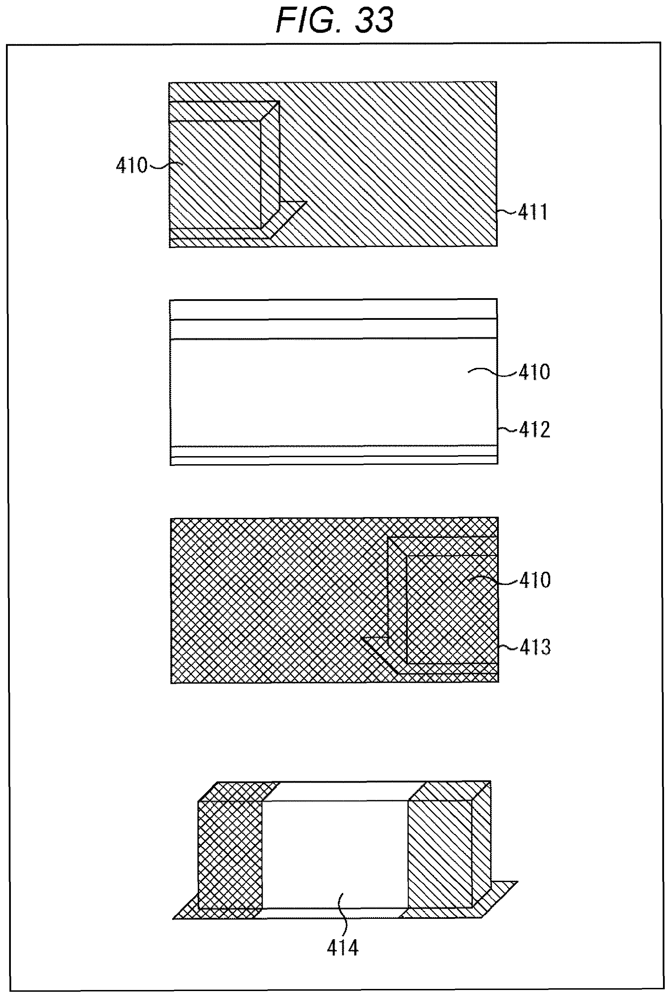

For example, in a case where 3D modeling is performed using a plurality of captured images, there is a possibility that the hue of the texture of the generated 3D model is partially changed due to a difference in white balance and image creation parameters between the captured images even though the hue is originally the same for the same object. For example, in Fig. 33, a captured image 411, a captured image 412, and a captured image 413 are captured images in which a 3D object 410 is captured. These captured images have different colors as illustrated in Fig. 33. The difference in color may be caused by any reason, for example, a change in lighting environment. For any reason, when 3D modeling is performed using captured images having different colors as described above, there is a possibility that the color of the 3D object 410, which is originally uniform, changes for each part in the 3D model 414.

For example, in the case of general imaging, in the AWB, the white balance is adjusted in the one captured image. Therefore, it is difficult to adjust the hue between the plurality of captured images by the AWB. Furthermore, although the white balance can be manually adjusted, it is difficult to manually achieve consistency with the hue of other captured images. Furthermore, a method of fixing the white balance is also conceivable, but there is a possibility that the color tone changes between captured images due to a change in ambient light or the like.

Therefore, the color matching control parameter may be controlled on the basis of the past captured image. That is, the color matching control parameter applied to imaging for obtaining the captured image may be controlled such that the difference in hue between the generated captured image and the past captured image is reduced. By doing so, it is possible to suppress a difference in hue between a plurality of captured images used for 3D modeling. Note that, in the control of the color matching control parameters, orientation information (the position and orientation of the imaging unit), first 3D data (the three-dimensional shape of the 3D object), an estimation result of the light source, and the like may be used. In this way, since the difference in hue between the captured images can be more accurately identified, the difference in hue between the plurality of captured images used for 3D modeling can be further suppressed.

Furthermore, surrounding color information may be detected, and the color matching control parameter may be controlled on the basis of the detection result. For example, a white balance sensor (also referred to as a WB sensor) such as an infrared sensor may be provided, surrounding color information may be detected by the WB sensor, and the color matching control parameter may be controlled on the basis of the detection result. In this way, the ambient environmental light can be more accurately identified, and thus the difference in hue between the captured images can be more accurately identified. Therefore, the difference in hue between the plurality of captured images used for 3D modeling can be further suppressed.

Furthermore, in a case where a plurality of users performs imaging with the imaging devices respectively operated, the plurality of imaging devices may share the color matching control parameter controlled as described above. That is, the same color matching control parameter may be applied to each imaging device. By doing so, color matching between captured images obtained in each imaging device can be realized. Therefore, it is possible to suppress a decrease in the quality of the 3D model generated by 3D modeling using the captured image obtained in each imaging device.

Note that, in the above description, the adjustment of the white balance has been described as an example of the color matching method, but the color matching may be performed with an index other than the white balance. For example, exposure (brightness) may be controlled.

Note that the color matching control parameter may be any parameter as long as it is a parameter for color matching. For example, the color matching control parameter may include a white balance correction gain value for controlling a gain for correcting white balance. Furthermore, the color matching control parameter may include a color matrix coefficient value that specifies a coefficient value of a color conversion matrix (color matrix).

<Effect on increment processing>

By controlling the imaging parameters to obtain the second captured image as described above, it is possible to suppress a reduction in the quality of the 3D model generated by the second 3D modeling. The second 3D modeling may be any processing as long as the processing is performed using the captured image. For example, the above-described photogrammetry processing may be used.

Note that the second 3D modeling (photogrammetry processing) may be performed in a state where all the captured images necessary for generating the entire 3D model are prepared as the processing in the subsequent stage, or may be performed using the captured images obtained up to that time as the increment processing.

As described above, in a case where 3D modeling is performed on the basis of a captured image, a captured image having a high degree of contribution to 3D modeling is required in order to obtain higher-definition 3D data. When imaging work is performed unintentionally, there is a possibility that useless imaging with a low contribution degree to 3D modeling is repeated, and the work load is unnecessarily increased. In order to reduce the load of imaging work, it has been required to more efficiently obtain a captured image having a higher contribution to 3D modeling.

Therefore, in the above-described example, the imaging and the 3D modeling are performed a plurality of times, and the imaging for the second 3D modeling is controlled or guided on the basis of the 3D data obtained by the first 3D modeling. That is, navigation (imaging control, imaging guidance, and the like) for performing high-quality 3D modeling on the basis of a simple 3D model has been performed.

However, 3D modeling for obtaining higher-definition 3D data generally has a large load and a long processing time. For example, as illustrated in Fig. 3, the photogrammetry processing can obtain highly accurate 3D data as compared with the real-time modeling processing, but the processing time is long. Therefore, even in a case where the navigation as described above is applied, it is difficult for the user to confirm the result of the 3D modeling during the imaging work.

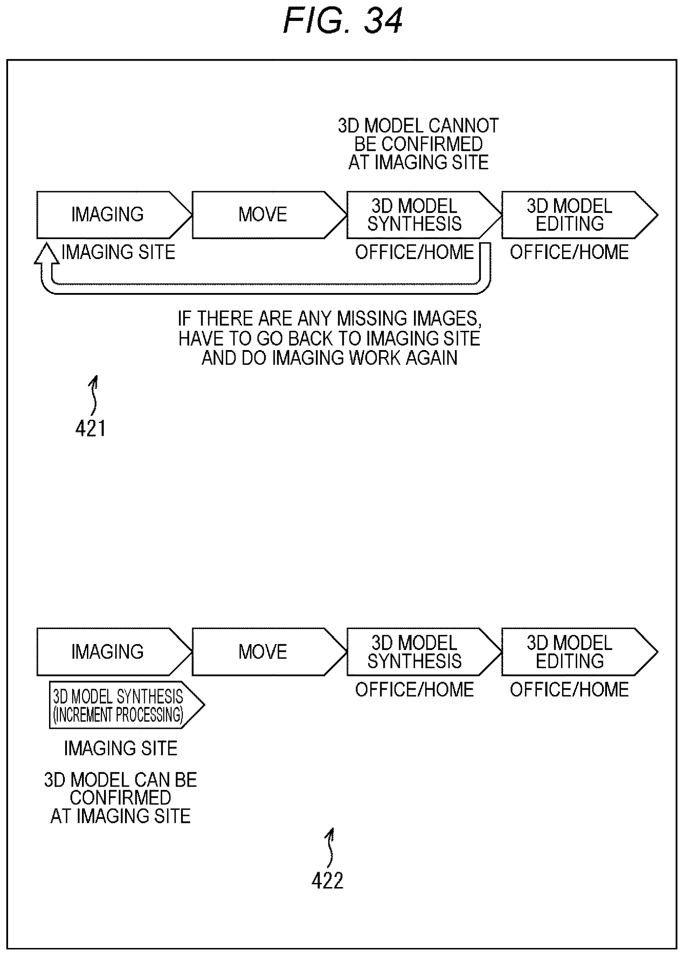

Therefore, the operation in such a case is generally performed in a flow like flow 421 in Fig. 34. That is, in this case, the user moves to a home, an office, or the like after the imaging work is completed, and synthesizes and edits the 3D model using a stationary high-spec computer. If imaging omission occurs (for example, in a case where there is a portion where an effective captured image is insufficient and a highly accurate 3D model cannot be obtained), the user has to return to the site and restart the imaging work, which requires complicated work.

Therefore, for example, 3D modeling for feedback may be performed separately from final 3D modeling (such as 3D model synthesis of flow 421). That is, as illustrated in a flow 422 of Fig. 34, 3D modeling (3D model synthesis) may be performed in parallel with the imaging work. Of course, since the imaging operation is being performed, not all the captured images have been obtained. Even if a captured image necessary for constructing the entire 3D model is not sufficiently obtained, 3D modeling is sequentially performed using captured images obtained by that time. In this way, since the 3D modeling result (3D model) is obtained during the imaging work, the 3D model can be used for navigation or the like of the imaging work. Therefore, the user can perform imaging for the 3D modeling more easily.

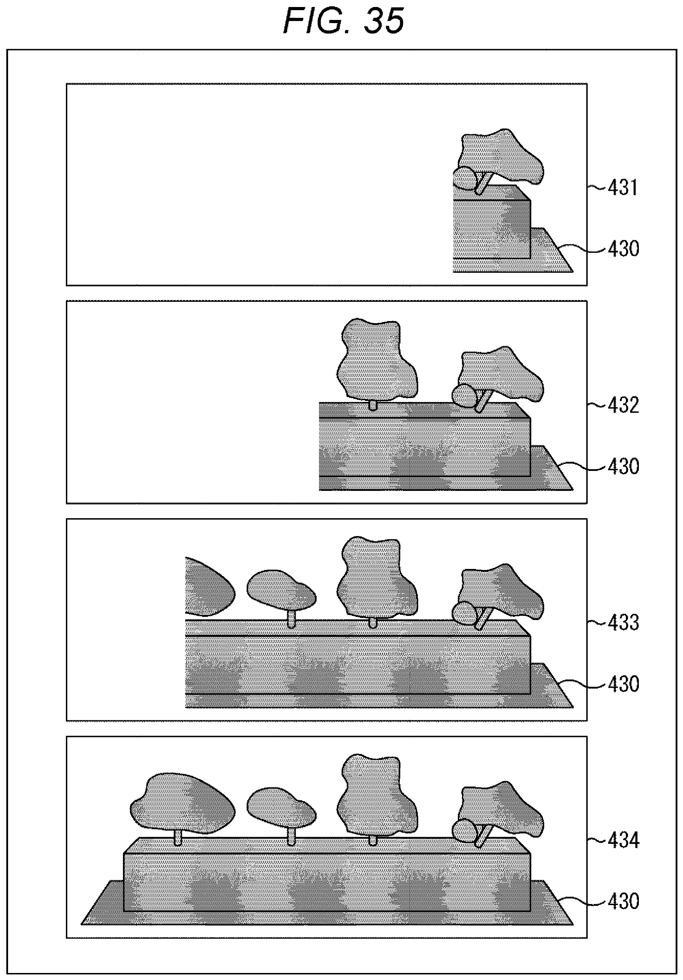

That is, this 3D modeling may be performed multiple times during the imaging operation. As the imaging work progresses and the number of captured images increases, a wider range of 3D models is obtained, or a higher-definition 3D model is obtained. For example, as illustrated in Fig. 35, the number of captured images to be used in the 3D model 430 in which only the range indicated in the square 431 is obtained in the first processing is increased every time the processing is repeated the second time, the third time, and the fourth time, and a larger 3D model 430 is generated as indicated in the square 432, the square 433, and the square 434, respectively. Such 3D modeling is also referred to as increment processing.

For example, by displaying the 3D model 430 shown within the square 431, the user can view the 3D modeling results for this displayed portion. For example, the user can confirm whether or not imaging omission occurs in this portion. That is, the incomplete 3D model is fed back, but the 3D model can be used even if it is incomplete. As described above, by sequentially feeding back the 3D model 430 obtained by the increment processing, the user can confirm the 3D modeling result before the 3D model is completed. Therefore, typically, the user can (sequentially) confirm this 3D modeling result at the site where the imaging operation is being performed before ending the imaging operation. Therefore, as in Flow 421, the user can perform imaging for 3D modeling more easily than in a case where the user cannot refer to the 3D modeling result at all during the imaging work (that is, in a case where the 3D modeling result is confirmed after returning to the home or office).

The method of 3D modeling of this increment processing may be the same as the final 3D modeling (such as 3D model synthesis of flow 421). For example, photogrammetry processing may be applied. By applying a technique similar to the final 3D modeling, it is possible to feed back a 3D model substantially similar to the processing result of the final 3D modeling. Note that, in the 3D modeling of the increment processing, completely the same processing as that in the case of the final 3D modeling may be performed, or some processing may be omitted or simplified in order to shorten the processing time. Furthermore, the information amount of the captured image used for the 3D modeling of the increment processing may be reduced. For example, a compressed image or a thumbnail image may be applied to 3D modeling of the increment processing.

By controlling the imaging parameters to obtain the second captured image as described above, it is possible to suppress a reduction in the quality of the 3D model not only for the final 3D modeling but also for the 3D modeling of the fed back increment processing.

<Subsequent processing>

Note that the imaging parameters controlled as described above may be used for image processing in the subsequent stage. For example, the imaging parameter may be associated with a captured image generated using the imaging parameter. Then, the captured image associated with the imaging parameter may be stored in the storage unit, or may be transmitted to another device via the communication unit. Furthermore, the captured image associated with the imaging parameter may be encoded. By performing image processing using the imaging parameter, the effect of the image processing can be increased.

Then, the image processing unit (image processing device) in the subsequent stage may perform image processing on the captured image by using the imaging parameter associated with the captured image. For example, the detailed position and orientation of the imaging point and the object shape may be obtained on the basis of more accurate SfM, and the three-dimensional shape may be estimated on the basis of these pieces of information. Furthermore, on the basis of the estimated geometry information and the position and orientation of the imaging point, a region to be subjected to gradation correction of the geometry information may be specified for the RAW data of the image that is the basis of the texture being used and developed in the two-dimensional image, and the gradation correction processing may be performed on a region in the preceding developed RAW data corresponding to the specified region. The region to be specified may be, for example, a specific region corresponding to a portion that becomes a shadow in the three-dimensional shape in the geometry. For this, for example, gradation correction such as Delight may be performed. Furthermore, for example, a region in which the texture is saturated and having a normal three-dimensional shape may be set as a specific region, and gradation correction for restoring gradation such as lowering the exposure amount of the corresponding region of the texture may be performed to generate corrected RAW data obtained by correcting the RAW data of the developed two-dimensional image.

<Example of configuration for performing processing>

The imaging parameter control processing 106 in Fig. 4 may be executed by any device. For example, in the information processing device that executes the imaging parameter control processing 106, the other processing of Fig. 4 may not be executed. In this section, this information processing device is also referred to as a first information processing device.

That is, the first information processing device may include an imaging parameter control unit that controls an imaging parameter applied to imaging for generating a captured image to be used for generation of the second three-dimensional shape information on the basis of the position and orientation information indicating the position and orientation of the imaging unit and the first three-dimensional shape information. Note that the first three-dimensional shape information is information representing the three-dimensional shape of the 3D object, and is generated on the basis of the above-described position and orientation information and the captured image of the 3D object. Furthermore, the second three-dimensional shape information is information representing the three-dimensional shape of the above-described 3D object, and is generated on the basis of a captured image of the 3D object generated by imaging to which the above-described imaging parameters are applied.

Furthermore, in the information processing method executed by the first information processing device, the imaging parameters to be applied to imaging for generating the captured image to be used for generation of the second three-dimensional shape information may be controlled on the basis of the position and orientation information indicating the position and orientation of the imaging unit and the first three-dimensional shape information. Note that the first three-dimensional shape information is information representing the three-dimensional shape of the 3D object, and is generated on the basis of the above-described position and orientation information and the captured image of the 3D object. Furthermore, the second three-dimensional shape information is information representing the three-dimensional shape of the above-described 3D object, and is generated on the basis of a captured image of the 3D object generated by imaging to which the above-described imaging parameters are applied. In this section, this information processing method is also referred to as a first information processing method.

By doing so, in the second imaging, the imaging parameter of a more appropriate value is applied to the second 3D modeling, and the second imaging is performed. Therefore, the second 3D modeling is performed using the second captured image that is more suitable for the second 3D modeling, and the second 3D data (second 3D model) is generated. Therefore, a reduction in the quality of the second 3D data (second 3D model) can be suppressed.

Note that the imaging parameter may include a focus control parameter. For example, the imaging parameter control unit may predict the focus position on the basis of the above-described position and orientation information and first three-dimensional shape information, and reflect the prediction result in the focus control parameter. Note that the focus control parameter may include a command value of the focus lens position.

Furthermore, the imaging parameter may include a diaphragm control parameter. For example, the imaging parameter control unit may predict an appropriate depth of field on the basis of the above-described position and orientation information and first three-dimensional shape information, and reflect the prediction result in the diaphragm control parameter. Note that the diaphragm control parameter may include a command value of a diaphragm position.

Furthermore, the imaging parameter may include a camera shake correction control parameter. For example, the imaging parameter control unit may estimate the motion of the imaging unit on the basis of the above-described position and orientation information and first three-dimensional shape information, and reflect the estimation result in the camera shake correction control parameter. Note that the camera shake correction control parameter may include the imager shaft position. Furthermore, the camera shake correction control parameter may include a camera shake correction lens position.

Furthermore, the imaging parameter may include an exposure control parameter. For example, the imaging parameter control unit may derive an allowable amount of change in exposure on the basis of the above-described position and orientation information and first three-dimensional shape information, and control the exposure control parameter so that the amount of change in exposure is less than or equal to the allowable amount. Note that the exposure control parameter may include an analog gain value. Furthermore, the exposure control parameter may include a digital gain value. Furthermore, the exposure control parameter may include a shutter speed. Furthermore, the exposure control parameter may include a command value of a diaphragm position. Furthermore, the exposure control parameter may include a variable ND filter setting value. Furthermore, the exposure control parameter may include a strobe light emission control value.

Furthermore, the imaging parameter may include a shadow correction parameter. For example, the imaging parameter control unit may estimate the light source and control the shadow correction parameter on the basis of the estimated light source information, the above-described position and orientation information, and the first three-dimensional shape information. Furthermore, the imaging parameter control unit may estimate the light source on the basis of the illumination environment detection result. Note that the shadow correction parameter may include an analog gain value. Furthermore, the shadow correction parameter may include a digital gain value. Furthermore, the shadow correction parameter may include a shutter speed. Furthermore, the shadow correction parameter may include a command value of a diaphragm position. Furthermore, the shadow correction parameter may include a variable ND filter setting value. Furthermore, the shadow correction parameter may include a strobe light emission control value.

Furthermore, the imaging parameter may include a color matching control parameter. For example, the imaging parameter control unit may control the color matching control parameter on the basis of the past captured image. Furthermore, the imaging parameter control unit may further control the color matching control parameter on the basis of the color information detection result. Note that the color matching control parameter may include a white balance correction gain value. Furthermore, the color matching control parameter may include a color matrix coefficient value.

Note that the imaging parameter control unit may detect the detection region on the basis of the above-described position and orientation information and the first three-dimensional shape information. Furthermore, the imaging parameter control unit may detect a portion of the 3D object directly facing the imaging unit as the detection region. Furthermore, the imaging parameter control unit may detect an overlap region between the past imaging range and the current imaging range as the detection region.

Furthermore, in the first information processing device, some or all of the first 3D data generation processing 101, the scoring processing 102, the imaging control processing for second 3D modeling 103, the second 3D data generation processing 104, and the imaging guidance output processing for second 3D modeling 105 may be executed. Furthermore, a part of each processing may be executed in the first information processing device.

For example, the first information processing device may perform the first 3D modeling of the first 3D data generation processing 101. That is, the first information processing device may further include a first 3D modeling unit that generates the first three-dimensional shape information on the basis of the above-described position and orientation information and the captured image of the 3D object.

Furthermore, the first information processing device may execute the first imaging of the first 3D data generation processing 101. That is, the first information processing device may further include a first imaging unit that performs imaging for generating a captured image used to generate the above-described first three-dimensional shape information.

Furthermore, the first information processing device may execute the detection of the position and orientation of the imaging unit in the first 3D data generation processing 101. That is, the first information processing device may detect the position and orientation of the imaging unit and generate the position and orientation information.

Furthermore, the first information processing device may execute the second imaging of the second 3D data generation processing 104. That is, the first information processing device may further include a second imaging unit that performs imaging (second imaging) to which the above-described imaging parameters are applied.

Furthermore, the first information processing device may associate the above-described imaging parameters with the second captured image generated in the second 3D data generation processing 104. That is, the first information processing device may further include an association unit that associates an imaging parameter with the second captured image generated by the second imaging unit.

Furthermore, the first information processing device may store the second captured image. That is, the first information processing device may further include a storage unit that stores the second captured image generated by the second imaging unit.

Furthermore, the first information processing device may transmit the second captured image. That is, the first information processing device may further include a communication unit that transmits the second captured image generated by the second imaging unit.

Furthermore, the first information processing device may execute the second 3D modeling of the second 3D data generation processing 104. That is, the first information processing device may further include a second 3D modeling unit that generates the second three-dimensional shape information on the basis of the second captured image generated by the second imaging unit.

Furthermore, the first information processing device may execute the scoring processing 102. Furthermore, the first information processing device may further include a scoring processing unit that evaluates accuracy of the second three-dimensional shape information that can be generated using the first three-dimensional shape information, and generates a scoring result.

Furthermore, the first information processing device may execute the imaging control processing for second 3D modeling 103. That is, the first information processing device may further include an imaging control unit that controls imaging for generating a captured image used for generating the second three-dimensional shape information on the basis of the first three-dimensional shape information.

Furthermore, the first information processing device may execute the imaging guidance output processing for second 3D modeling 105. That is, the first information processing device may further include a guidance information output control unit that generates guidance information for imaging to generate a captured image to be used for generation of the second three-dimensional shape information on the basis of the first three-dimensional shape information, and controls output of the guidance information.

With the above configuration, the first information processing device can suppress a reduction in the quality of the 3D model (second 3D data).

Furthermore, the information processing device may perform imaging for obtaining a captured image used for 3D modeling, detection of an illumination environment of a space in which the imaging is performed, and association between information regarding the detected illumination environment and the captured image. In this section, this information processing device is also referred to as a second information processing device.

For example, the second information processing device may include an illumination environment detection unit that detects an illumination environment of a space in which imaging is performed, an imaging unit that performs, in the space, imaging for generating a captured image used to generate three-dimensional shape information representing a three-dimensional shape of a 3D object, and an association unit that associates information regarding the detected illumination environment with the captured image.

Furthermore, in the second information processing method executed by the second information processing device, an illumination environment of a space in which imaging is performed may be detected, imaging for generating a captured image used to generate three-dimensional shape information representing a three-dimensional shape of a 3D object may be performed in the space, and information regarding the detected illumination environment may be associated with the captured image.

Note that the above-described information regarding the illumination environment may include a captured image having a wide viewing angle. Furthermore, the captured image may be a hemispherical image having a hemispherical viewing angle or an omnidirectional image having a spherical viewing angle. Furthermore, the illumination environment detection unit may detect the illumination environment in the upward direction of the imaging unit.

Furthermore, the second information processing device may store the second captured image. That is, the second information processing device may further include a storage unit that stores the captured image associated with the information regarding the illumination environment.

Furthermore, the second information processing device may transmit the second captured image. That is, the second information processing device may further include a communication unit that transmits the captured image associated with the information regarding the illumination environment.

Furthermore, the second information processing device may encode the second captured image. That is, the second information processing device may further include an encoding unit that encodes the captured image associated with the information regarding the illumination environment.

By doing so, the information regarding the illumination environment of the space where the imaging is performed can be used in the image processing in the subsequent stage.

<6. First embodiment>

<Imaging device>

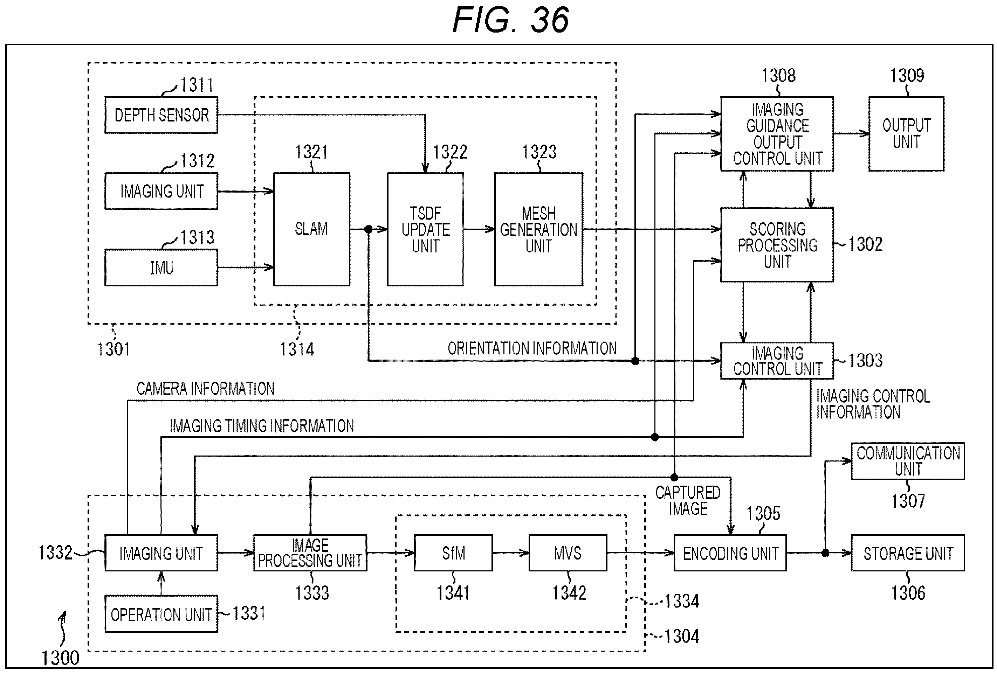

Fig. 36 is a block diagram illustrating an example of a configuration of an imaging device that is an aspect of an information processing device to which the present technology is applied. An imaging device 1300 illustrated in Fig. 36 is a device that images a 3D object and performs 3D modeling using the captured image. Note that while Fig. 36 illustrates main elements such as processing units and data flows, those illustrated in Fig. 36 do not necessarily include all elements. That is, the imaging device 1300 may include a device or a processing unit not illustrated as a block in Fig. 36. Furthermore, there may be a data flow or processing that is not illustrated as an arrow or the like in Fig. 36.

As illustrated in Fig. 36, the imaging device 1300 includes a first 3D data generation unit 1301, a scoring processing unit 1302, an imaging control unit 1303, a second 3D data generation unit 1304, an encoding unit 1305, a storage unit 1306, a communication unit 1307, an imaging guidance output control unit 1308, and an output unit 1309. Furthermore, the first 3D data generation unit 1301 includes a depth sensor 1311, an imaging unit 1312, an inertial measurement unit (IMU) 1313, and a real-time 3D modeling processing unit 1314. Furthermore, the real-time 3D modeling processing unit 1314 includes simultaneous localization and mapping (SLAM) 1321, a truncated signed distance function (TSDF) update unit 1322, and a mesh generation unit 1323. Furthermore, the second 3D data generation unit 1304 includes an operation unit 1331, an imaging unit 1332, an image processing unit 1333, and a photogrammetry processing unit 1334. Furthermore, the photogrammetry processing unit 1334 includes structure from motion (SfM) 1341 and multi view stereo (MVS) 1342.

The first 3D data generation unit 1301 performs processing related to the generation of the first 3D data. For example, the first 3D data generation unit 1301 performs the first 3D data generation processing 101 in Fig. 4. The depth sensor 1311 includes a Lidar sensor (dToF module) or the like, detects the depth to the subject, and supplies the depth to the TSDF update unit 1322. The imaging unit 1312 includes an image sensor and images a subject to generate a captured image. The imaging unit 1312 performs the first imaging (that is, imaging for the first 3D modeling (real-time 3D modeling)) of the first 3D data generation processing 101 in Fig. 4. The imaging unit 1312 supplies the generated captured image to the SLAM 1321. The IMU 1313 detects inertial information regarding (acceleration and angular velocity of) the imaging device and supplies the inertial information to the SLAM 1321.

The real-time 3D modeling processing unit 1314 performs processing related to the real-time 3D modeling. For example, the real-time 3D modeling processing unit 1314 performs the first 3D modeling processing (real-time 3D modeling) of the first 3D data generation processing 101 in Fig. 4. That is, the real-time 3D modeling processing unit 1314 generates the first three-dimensional shape information representing the three-dimensional shape of the 3D object on the basis of the first captured image generated by the first imaging of imaging the 3D object.

The SLAM 1321 performs self-localization on the basis of the supplied first captured image and inertial information, and generates orientation information indicating the position and orientation of the imaging device 1300. The SLAM 1321 supplies the generated orientation information to the TSDF update unit 1322, the imaging control unit 1303, and the imaging guidance output control unit 1308. The TSDF update unit 1322 updates the TSDF on the basis of the orientation information and the depth, and supplies the updated TSDF to the mesh generation unit 1323. The mesh generation unit 1323 generates a mesh (or texture) using the updated TSDF. The mesh generation unit 1323 supplies the mesh and the texture to the scoring processing unit 1302 as the first 3D data (first three-dimensional shape information).

The scoring processing unit 1302 performs processing related to scoring. For example, the scoring processing unit 1302 performs the scoring processing 102 in Fig. 4 on the basis of the supplied first 3D data and the imaging viewpoint information (information indicating the position and orientation in which the second imaging is performed) supplied from the imaging control unit 1303. That is, the scoring processing unit 1302 uses the first three-dimensional shape information to evaluate the accuracy of the second three-dimensional shape information that can be generated using the second captured image generated by the second imaging performed so far, and generates the scoring result. For example, the scoring processing unit 1302 may generate the scoring result for each local portion of the first three-dimensional shape information on the basis of the first three-dimensional shape information and the position and orientation of the second imaging performed so far. For example, the scoring processing unit 1302 may generate the scoring result for each polygon of the mesh. The scoring processing unit 1302 supplies the scoring result to the imaging control unit 1303 and the imaging guidance output control unit 1308.

Note that the scoring processing unit 1302 may acquire camera information regarding the imaging unit 1332 and generate the scoring result on the basis of the camera information. Furthermore, the scoring processing unit 1302 may generate the scoring result on the basis of the position and orientation of the imaging device 1300 corresponding to the timing of the second imaging without relying on the imaging control information by the imaging unit 1332.

The imaging control unit 1303 performs processing related to the control of the second imaging. For example, the imaging control unit 1303 performs the imaging control processing for second 3D modeling 103 in Fig. 4. That is, the imaging control unit 1303 generates imaging control information on the basis of which the second imaging is controlled on the basis of the supplied scoring result and orientation information, and supplies the imaging control information to the imaging unit 1332. The imaging control information is, for example, control information for causing the imaging unit 1332 to perform the second imaging (generate the second captured image). That is, the imaging control unit 1303 obtains an appropriate position and orientation as the second imaging on the basis of the scoring result, and causes the imaging unit 1332 to perform the second imaging in the position and orientation. Furthermore, the imaging control unit 1303 supplies imaging viewpoint information indicating the position and orientation of the performed second imaging to the scoring processing unit 1302.

Furthermore, the imaging control unit 1303 may acquire imaging timing information indicating the timing of the second imaging without relying on the imaging control information by the imaging unit 1332, and supply the orientation information regarding the imaging device 1300 corresponding to the imaging timing to the scoring processing unit 1302 as the imaging viewpoint information.

The second 3D data generation unit 1304 performs processing related to the generation of the second 3D data. For example, the second 3D data generation unit 1304 performs the second 3D data generation processing 104 in Fig. 4. The operation unit 1331 receives an instruction for the imaging unit 1332 from the user or the like and supplies the instruction to the imaging unit 1332.

The imaging unit 1332 includes an image sensor and images a subject to generate a captured image. The imaging unit 1332 performs the second imaging (that is, imaging for the second 3D modeling (photogrammetry)) of the second 3D data generation processing 104 in Fig. 4. The imaging unit 1332 supplies the generated captured image to the image processing unit 1333.

For example, the imaging unit 1332 may perform the second imaging in accordance with the control of the imaging control unit 1303 (on the basis of the imaging control information supplied from the imaging control unit 1303) and generate the second captured image. Furthermore, the imaging unit 1332 may perform the second imaging in accordance with the instruction supplied from the operation unit 1331 to generate the second captured image. Furthermore, the imaging unit 1332 may supply the camera information (internal parameter, external parameter, angle-of-view information, and the like of the imaging unit 1332) to the scoring processing unit 1302. Furthermore, the imaging unit 1332 may supply imaging timing information indicating the timing of the second imaging without relying on the imaging control information to the imaging control unit 1303 and the imaging guidance output control unit 1308.

The image processing unit 1333 performs predetermined image processing on the captured image (second captured image) generated by the imaging unit 1332. The content of this image processing is arbitrary. The image processing unit 1333 supplies the captured image to the SfM 1341. Furthermore, the image processing unit 1333 may supply the captured image to the encoding unit 1305 and the imaging guidance output control unit 1308.

The photogrammetry processing unit 1334 performs processing related to the photogrammetry on the second captured image. For example, the photogrammetry processing unit 1334 performs the second 3D modeling processing of the second 3D data generation processing 104 in Fig. 4. That is, the photogrammetry processing unit 1334 generates the second three-dimensional shape information on the basis of the second captured image generated by the imaging unit 1332.

For example, the SfM 1341 searches for a corresponding point between the second captured images, derives the position and orientation of the camera using epipolar constraint, determines the position of each corresponding point in the three-dimensional space using triangulation based on the position and orientation of the camera, optimizes all the determined three-dimensional point cloud using bundle adjustment, and supplies the optimized three-dimensional point cloud to the MVS 1342. For example, the MVS 1342 further performs a dense corresponding point search using the three-dimensional point cloud, adds three-dimensional points, and further performs meshing and texturing as post-processing to generate the second 3D data. The MVS 1342 supplies the generated second 3D data to the encoding unit 1305.

The encoding unit 1305 encodes the supplied second 3D data, and supplies the coded data to the storage unit 1306 and the communication unit 1307. Furthermore, the encoding unit 1305 may encode the supplied second captured image and supply the coded data to the storage unit 1306 and the communication unit 1307.

The storage unit 1306 stores the supplied coded data. The communication unit 1307 transmits the supplied coded data to another information processing device (for example, a server or the like).

The imaging guidance output control unit 1308 performs processing related to the guidance for the second imaging. For example, the imaging guidance output control unit 1308 performs the imaging guidance output processing for second 3D modeling 105 in Fig. 4. That is, the imaging guidance output control unit 1308 generates guidance information for the second imaging and controls the output of the guidance information. For example, the imaging guidance output control unit 1308 generates the above-described guidance information on the basis of the supplied scoring result and the orientation information regarding the imaging device 1300. Furthermore, the imaging guidance output control unit 1308 may generate the guidance information on the basis of the supplied imaging timing information. The imaging guidance output control unit 1308 supplies the generated guidance information to the output unit 1309 to cause the output unit 1309 to output the guidance information as, for example, an image, audio, or the like. Furthermore, the imaging guidance output control unit 1308 may superimpose the supplied captured image on the guidance information (image) for display.

The output unit 1309 outputs the guidance information as an image, audio, or the like according to the control of the imaging guidance output control unit 1308.

Such a configuration allows the imaging device 1300 to image the 3D object in a more appropriate position and orientation, and perform 3D modeling (second 3D modeling processing) using the captured image. Therefore, the imaging device 1300 can generate more accurate 3D data while suppressing an increase in the load of 3D modeling. Furthermore, the imaging device 1300 can output the guidance information so that the user can perform the second imaging in a more appropriate position and orientation. That is, the imaging device 1300 can perform 3D modeling (second 3D modeling processing) using the captured image. Therefore, the imaging device 1300 can generate more accurate 3D data while suppressing an increase in the load of 3D modeling. That is, the user can perform 3D modeling more easily.

<Flow of 3D modeling processing>

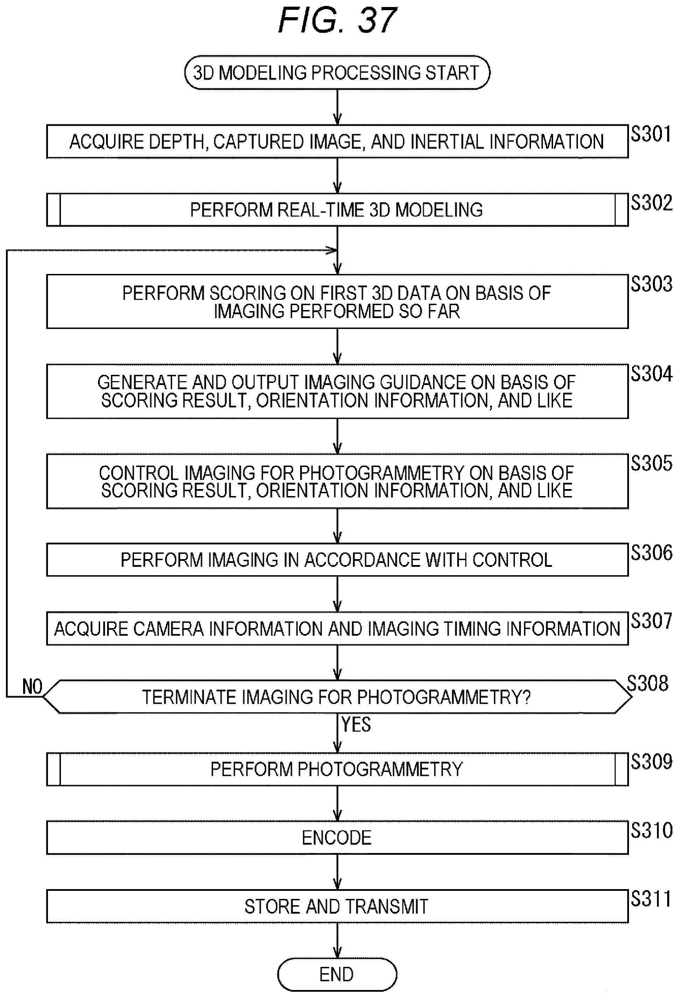

An example of a flow of the 3D modeling processing executed by the imaging device 1300 will be described with reference to a flowchart in Fig. 37.

Upon the start of the 3D modeling processing, the depth sensor 1311, the imaging unit 1312, and the IMU 1313 acquire a depth, a captured image, and inertial information in step S301.

In step S302, the real-time 3D modeling processing unit 1314 performs real-time 3D modeling processing to generate the first 3D data.

In step S303, the scoring processing unit 1302 performs scoring on the first 3D data on the basis of the second imaging performed so far.

In step S304, the imaging guidance output control unit 1308 generates imaging guidance (guidance information) for the second imaging on the basis of the scoring result, the orientation information, and the like. The output unit 1309 outputs the imaging guidance (guidance information).

In step S305, the imaging control unit 1303 controls imaging for photogrammetry (second imaging) on the basis of the scoring result, the orientation information, and the like.

In step S306, the imaging unit 1332 performs imaging (performs the second imaging) in accordance with the control.

In step S307, the imaging control unit 1303 and the imaging guidance output control unit 1308 acquire the camera information from the imaging unit 1332. Furthermore, the scoring processing unit 1302 acquires the imaging timing information from the imaging unit 1332.

In step S308, the imaging control unit 1303 determines whether or not to terminate the imaging for photogrammetry (second imaging). In a case where it is determined that the imaging for photogrammetry is not terminated, the processing returns to step S303. Furthermore, in a case where it is determined in step S308 that the imaging for photogrammetry is terminated, the processing proceeds to step S309.

In step S309, the photogrammetry processing unit 1334 executes photogrammetry processing to generate the second 3D data.

In step S310, the encoding unit 1305 encodes the second 3D data.

In step S311, the storage unit 1306 stores the coded data. Furthermore, the communication unit 1307 transmits the coded data to another device (for example, a server or the like).

The completion of step S311 brings the 3D modeling processing to an end.

<Flow of real-time 3D modeling processing>

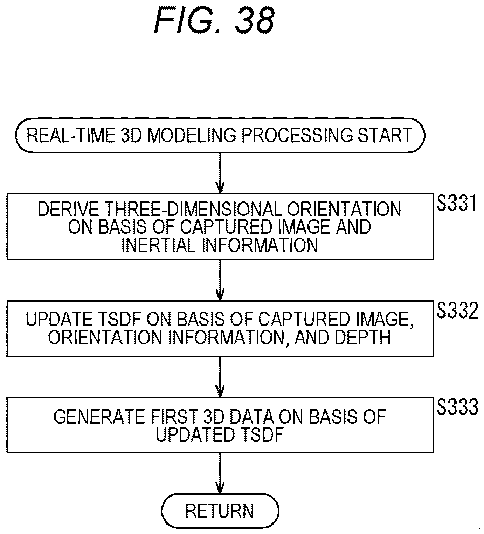

An example of a flow of the real-time 3D modeling processing executed in step S302 in Fig. 37 will be described with reference to a flowchart in Fig. 38.

Upon the start of the real-time 3D modeling processing, the SLAM 1321 derives orientation information indicating a three-dimensional orientation of the imaging device 1300 on the basis of the captured image and the inertial information in step S331.

In step S332, the TSDF update unit 1322 updates the TSDF on the basis of the captured image, the orientation information, and the depth.

In step S333, the mesh generation unit 1323 generates the first 3D data on the basis of the updated TSDF.

When the processing of step S333 ends, the real-time 3D modeling processing ends, and the processing returns to Fig. 37.

<Flow of photogrammetry processing>

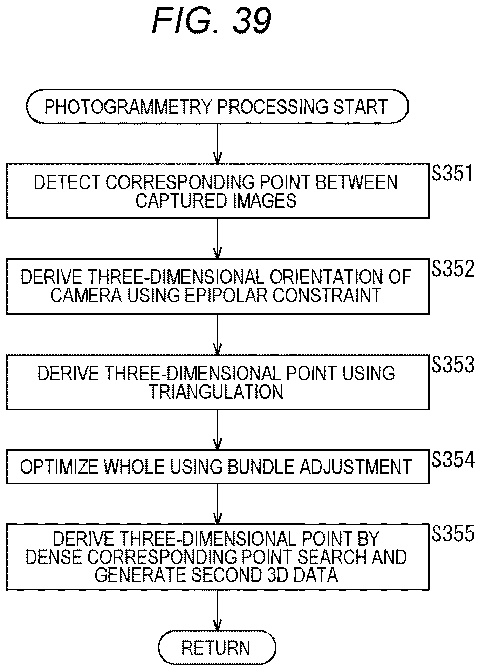

An example of a flow of the photogrammetry processing executed in step S309 in Fig. 37 will be described with reference to a flowchart in Fig. 39.

Upon the start of the photogrammetry processing, the SfM 1341 detects a corresponding point between the captured images in step S351.

In step S352, the SfM 1341 derives a three-dimensional orientation of the camera using epipolar constraint.

In step S353, the SfM 1341 derives a three-dimensional point using triangulation.

In step S354, the SfM 1341 optimizes the whole using bundle adjustment.

In step S355, the MVS 1342 derives a three-dimensional point by dense corresponding point search and generates the second 3D data.

When the processing of step S355 ends, the photogrammetry processing ends, and the processing returns to Fig. 37.

By performing each processing as described above, the imaging device 1300 can image the 3D object in a more appropriate position and orientation, and can perform 3D modeling (second 3D modeling processing) using the captured image. Therefore, the imaging device 1300 can generate more accurate 3D data while suppressing an increase in the load of 3D modeling. Furthermore, the imaging device 1300 can output the guidance information so that the user can perform the second imaging in a more appropriate position and orientation. That is, the imaging device 1300 can perform 3D modeling (second 3D modeling processing) using the captured image. Therefore, the imaging device 1300 can generate more accurate 3D data while suppressing an increase in the load of 3D modeling. That is, the user can perform 3D modeling more easily.

<7. Second embodiment>

<Information processing system 1>

The present technology is not limited to the above-described examples, and can be applied to any configuration. For example, the present technology may be applied to an information processing system that performs 3D modeling.

For example, in an information processing system including an information processing device and an imaging device, the information processing device may include: a first 3D modeling processing unit that generates first three-dimensional shape information representing a three-dimensional shape of a 3D object on the basis of a first captured image generated by first imaging of imaging the 3D object; a scoring processing unit that uses the first three-dimensional shape information to evaluate accuracy of second three-dimensional shape information that can be generated using a second captured image generated by second imaging performed so far and generates a scoring result; an imaging control unit that generates imaging control information on the basis of which the second imaging of imaging the 3D object is controlled on the basis of a position and orientation of the imaging device and the scoring result; and a first communication unit that supplies the imaging control information to the imaging device. Furthermore, the imaging device may include: a second communication unit that acquires the imaging control information supplied from the information processing device; and an imaging unit that images the 3D object on the basis of the imaging control information to generate the second captured image.

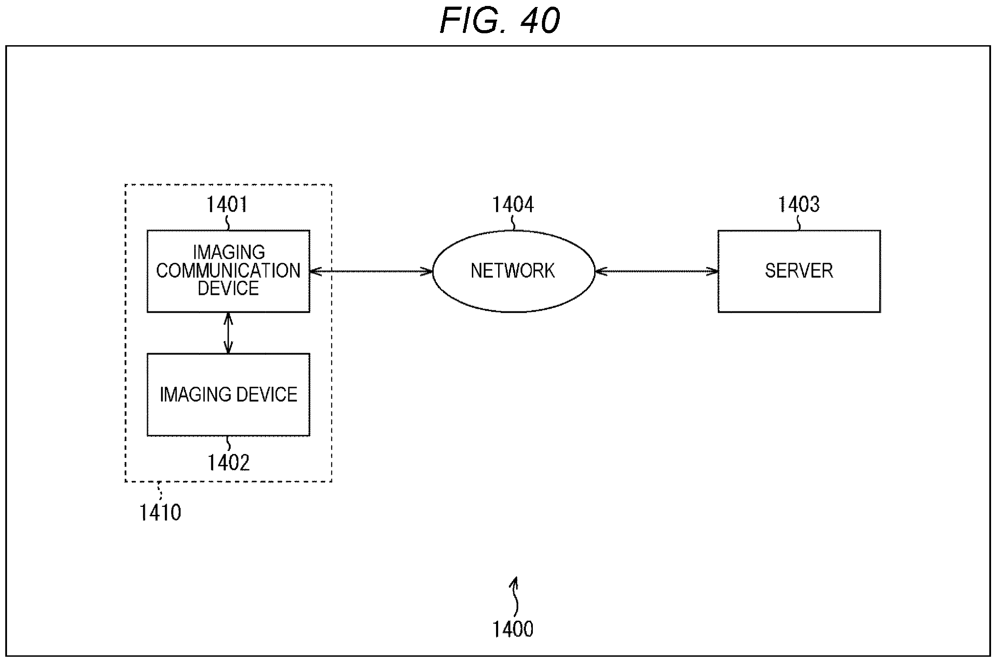

Fig. 40 is a diagram illustrating a configuration example of an aspect of an information processing system to which the present technology is applied. An information processing system 1400 illustrated in Fig. 40 is a system that images a 3D object and performs 3D modeling using the captured image. As illustrated in Fig. 40, the information processing system 1400 includes an imaging communication device 1401, an imaging device 1402, and a server 1403. The imaging communication device 1401 and the server 1403 are communicatively connected via a network 1404. The network 1404 is a communication path including any communication medium such as the Internet, a local area network (LAN), or a wireless LAN.

The imaging communication device 1401 is an information processing device having a communication function and an imaging function and capable of communicating with any device, such as a smartphone, via the network 1404. The imaging device 1402 is an information processing device having an imaging function, such as a digital camera. The imaging device 1402 can communicate only with the imaging communication device 1401. The imaging communication device 1401 and the imaging device 1402 are fixedly connected to each other, and are each used by the user as a terminal device 1410. The server 1403 acquires a second captured image generated in the terminal device 1410 (imaging device 1402), performs the second 3D modeling (photogrammetry processing) using the second captured image to generate the second 3D data, and stores (manages) the second 3D data.

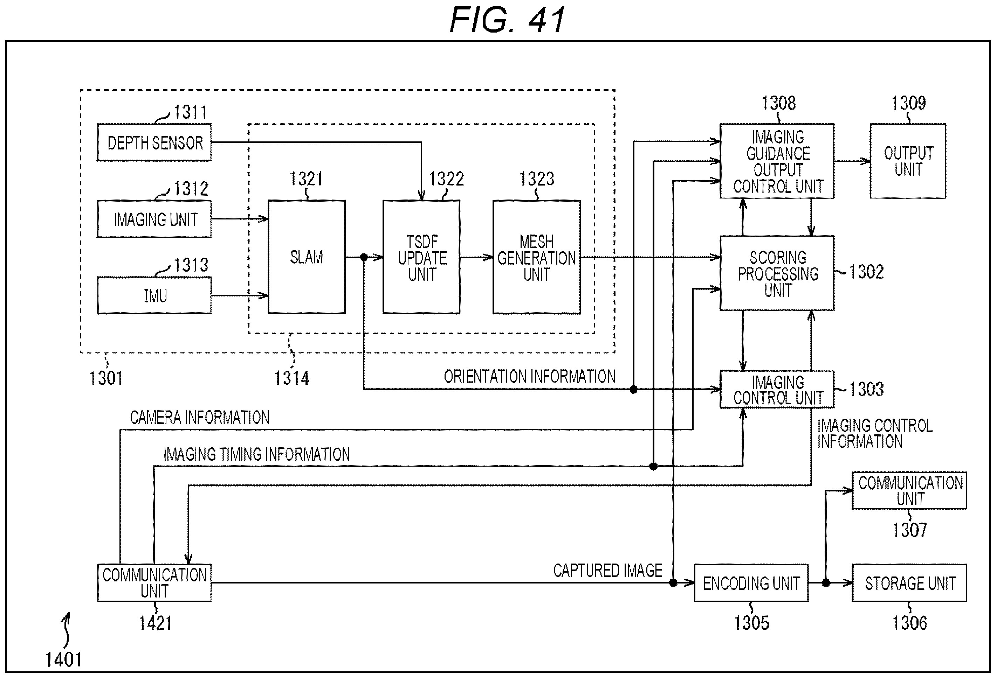

Fig. 41 is a block diagram illustrating a main configuration example of the imaging communication device 1401. Note that, in Fig. 41, main parts of processing units, data flows, and the like are illustrated, and those illustrated in Fig. 41 are not necessarily all. That is, the imaging communication device 1401 may include a device or a processing unit not illustrated as a block in Fig. 41. Furthermore, there may be a data flow or processing that is not illustrated as an arrow or the like in Fig. 41.

As illustrated in Fig. 41, the imaging communication device 1401 includes a communication unit 1421 instead of the second 3D data generation unit 1304 that is a configuration of the imaging device 1300 (Fig. 36). That is, the other configurations are similar to those of the imaging device 1300.

The communication unit 1421 is communicatively connected to the imaging device 1402 and communicates with the imaging device 1402 to exchange information. For example, the communication unit 1421 may supply the imaging control information supplied from the imaging control unit 1303 to the imaging device 1402. Furthermore, the communication unit 1421 may acquire the second captured image generated by the imaging device 1402 and supply the second captured image to the encoding unit 1305 and the imaging guidance output control unit 1308. Furthermore, the communication unit 1421 may acquire the camera information supplied from the imaging device 1402 and supply the camera information to the scoring processing unit 1302. The camera information may include the internal parameter, external parameter, angle-of-view information, and the like of (the imaging unit 1332 of) the imaging device 1402. Furthermore, the communication unit 1421 may acquire the imaging timing information supplied from the imaging device 1402 and supply the imaging timing information to the imaging control unit 1303 and the imaging guidance output control unit 1308. This imaging timing information indicates the timing of imaging performed by (the imaging unit 1332 of) the imaging device 1402 without relying on the imaging control information.

Note that the communication unit 1307 is communicatively connected to the server 1403 via the network 1404, and communicates with the server 1403 to exchange information. For example, the encoding unit 1305 encodes the second captured image supplied from the communication unit 1421, and supplies the coded data to the storage unit 1306 and the communication unit 1307. The storage unit 1306 stores the coded data of the second captured image. The communication unit 1307 supplies the coded data of the second captured image to the server 1403 via the network 1404.

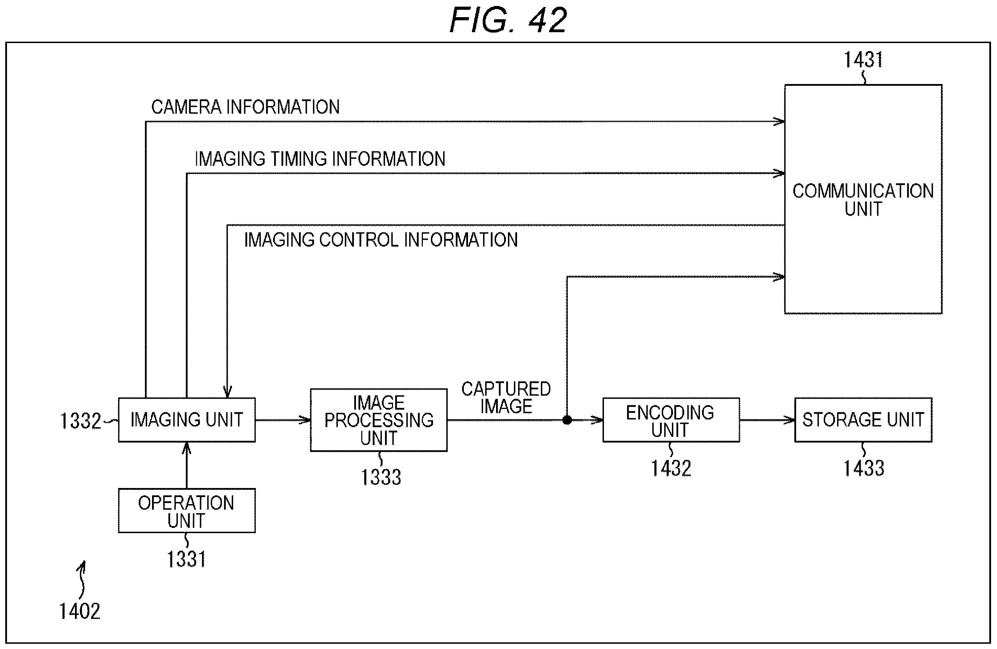

Fig. 42 is a block diagram illustrating a main configuration example of the imaging device 1402. Note that, in Fig. 42, main parts of processing units, data flows, and the like are illustrated, and those illustrated in Fig. 42 are not necessarily all. That is, the imaging device 1402 may include a device or a processing unit not illustrated as a block in Fig. 42. Furthermore, there may be a data flow or processing that is not illustrated as an arrow or the like in Fig. 42.

As illustrated in Fig. 42, the imaging device 1402 includes an operation unit 1331, an imaging unit 1332, an image processing unit 1333, a communication unit 1431, an encoding unit 1432, and a storage unit 1433. The operation unit 1331, the imaging unit 1332, and the image processing unit 1333 perform processing similarly to the case of the imaging device 1300 in Fig. 36.

The communication unit 1431 is communicatively connected to the imaging communication device 1401 and communicates with the imaging communication device 1401 to exchange information. For example, the communication unit 1431 may acquire the imaging control information supplied from the imaging communication device 1401 and supply the imaging control information to the imaging unit 1332. Furthermore, the communication unit 1431 may acquire the camera information supplied from the imaging unit 1332 and supply the camera information to the imaging communication device 1401. The camera information may include the internal parameter, external parameter, angle of view information, and the like of the imaging unit 1332. Furthermore, the communication unit 1431 may acquire the imaging timing information supplied from the imaging unit 1332 and supply the imaging timing information to the imaging communication device 1401. The imaging timing information indicates the timing of imaging performed by the imaging unit 1332 without relying on the imaging control information. Furthermore, the communication unit 1431 may acquire the second captured image supplied from the image processing unit 1333 and supply the second captured image to the imaging communication device 1401.

The encoding unit 1432 encodes the second captured image supplied from the image processing unit 1333, and supplies the coded data to the storage unit 1433. The storage unit 1433 stores the coded data.

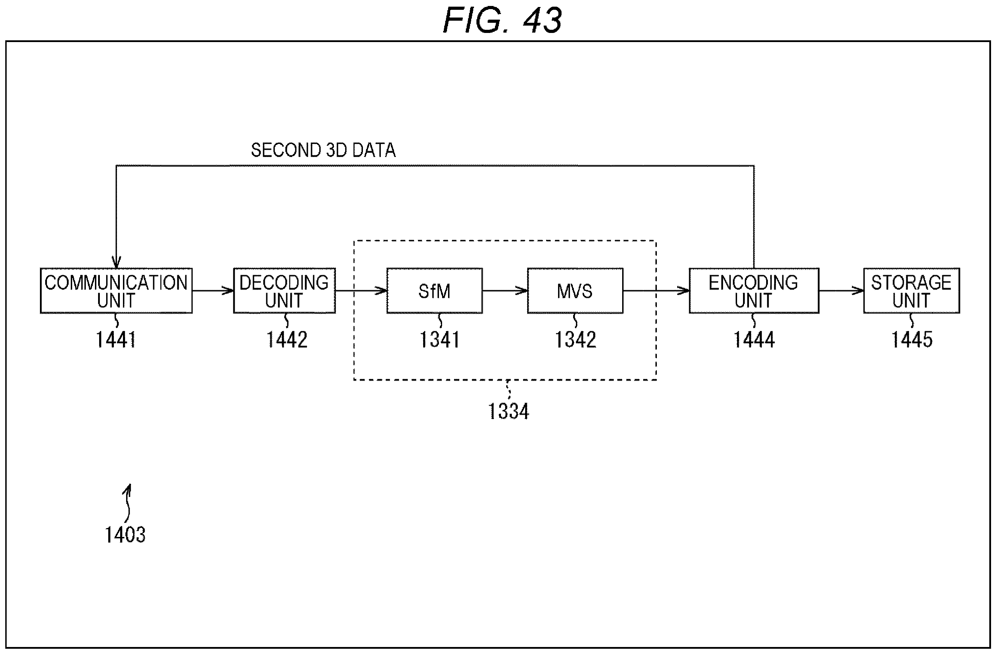

Fig. 43 is a block diagram illustrating a main configuration example of the server 1403. Note that, in Fig. 43, main parts of processing units, data flows, and the like are illustrated, and those illustrated in Fig. 43 are not necessarily all. That is, the server 1403 may include a device or a processing unit not illustrated as a block in Fig. 43. Furthermore, there may be a data flow or processing that is not illustrated as an arrow or the like in Fig. 43.

As illustrated in Fig. 43, the server 1403 includes a communication unit 1441, a decoding unit 1442, a photogrammetry processing unit 1334, an encoding unit 1444, and a storage unit 1445. The photogrammetry processing unit 1334 has a configuration similar to a case of the imaging device 1300 in Fig. 36, and performs similar processing.

The communication unit 1441 is communicatively connected to the imaging communication device 1401 via the network 1404 and communicates with other devices such as the imaging communication device 1401 to exchange information. For example, the communication unit 1441 acquires the coded data of the second captured image supplied from the imaging communication device 1401, and supplies the coded data to the decoding unit 1442. Furthermore, the communication unit 1441 may supply the coded data of the second 3D data supplied from the encoding unit 1444 to another device (for example, the imaging communication device 1401) via the network 1404.

The decoding unit 1442 decodes the coded data of the second captured image supplied from the communication unit 1441 to generate (restore) the second captured image. The decoding unit 1442 supplies the second captured image to the photogrammetry processing unit 1334 (SfM 1341). The photogrammetry processing unit 1334 performs second 3D modeling (photogrammetry processing) using the second captured image to generate the second 3D data. The photogrammetry processing unit 1334 (MVS 1342) supplies the generated second 3D data to the encoding unit 1444.

The encoding unit 1444 encodes the supplied second 3D data and supplies the coded data to the storage unit 1445. Furthermore, the encoding unit 1444 may supply the coded data of the second 3D data to the communication unit 1441. The storage unit 1445 stores the supplied coded data of the second 3D data.

Since each device has such a configuration, the information processing system 1400 can image a 3D object in a more appropriate position and orientation and perform 3D modeling (second 3D modeling processing) using the captured image. Therefore, the information processing system 1400 can generate more accurate 3D data while suppressing an increase in the load of 3D modeling. Furthermore, the information processing system 1400 can output the guidance information so that the user can perform the second imaging in a more appropriate position and orientation. That is, the information processing system 1400 can perform 3D modeling (second 3D modeling processing) using the captured image. Therefore, the information processing system 1400 can generate more accurate 3D data while suppressing an increase in the load of 3D modeling. That is, the user can perform 3D modeling more easily.

<Flow of 3D modeling processing>

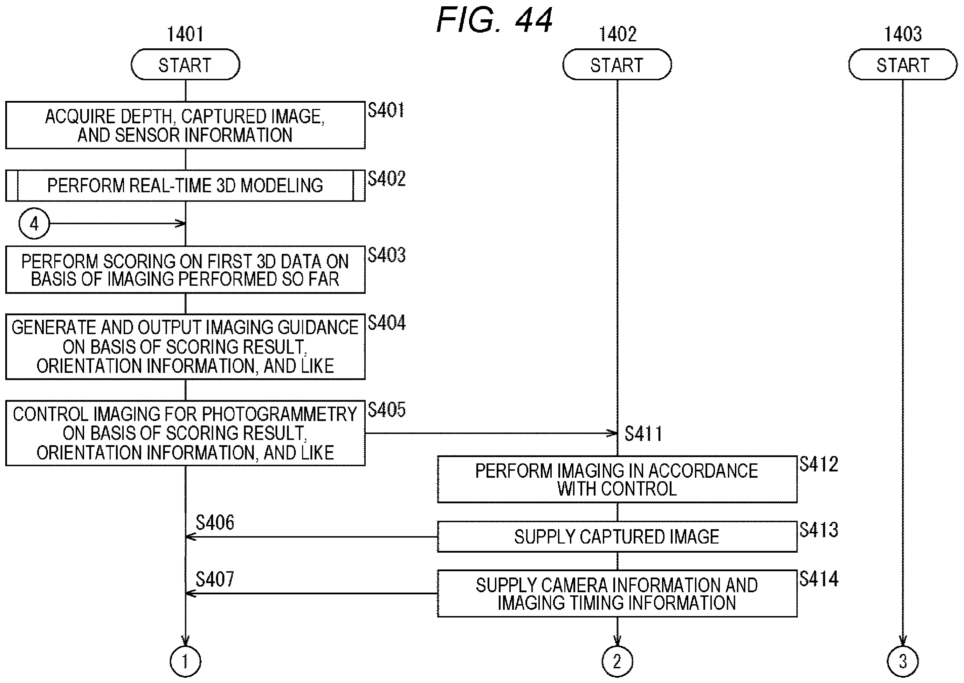

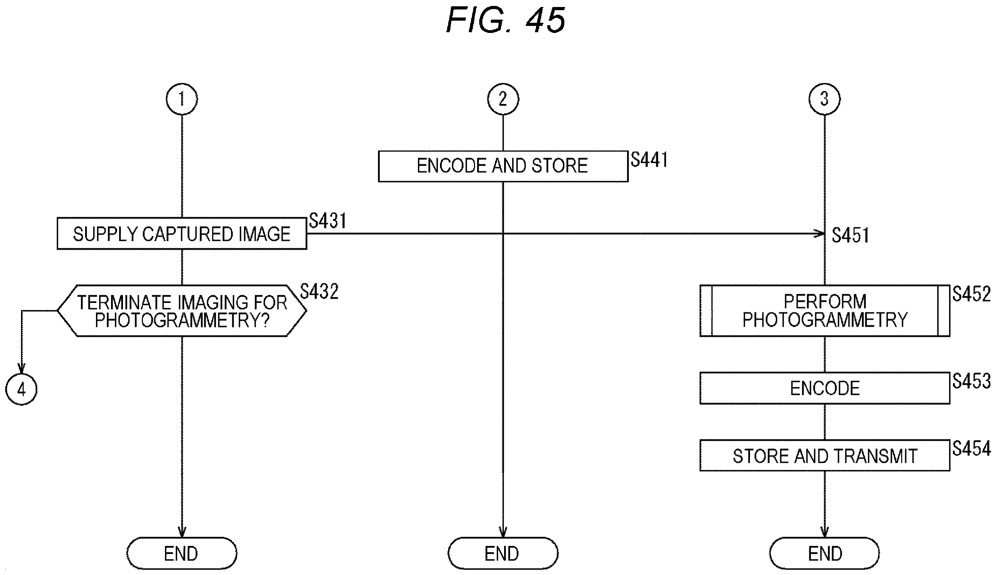

An example of a flow of the 3D modeling processing executed by the information processing system 1400 will be described with reference to flowcharts in Figs. 44 and 45.

Upon the start of the 3D modeling processing, the depth sensor 1311, the imaging unit 1312, and the IMU 1313 of the imaging communication device 1401 acquire a depth, a captured image, and inertial information in step S401 in Fig. 4744.

In step S402, the real-time 3D modeling processing unit 1314 of the imaging communication device 1401 executes real-time 3D modeling processing to generate the first 3D data. This real-time 3D modeling processing is executed similarly to the example in Fig. 38.

In step S403, the scoring processing unit 1302 of the imaging communication device 1401 performs scoring on the first 3D data on the basis of the second imaging performed so far.

In step S404, the imaging guidance output control unit 1308 of the imaging communication device 1401 generates imaging guidance (guidance information) for the second imaging on the basis of the scoring result, the orientation information, and the like. The output unit 1309 outputs the imaging guidance (guidance information).

In step S405, the imaging control unit 1303 of the imaging communication device 1401 generates imaging control information on the basis of which the imaging for photogrammetry (second imaging) is controlled on the basis of the scoring result, the orientation information, and the like. The communication unit 1421 supplies the imaging control information to the imaging device 1402. In step S411, the communication unit 1431 of the imaging device 1402 acquires the imaging control information.

In step S412, the imaging unit 1332 of the imaging device 1402 performs imaging (performs the second imaging) in accordance with the control to generate the second captured image. The image processing unit 1333 performs predetermined image processing on the second captured image.

In step S413, the communication unit 1431 of the imaging device 1402 supplies the second captured image to the imaging communication device 1401. In step S406, the communication unit 1421 of the imaging communication device 1401 acquires the second captured image.

Furthermore, in step S414, the communication unit 1431 of the imaging device 1402 supplies the camera information and the imaging timing information regarding the imaging unit 1332 to the imaging communication device 1401. In step S407, the communication unit 1421 of the imaging communication device 1401 acquires the camera information and the imaging timing information.

In step S441 in Fig. 45, the encoding unit 1432 of the imaging device 1402 encodes the second captured image. The storage unit 1433 stores the coded data of the second captured image.

In step S431, the encoding unit 1305 of the imaging communication device 1401 encodes the second captured image. The communication unit 1307 supplies the coded data of the second captured image to the server 1403. In step S451, the communication unit 1441 of the server 1403 acquires the coded data of the second captured image. The decoding unit 1442 decodes the coded data to generate (restore) the second captured image.

In step S452, the photogrammetry processing unit 1334 of the server 1403 performs the photogrammetry processing to generate the second 3D data. This photogrammetry processing is executed similarly to the example in Fig. 39.

In step S453, the encoding unit 1444 of the server 1403 encodes the second 3D data.

In step S454, the storage unit 1445 of the server 1403 stores the coded data. Furthermore, the communication unit 1441 transmits the coded data to another device (for example, the imaging communication device 1401 or the like).

Furthermore, in step S432, the imaging control unit 1303 of the imaging communication device 1401 determines whether or not to terminate the imaging for photogrammetry (second imaging). In a case where it is determined that the imaging for photogrammetry is not terminated, the processing returns to step S403 in Fig. 44. Furthermore, in a case where it is determined in step S432 in Fig. 45 that the imaging for photogrammetry is terminated, the 3D modeling processing ends.

By performing each processing as described above, the information processing system 1400 can image the 3D object in a more appropriate position and orientation, and perform 3D modeling (second 3D modeling processing) using the captured image. Therefore, the information processing system 1400 can generate more accurate 3D data while suppressing an increase in the load of 3D modeling. Furthermore, the information processing system 1400 can output the guidance information so that the user can perform the second imaging in a more appropriate position and orientation. That is, the information processing system 1400 can perform 3D modeling (second 3D modeling processing) using the captured image. Therefore, the information processing system 1400 can generate more accurate 3D data while suppressing an increase in the load of 3D modeling. That is, the user can perform 3D modeling more easily.

<Information processing system 2>

Note that, in the information processing system 1400, the scoring processing may be performed by the server 1403.

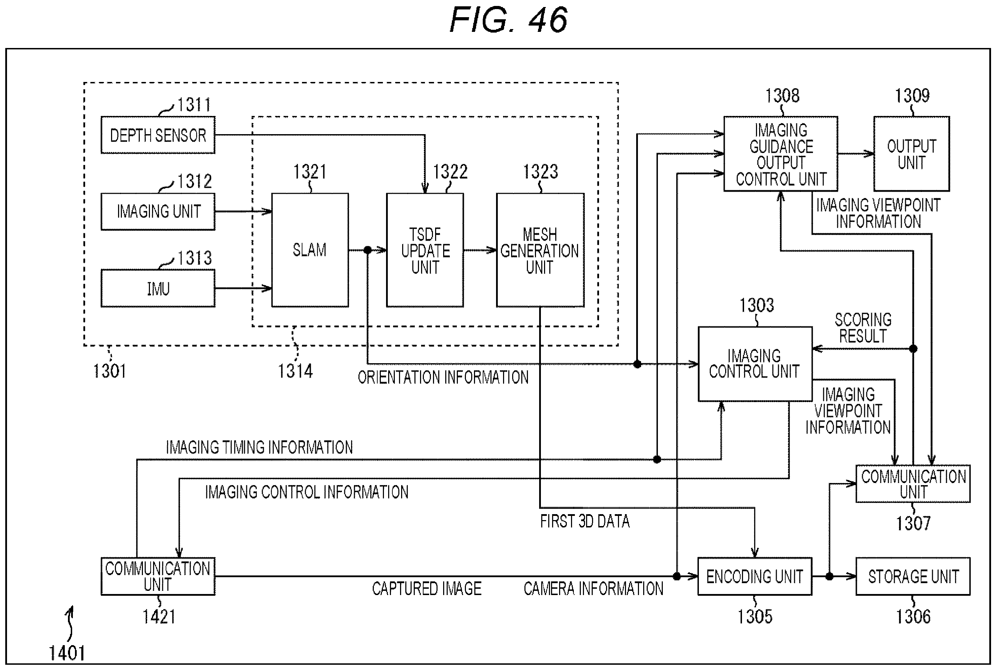

Fig. 46 illustrates a main configuration example of the imaging communication device 1401 in that case. Note that, in Fig. 46, main parts of processing units, data flows, and the like are illustrated, and those illustrated in Fig. 46 are not necessarily all. That is, the imaging communication device 1401 may include a device or a processing unit not illustrated as a block in Fig. 46. Furthermore, there may be a data flow or processing that is not illustrated as an arrow or the like in Fig. 46.

As illustrated in Fig. 46, in the imaging communication device 1401 in this case, the scoring processing unit 1302 is omitted from the configuration in Fig. 41. In this case, the communication unit 1307 supplies the imaging viewpoint information supplied from the imaging control unit 1303 to the server 1403.

Furthermore, in this case, the real-time 3D modeling processing unit 1314 (mesh generation unit 1323) supplies the generated first 3D data to the encoding unit 1305. The encoding unit 1305 encodes the first 3D data and supplies the coded data to the communication unit 1307. The communication unit 1307 supplies the coded data of the first 3D data supplied from the encoding unit 1305 to the server 1403.

Furthermore, the communication unit 1307 acquires the scoring result derived by (the scoring processing unit 1302 of) the server 1403, and supplies the scoring result to the imaging control unit 1303 and the imaging guidance output control unit 1308.

Furthermore, similarly to the case in Fig. 42, the communication unit 1307 supplies, to the server 1403, the coded data of the second captured image supplied from the encoding unit 1305.

Furthermore, in this case, the communication unit 1421 acquires the camera information (regarding the imaging unit 1332) supplied from the imaging device 1402, and supplies the camera information to the encoding unit 1305. The encoding unit 1305 encodes the camera information and supplies the encoded data to the communication unit 1307. The communication unit 1307 supplies the coded data of the camera information to the server 1403.

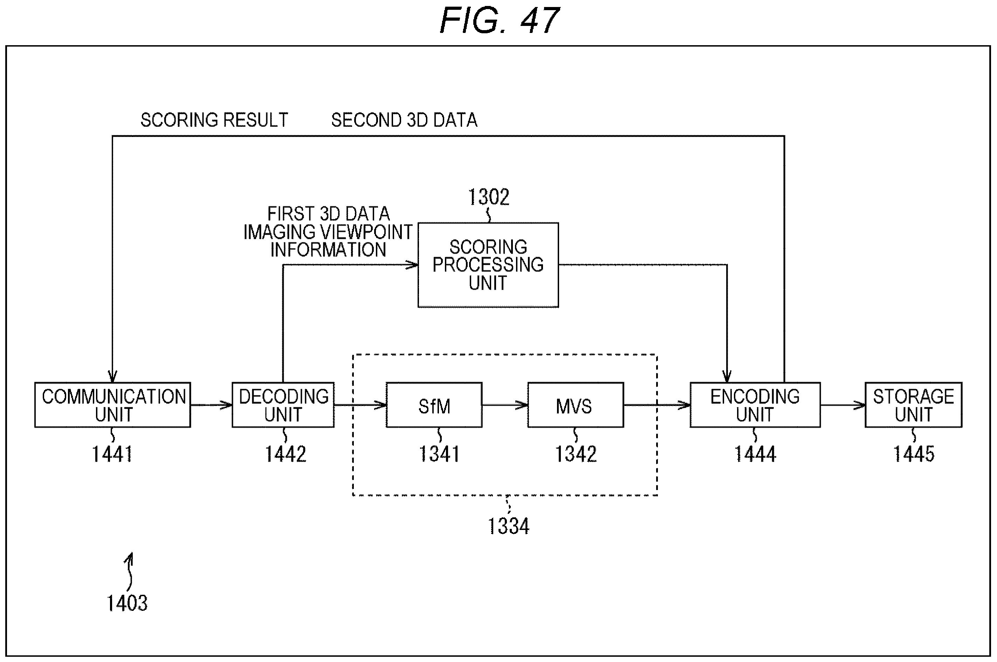

Fig. 47 is a block diagram illustrating a main configuration example of the server 1403 in this case. Note that, in Fig. 47, main parts of processing units, data flows, and the like are illustrated, and those illustrated in Fig. 47 are not necessarily all. That is, the server 1403 may include a device or a processing unit not illustrated as a block in Fig. 47. Furthermore, there may be a data flow or processing that is not illustrated as an arrow or the like in Fig. 47.

As illustrated in Fig. 47, in this case, the server 1403 includes a scoring processing unit 1302 in addition to the configuration in Fig. 43. In this case, the communication unit 1441 acquires the coded data of the first 3D data supplied from the imaging communication device 1401, and supplies the coded data to the decoding unit 1442. The decoding unit 1442 decodes the coded data to generate (restore) the first 3D data. The decoding unit 1442 supplies the first 3D data to the scoring processing unit 1302.

Furthermore, the communication unit 1441 acquires the imaging viewpoint information supplied from the imaging communication device 1401, and supplies the imaging viewpoint information to the decoding unit 1442. The decoding unit 1442 supplies the imaging control information to the scoring processing unit 1302.

Furthermore, the communication unit 1441 acquires the coded data of the camera information supplied from the imaging communication device 1401, and supplies the coded data to the decoding unit 1442. The decoding unit 1442 decodes the coded data to generate (restore) the camera information. The decoding unit 1442 supplies the camera information to the scoring processing unit 1302.

Furthermore, similarly to the case in Fig. 43, the communication unit 1441 acquires the coded data of the second captured image supplied from the imaging communication device 1401, and supplies the coded data to the decoding unit 1442. The decoding unit 1442 decodes the coded data to generate (restore) the second captured image. The decoding unit 1442 supplies the second captured image to the photogrammetry processing unit 1334.

In this case as well, the scoring processing unit 1302 performs the scoring processing 102 in Fig. 4 on the basis of the supplied first 3D data and imaging viewpoint information to derive the scoring result. Furthermore, the scoring processing unit 1302 may perform the scoring processing 102 on the basis of the camera information. The scoring processing unit 1302 supplies the scoring result to the encoding unit 1444. The encoding unit 1444 supplies the scoring result to the communication unit 1441. The communication unit 1441 supplies the scoring result to the imaging communication device 1401.

The other processing is similar to the case of Fig. 43.

Since each device has such a configuration, the information processing system 1400 can also image the 3D object in a more appropriate position and orientation and perform 3D modeling (second 3D modeling processing) using the captured image in this case. Therefore, the information processing system 1400 can generate more accurate 3D data while suppressing an increase in the load of 3D modeling. Furthermore, the information processing system 1400 can output the guidance information so that the user can perform the second imaging in a more appropriate position and orientation. That is, the information processing system 1400 can perform 3D modeling (second 3D modeling processing) using the captured image. Therefore, the information processing system 1400 can generate more accurate 3D data while suppressing an increase in the load of 3D modeling. That is, the user can perform 3D modeling more easily.

<Flow of 3D modeling processing>

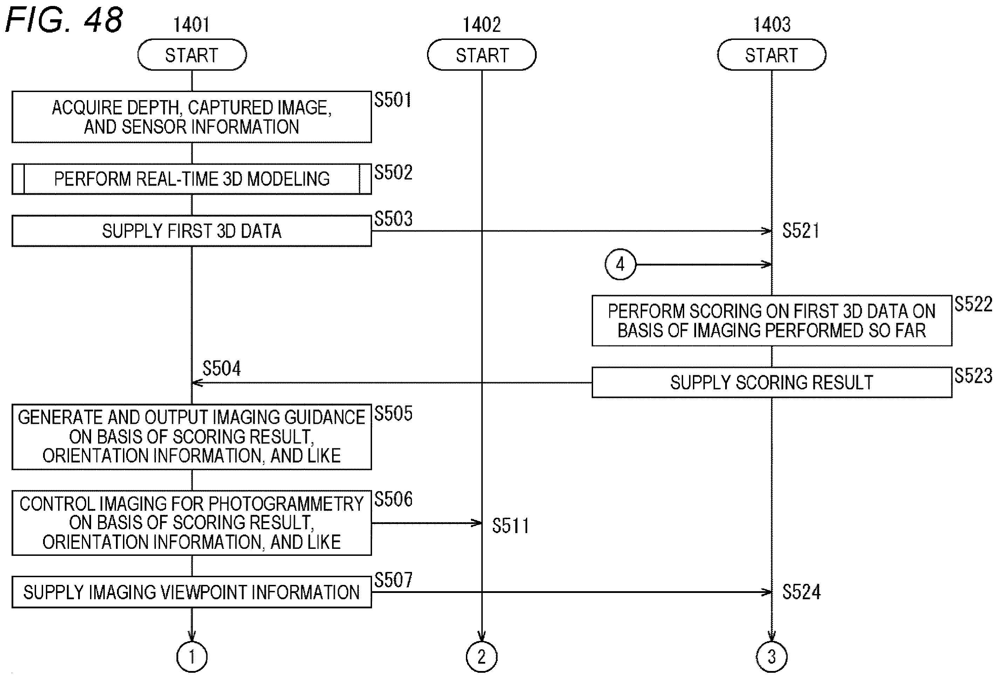

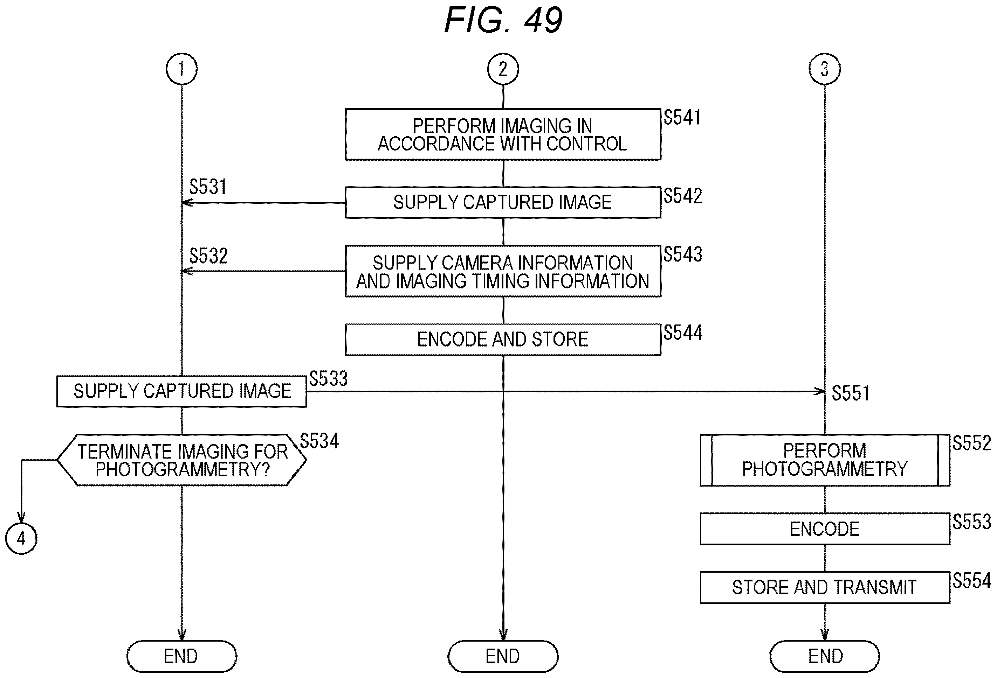

An example of a flow of the 3D modeling processing executed by the information processing system 1400 in this case will be described with reference to flowcharts in Figs. 48 and 49.

Upon the start of the 3D modeling processing, the depth sensor 1311, the imaging unit 1312, and the IMU 1313 of the imaging communication device 1401 acquire a depth, a captured image, and inertial information in step S501 in Fig. 48.

In step S502, the real-time 3D modeling processing unit 1314 of the imaging communication device 1401 executes real-time 3D modeling processing to generate the first 3D data. This real-time 3D modeling processing is executed similarly to the example in Fig. 38.

In step S503, the communication unit 1307 of the imaging communication device 1401 supplies the generated first 3D data to the server 1403. In step S521, the communication unit 1441 of the server 1403 acquires the first 3D data.

In step S522, the scoring processing unit 1302 of the server 1403 performs scoring on the first 3D data on the basis of the second imaging performed so far.

In step S523, the communication unit 1441 of the server 1403 supplies the scoring result to the imaging communication device 1401. In step S504, the communication unit 1307 of the imaging communication device 1401 acquires the scoring result.

In step S505, the imaging guidance output control unit 1308 of the imaging communication device 1401 generates imaging guidance (guidance information) for the second imaging on the basis of the scoring result, the orientation information, and the like. The output unit 1309 outputs the imaging guidance (guidance information).

In step S506, the imaging control unit 1303 of the imaging communication device 1401 generates imaging control information on the basis of which the imaging for photogrammetry (second imaging) is controlled on the basis of the scoring result, the orientation information, and the like. The communication unit 1421 supplies the imaging control information to the imaging device 1402. In step S511, the communication unit 1431 of the imaging device 1402 acquires the imaging control information.

Furthermore, in step S507, the communication unit 1307 of the imaging communication device 1401 supplies the imaging viewpoint information to the server 1403. In step S524, the communication unit 1441 of the server 1403 acquires the imaging viewpoint information.

In step S541 in Fig. 49, the imaging unit 1332 of the imaging device 1402 performs imaging (performs the second imaging) in accordance with the imaging control information to generate the second captured image. The image processing unit 1333 performs predetermined image processing on the second captured image.

In step S542, the communication unit 1431 of the imaging device 1402 supplies the second captured image to the imaging communication device 1401. In step S531, the communication unit 1421 of the imaging communication device 1401 acquires the second captured image.

Furthermore, in step S543, the communication unit 1431 of the imaging device 1402 supplies the camera information and the imaging timing information regarding the imaging unit 1332 to the imaging communication device 1401. In step S532, the communication unit 1421 of the imaging communication device 1401 acquires the camera information and the imaging timing information.

In step S544, the encoding unit 1432 of the imaging device 1402 encodes the second captured image. The storage unit 1433 stores the coded data of the second captured image.

In step S533, the encoding unit 1305 of the imaging communication device 1401 encodes the second captured image. The communication unit 1307 supplies the coded data of the second captured image to the server 1403. In step S551, the communication unit 1441 of the server 1403 acquires the coded data of the second captured image. The decoding unit 1442 decodes the coded data to generate (restore) the second captured image.

In step S552, the photogrammetry processing unit 1334 of the server 1403 performs the photogrammetry processing to generate the second 3D data. This photogrammetry processing is executed similarly to the example in Fig. 39.

In step S553, the encoding unit 1444 of the server 1403 encodes the second 3D data.

In step S554, the storage unit 1445 of the server 1403 stores the coded data. Furthermore, the communication unit 1441 transmits the coded data to another device (for example, the imaging communication device 1401 or the like).

Furthermore, in step S534, the imaging control unit 1303 of the imaging communication device 1401 determines whether or not to terminate the imaging for photogrammetry (second imaging). In a case where it is determined that the imaging for photogrammetry is not terminated, the processing returns to step S522 in Fig. 48. Furthermore, in a case where it is determined in step S534 in Fig. 49 that the imaging for photogrammetry is terminated, the 3D modeling processing ends.

By performing each processing as described above, also in this case, the information processing system 1400 can image the 3D object in a more appropriate position and orientation, and perform 3D modeling (second 3D modeling processing) using the captured image. Therefore, the information processing system 1400 can generate more accurate 3D data while suppressing an increase in the load of 3D modeling. Furthermore, the information processing system 1400 can output the guidance information so that the user can perform the second imaging in a more appropriate position and orientation. That is, the information processing system 1400 can perform 3D modeling (second 3D modeling processing) using the captured image. Therefore, the information processing system 1400 can generate more accurate 3D data while suppressing an increase in the load of 3D modeling. That is, the user can perform 3D modeling more easily.

<8. Third embodiment>

<Application of calibration processing to information processing system>

The present technology described above in <5. Imaging parameter control processing> can be applied to any information processing device. For example, the present technology can be applied to any of the systems and devices described in the first embodiment and the second embodiment.

For example, the present technology described above in <5. Imaging parameter control processing> can be applied to the imaging device 1300 in Fig. 36. Hereinafter, such a case will be described.

<Imaging device>

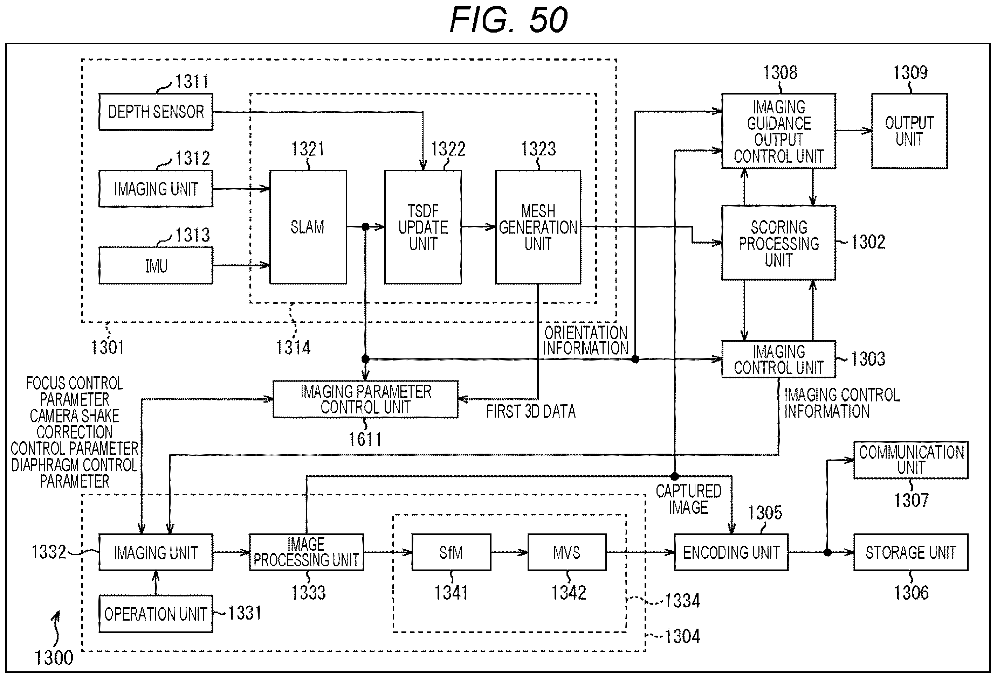

Fig. 50 is a block diagram illustrating a main configuration example of the imaging device 1300 in that case. Note that, in Fig. 50, main parts of processing units, data flows, and the like are illustrated, and those illustrated in Fig. 50 are not necessarily all. That is, the imaging device 1300 may include a device or a processing unit not illustrated as a block in Fig. 50. Furthermore, there may be a data flow or processing that is not illustrated as an arrow or the like in Fig. 50.

As illustrated in Fig. 50, in this case, the imaging device 1300 includes an imaging parameter control unit 1611 in addition to the configuration (processing units) described with reference to Fig. 36. That is, the other configurations are similar to the case of Fig. 36.

The imaging parameter control unit 1611 executes an imaging parameter control processing 106 in Fig. 4. For example, the imaging parameter control unit 1611 acquires orientation information (position and orientation information) generated by the SLAM 1321. Furthermore, the imaging parameter control unit 1611 acquires the first 3D data (first three-dimensional shape information) generated by the mesh generation unit 1323. Furthermore, the imaging parameter control unit 1611 acquires the imaging parameters from the imaging unit 1332. Then, the imaging parameter control unit 1611 controls the acquired imaging parameters on the basis of the acquired orientation information and the first 3D data. At that time, the imaging parameter control unit 1611 can apply the various present technologies described above in <5. Imaging parameter control processing>. For example, the imaging parameter control unit 1611 may control an imaging parameter applied to imaging for generating a captured image to be used for generation of the second three-dimensional shape information on the basis of the position and orientation information indicating the position and orientation of the imaging unit and the first three-dimensional shape information. Note that the first three-dimensional shape information is information representing the three-dimensional shape of the 3D object, and is generated on the basis of the position and orientation information and the captured image of the 3D object. Furthermore, the second three-dimensional shape information is information representing the three-dimensional shape of the 3D object, and is generated on the basis of a captured image (second captured image) of the 3D object generated by imaging (second imaging) to which the imaging parameter is applied. The imaging parameter control unit 1611 supplies the controlled imaging parameter to the imaging unit 1332.

The imaging unit 1332 (second imaging unit) performs second imaging by applying the imaging parameter, and generates a second captured image.

Furthermore, the image processing unit 1333 (association unit) associates the imaging parameter controlled by the imaging parameter control unit 1611 with the second captured image generated by the imaging unit 1332.

Furthermore, the storage unit 1306 stores the second captured image generated by the imaging unit 1332. Furthermore, the communication unit 1307 transmits the second captured image generated by the imaging unit 1332. Furthermore, the photogrammetry processing unit 1334 generates second 3D data (second three-dimensional shape information) on the basis of the second captured image generated by the imaging unit 1332.

<Flow of 3D modeling processing>

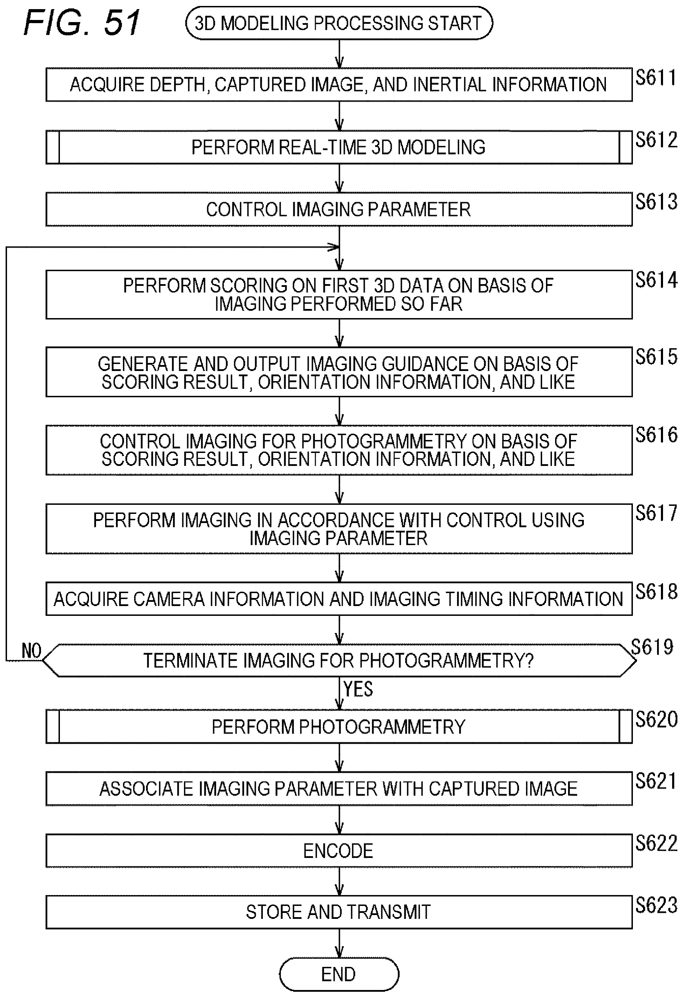

An example of a flow of the 3D modeling processing executed by the imaging device 1300 in this case will be described with reference to a flowchart in Fig. 51.

When the 3D modeling processing is started, each processing of steps S611 and S612 is executed similarly to each processing of steps S301 and S302 of Fig. 37.

In step S613, the imaging parameter control unit 1611 controls the imaging parameter applied in the imaging unit 1332 by applying the various present technologies described above in <5. Imaging parameter control processing>. When the processing of step S613 ends, the processing proceeds to step S614.

Then, each processing of steps S614 to S620 is executed similarly to each processing of steps S303 to S309 in Fig. 37.

In step S621, the image processing unit 1333 associates (links) the imaging parameter controlled in step S613 with the captured image (second captured image) generated in step S620. When the processing of step S621 ends, the processing proceeds to step S622.

Each processing of steps S622 and S623 is performed similarly to the processing of steps S310 and S311 of Fig. 37. When the processing of step S623 ends, the 3D modeling processing ends.

By doing so, the imaging device 1300 can suppress a reduction in the quality of the 3D model (second 3D data).

<Flow of focus control processing>

Note that the imaging parameter may include a focus control parameter. Then, the imaging parameter control unit 1611 may predict the focus position on the basis of the position and orientation information and the first three-dimensional shape information, and reflect the prediction result in the focus control parameter. Furthermore, the focus control parameter may include a command value of a focus lens position.

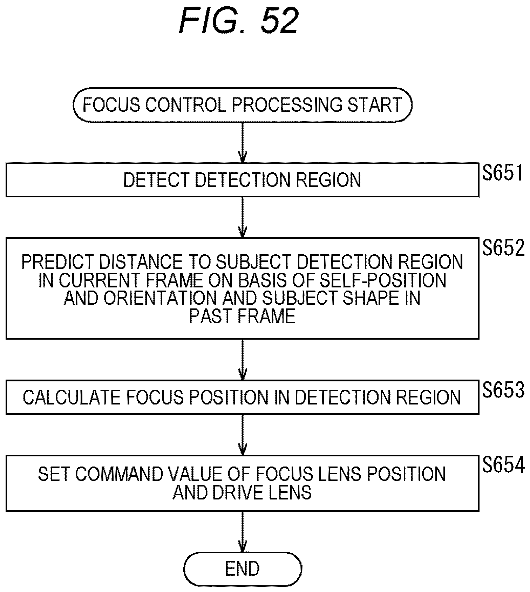

In this case, in step S613 of the 3D modeling processing in Fig. 51, focus control processing is executed as imaging parameter control processing. An example of a flow of the focus control processing is described with reference to a flowchart in Fig. 52.

When the focus control processing is started, the imaging parameter control unit 1611 detects the detection region in step S651. At that time, the imaging parameter control unit 1611 may detect the detection region on the basis of the position and orientation information and the first three-dimensional shape information. Furthermore, the imaging parameter control unit 1611 may detect a portion of the 3D object directly facing the imaging unit 1332 as the detection region. Furthermore, the imaging parameter control unit 1611 may detect an overlap region between the past imaging range and the current imaging range as the detection region.

In step S652, the imaging parameter control unit 1611 predicts the distance to the subject detection region in the current frame on the basis of the self-position and orientation and the subject shape in the past frame.

In step S653, the imaging parameter control unit 1611 calculates the focus position in the detection region.

In step S654, the imaging parameter control unit 1611 sets a command value of the focus lens position and drives the lens.

When the processing at step S654 ends, the focus control processing ends, and the processing returns to Fig. 51.

<Flow of diaphragm control processing>

Note that the imaging parameter may include a diaphragm control parameter. Then, the imaging parameter control unit 1611 may predict the diaphragm position on the basis of the position and orientation information and the first three-dimensional shape information, and reflect the prediction result in the diaphragm control parameter. Furthermore, the diaphragm control parameter may include a command value of a diaphragm position.

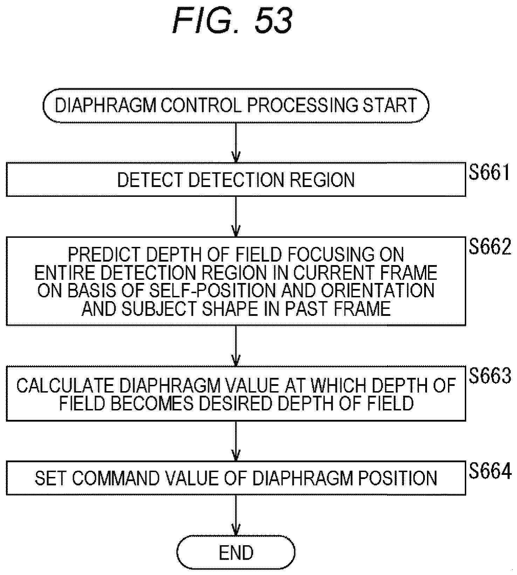

In this case, in step S613 of the 3D modeling processing in Fig. 51, the diaphragm control processing is executed as the imaging parameter control processing. An example of a flow of the diaphragm control processing is described with reference to a flowchart in Fig. 53.

When the diaphragm control processing is started, the imaging parameter control unit 1611 detects the detection region in step S661. This processing is similar to the case of the processing in step S651 (Fig. 52).

In step S662, the imaging parameter control unit 1611 predicts the depth of field focusing on the entire detection region in the current frame on the basis of the self-position and orientation and the subject shape in the past frame.

In step S663, the imaging parameter control unit 1611 calculates the diaphragm value at which the depth of field is the predicted value.

In step S664, the imaging parameter control unit 1611 sets a command value of the diaphragm value and drives the diaphragm.

When the processing at step S664 ends, the diaphragm control processing ends, and the processing returns to Fig. 51.

<Flow of camera shake correction control processing>

Note that the imaging parameter may include a camera shake correction control parameter. Then, the imaging parameter control unit 1611 may estimate the motion of the imaging unit 1332 on the basis of the position and orientation information and the first three-dimensional shape information, and reflect the estimation result in the camera shake correction control parameter. Furthermore, the camera shake correction control parameter may include the imager shaft position. Furthermore, the camera shake correction control parameter may include a camera shake correction lens position.

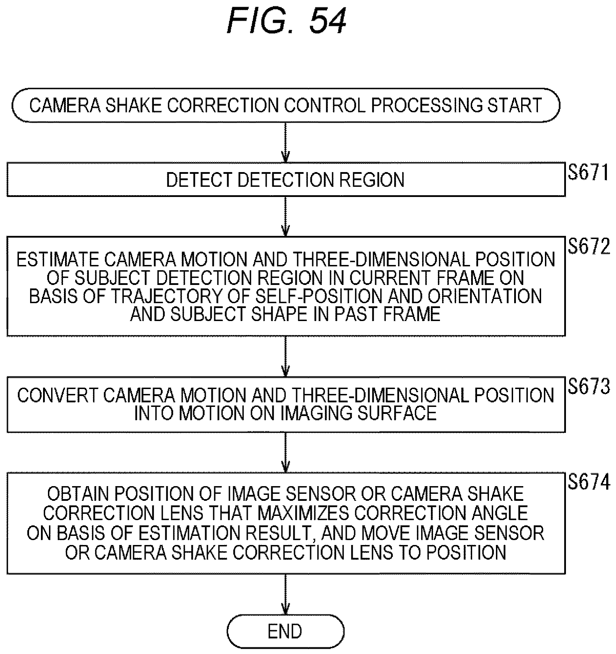

In this case, in step S613 of the 3D modeling processing in Fig. 51, the camera shake correction control processing is executed as the imaging parameter control processing. An example of a flow of the camera shake correction control processing is described with reference to a flowchart in Fig. 54.

When the camera shake correction control processing is started, the imaging parameter control unit 1611 detects the detection region in step S671. This processing is similar to the case of the processing in step S651 (Fig. 52).

In step S672, the imaging parameter control unit 1611 estimates the motion (camera motion) of the imaging unit 1332 and the three-dimensional position of the detection region of the subject in the current frame on the basis of the trajectory of the self-position and orientation and the subject shape in the past frame.

In step S673, the imaging parameter control unit 1611 converts the estimated camera motion and the three-dimensional position of the detection region of the subject into motion on the imaging surface of the imaging unit 1332.

In step S674, the imaging parameter control unit 1611 obtains the position of the image sensor or the camera shake correction lens that maximizes the correction angle on the basis of the estimation result, and moves the image sensor or the camera shake correction lens to the position.

When the processing at step S674 ends, the camera shake correction control processing ends, and the processing returns to Fig. 51.

<Imaging device>

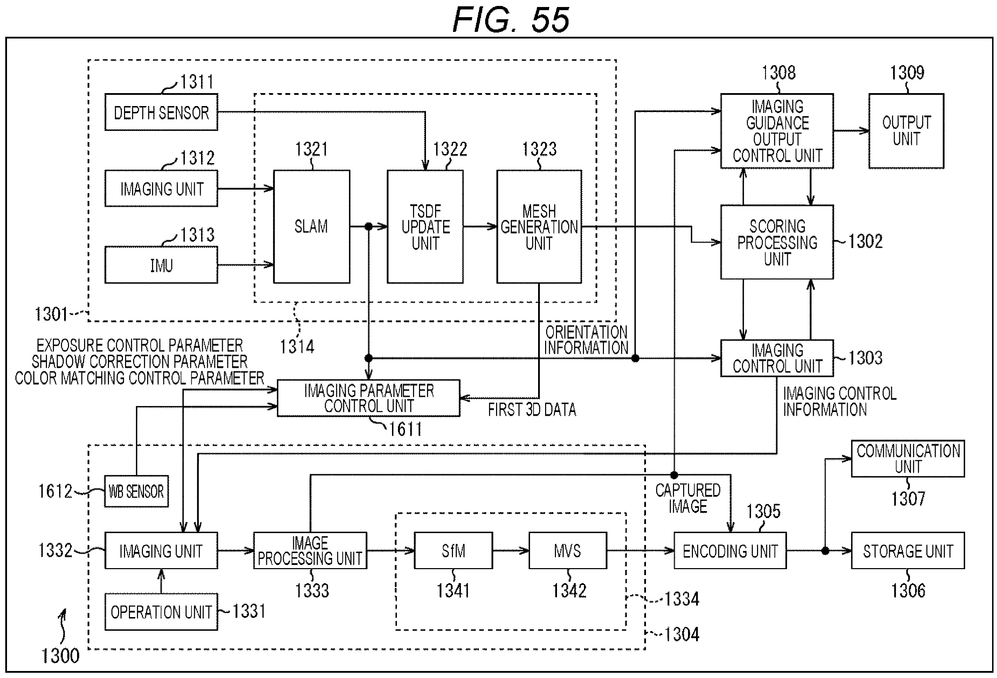

Note that the imaging device 1300 may further include a WB sensor 1612 as in the example illustrated in Fig. 55. The WB sensor 1612 detects surrounding color information and supplies the color information to the imaging parameter control unit 1611. In this case, the imaging parameter control unit 1611 may acquire the surrounding color information and use the acquired color information for control of the imaging parameters.

<Flow of exposure control processing>

Note that the imaging parameter may include an exposure control parameter. Then, the imaging parameter control unit 1611 may derive an allowable amount of change in exposure on the basis of the position and orientation information and the first three-dimensional shape information, and control the exposure control parameter so that the amount of change in exposure is less than or equal to the allowable amount. Furthermore, the exposure control parameter may include an analog gain value. Furthermore, the exposure control parameter may include a digital gain value. Furthermore, the exposure control parameter may include a shutter speed. Furthermore, the exposure control parameter may include a command value of a diaphragm position. Furthermore, the exposure control parameter may include a variable ND filter setting value. Furthermore, the exposure control parameter may include a strobe light emission control value.

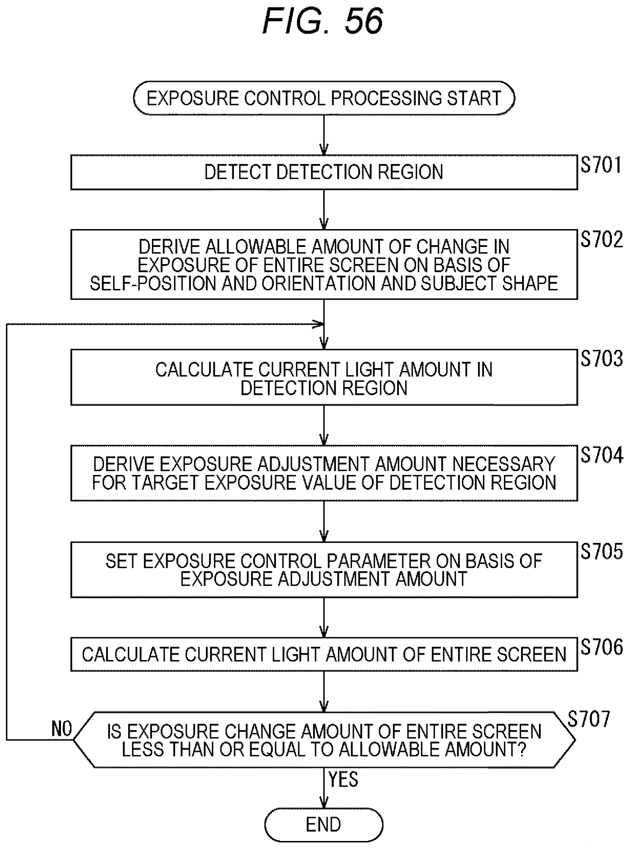

In this case, in step S613 of the 3D modeling processing in Fig. 51, exposure control processing is executed as imaging parameter control processing. An example of a flow of the exposure control processing is described with reference to a flowchart in Fig. 56.

When the exposure control processing is started, the imaging parameter control unit 1611 detects the detection region in step S701. This processing is similar to the case of the processing in step S651 (Fig. 52).

In step S702, the imaging parameter control unit 1611 derives an allowable amount of change in exposure of the entire screen on the basis of the self-position and orientation and the subject shape. For example, the imaging parameter control unit 1611 images a portion where the shape of the 3D object is relatively simple, sets the allowable amount to a small value in a case where the change amount of the orientation is small with respect to the change amount of the position, images a portion where the shape of the 3D object is relatively complex, and sets the allowable amount to a large value in a case where the change amount of the orientation is large with respect to the change amount of the position.

In step S703, the imaging parameter control unit 1611 calculates the current light amount in the detection region.

In step S704, the imaging parameter control unit 1611 derives an exposure adjustment amount necessary for the target exposure value of the detection region on the basis of the light amount.

In step S705, the imaging parameter control unit 1611 sets the exposure control parameter so as to change (increase or decrease) the exposure by the exposure adjustment amount on the basis of the exposure adjustment amount.

In step S706, the imaging parameter control unit 1611 calculates the current light amount of the entire screen, that is, the light amount of the entire screen to which the exposure control parameter is applied.

In step S707, the imaging parameter control unit 1611 determines whether or not the exposure change amount of the entire screen is less than or equal to the allowable amount set in step S702. In a case where it is determined that the exposure change amount of the entire screen is larger than the allowable amount, the imaging parameter control unit 1611 controls the exposure control parameter so that the exposure change amount becomes small. Then, the processing returns to step S703 and the subsequent processing is repeated.

Then, in a case where it is determined in step S707 that the exposure change amount of the entire screen is less than or equal to the allowable amount set in step S702, the exposure control process ends, and the process returns to Fig. 51.

<Flow of shadow correction control processing>

Note that the imaging parameter may include a shadow correction parameter. Then, the imaging parameter control unit 1611 may estimate the light source, and control the shadow correction parameter so as to reduce the contrast due to the light source on the basis of the estimated light source information, the position and orientation information, and the first three-dimensional shape information. Furthermore, the imaging parameter control unit 1611 may estimate the light source on the basis of the illumination environment detection result. Furthermore, the shadow correction parameter may include an analog gain value. Furthermore, the shadow correction parameter may include a digital gain value. Furthermore, the shadow correction parameter may include a shutter speed. Furthermore, the shadow correction parameter may include a command value of a diaphragm position. Furthermore, the shadow correction parameter may include a variable ND filter setting value. Furthermore, the shadow correction parameter may include a strobe light emission control value.

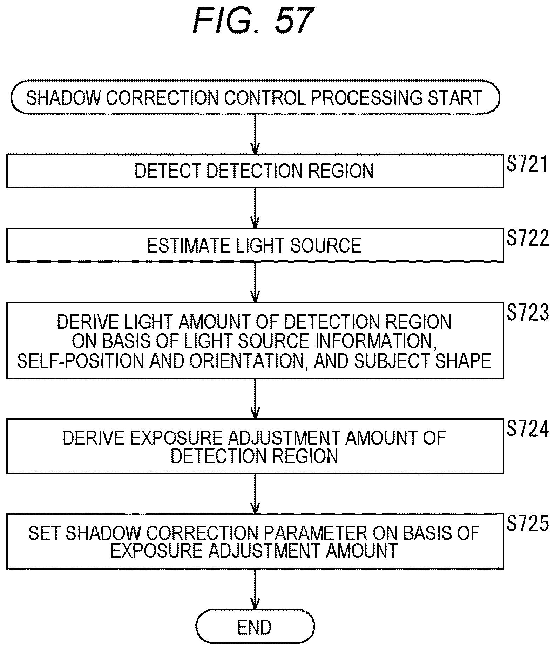

In this case, in step S613 of the 3D modeling processing in Fig. 51, the shadow correction control processing is executed as the imaging parameter control processing. An example of a flow of the shadow correction control processing will be described with reference to a flowchart of Fig. 57.

When the shadow correction control processing is started, the imaging parameter control unit 1611 detects the detection region in step S721. This processing is similar to the case of the processing in step S651 (Fig. 52).

In step S722, the imaging parameter control unit 1611 estimates the light source.

In step S723, the imaging parameter control unit 1611 calculates the light amount of the detection region on the basis of the information (light source information) regarding the estimated light source, the self-position and orientation, and the subject shape.

In step S724, the imaging parameter control unit 1611 derives the exposure adjustment amount of the detection region on the basis of the light amount.

In step S725, the imaging parameter control unit 1611 sets the shadow correction parameter on the basis of the exposure adjustment amount so as to change (increase or decrease) the exposure by the exposure adjustment amount. When the processing at step S725 ends, the shadow correction control processing ends, and the processing returns to Fig. 51.

<Flow of color matching control processing>

Note that the imaging parameter may include a color matching control parameter. Then, the imaging parameter control unit 1611 may control the color matching control parameter on the basis of the past captured image. Furthermore, the imaging parameter control unit 1611 may further control the color matching control parameter on the basis of the color information detection result. Furthermore, the color matching control parameter may include a white balance correction gain value. Furthermore, the color matching control parameter may include a color matrix coefficient value.

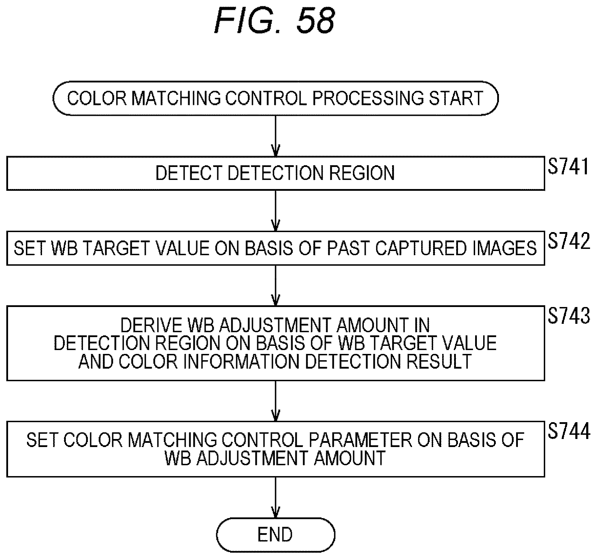

In this case, in step S613 of the 3D modeling processing in Fig. 51, color matching control processing is executed as imaging parameter control processing. An example of a flow of the shadow correction control processing will be described with reference to a flowchart of Fig. 58.

When the color matching control processing is started, the imaging parameter control unit 1611 detects the detection region in step S741. This processing is similar to the case of the processing in step S651 (Fig. 52).

In step S742, the imaging parameter control unit 1611 sets a WB target value (target value of white balance) on the basis of the past captured images.

In step S743, the imaging parameter control unit 1611 derives the WB adjustment amount in the detection region on the basis of the WB target value and the color information detection result.

In step S744, the imaging parameter control unit 1611 sets the color matching control parameter on the basis of the WB adjustment amount.

When the processing at step S744 ends, the color matching control processing ends, and the processing returns to Fig. 51.

By executing each process as described above, the imaging device 1300 can suppress a reduction in the quality of the 3D model generated by the second 3D modeling.

<Application of illumination environment detection unit>

Furthermore, in the imaging device 1300 of Fig.

36, an illumination environment detection unit that detects an illumination environment of a space where imaging is performed may be provided in the imaging unit 1332. Then, the imaging unit 1332 may perform imaging for generating a captured image used to generate three-dimensional shape information representing the three-dimensional shape of the 3D object in the space. Moreover, the image processing unit 1333 may associate the information regarding the illumination environment detected by the illumination environment detection unit with the captured image generated by the imaging unit 1332.

In this case, the information regarding the illumination environment may include a captured image having a wide viewing angle. Furthermore, the captured image having the wide viewing angle may be a hemispherical image having a hemispherical viewing angle. Furthermore, the captured image having the wide viewing angle may be an omnidirectional image having a spherical viewing angle. Furthermore, the illumination environment detection unit may detect the illumination environment in the upward direction of the imaging unit 1332.

Furthermore, the storage unit 1306 may store a captured image associated with the information regarding the illumination environment. Furthermore, the communication unit 1307 may transmit a captured image associated with the information regarding the illumination environment. Furthermore, the encoding unit 1305 may encode the captured image associated with the information regarding the illumination environment.

By doing so, the information regarding the illumination environment of the space where the imaging is performed can be used in the image processing in the subsequent stage.

<Application of the present technology to other devices>

Furthermore, the present technology described above in <5. Imaging parameter control processing> can be applied to, for example, the terminal device 1410 (Fig. 40). That is, the present technology described above in <5. Imaging parameter control processing> can be applied to the imaging communication device 1401. Furthermore, the present technology described above in <5. Imaging parameter control processing> can be applied to the imaging device 1402.

In a case where the present technology described above in <5. Imaging parameter control processing> is applied to the imaging communication device 1401, for example, the imaging parameter control unit 1611 in Fig. 50 or 55 is only required to be added to the configuration of the imaging communication device 1401 illustrated in Fig. 41 or 46. In that case, the imaging parameters of the imaging unit 1332 are exchanged between the imaging communication device 1401 and the imaging device 1402. Furthermore, in a case where the present technology described above in <5. Imaging parameter control processing> is applied to the imaging communication device 1401, for example, the imaging parameter control unit 1611 in Fig. 50 or 55 is only required to be added to the configuration of the imaging device 1402 illustrated in Fig. 42. In this case, the orientation information generated in the SLAM 132 and the first 3D data generated in the mesh generation unit 1323 are exchanged between the imaging communication device 1401 and the imaging device 1402.

Furthermore, in the imaging device 1402 of Fig. 42, an illumination environment detection unit that detects an illumination environment of a space where imaging is performed may be provided in the imaging unit 1332. Then, the imaging unit 1332 may perform imaging for generating a captured image used to generate three-dimensional shape information representing the three-dimensional shape of the 3D object in the space. Moreover, the image processing unit 1333 may associate the information regarding the illumination environment detected by the illumination environment detection unit with the captured image generated by the imaging unit 1332.

<9. Supplementary note>

<Computer>

The above-described series of processing can be performed by hardware or software. In a case where the series of processing is performed by the software, a program that forms the software is installed in a computer. Here, examples of the computer include, for example, a computer that is built in dedicated hardware, a general-purpose personal computer that can perform various functions by being installed with various programs, and the like.

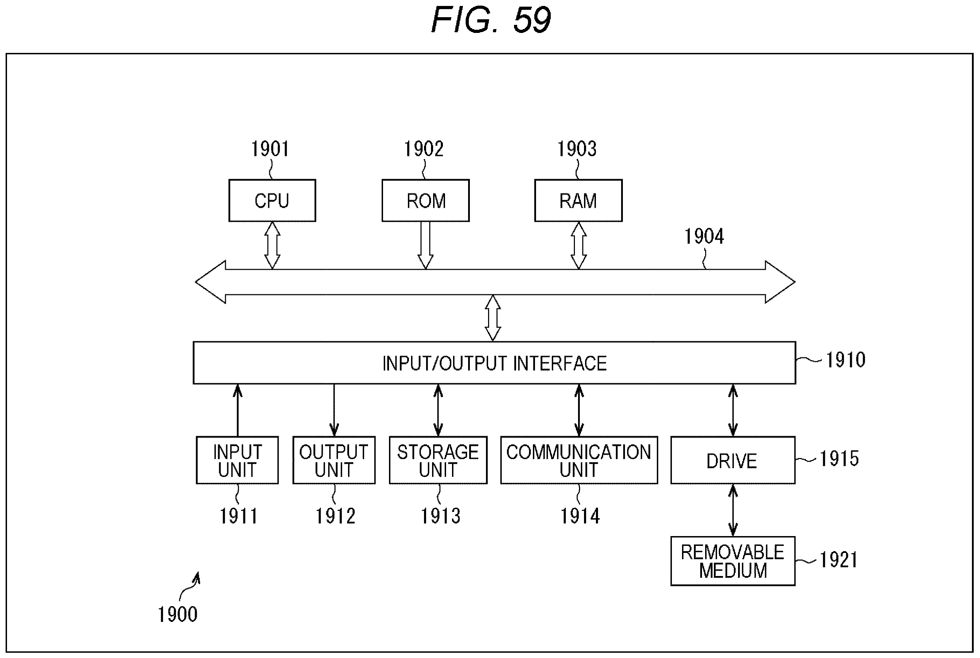

Fig. 59 is a block diagram illustrating a configuration example of hardware of the computer that executes the above-described series of processing by a program.

In a computer 1900 illustrated in Fig. 59, a central processing unit (CPU) 1901, a read only memory (ROM) 1902, and a random access memory (RAM) 1903 are interconnected via a bus 1904.

The bus 1904 is also connected with an input/output interface 1910. An input unit 1911, an output unit 1912, a storage unit 1913, a communication unit 1914, and a drive 1915 are connected to the input/output interface 1910.

The input unit 1911 includes, for example, a keyboard, a mouse, a microphone, a touch panel, an input terminal, or the like. The output unit 1912 includes, for example, a display, a speaker, an output terminal, or the like. The storage unit 1913 includes, for example, a hard disk, a RAM disk, a non-volatile memory, or the like. The communication unit 1914 includes, for example, a network interface. The drive 1915 drives a removable recording medium 1921 such as a magnetic disk, an optical disc, a magneto-optical disk, or a semiconductor memory.

In the computer configured as described above, for example, the CPU 1901 loads a program stored in the storage unit 1913 into the RAM 1903 via the input/output interface 1910 and the bus 1904 and executes the program. Therefore, the series of processing described above is performed. The RAM 1903 may appropriately store data and the like necessary for the CPU 1901 to perform various types of processing.

The program executed by the computer may be recorded in the removable recording medium 1921 as a package medium or the like and applied, for example. In that case, the program may be read from the removable recording medium 1921 attached to the drive 1915 and installed in the storage unit 1913 via the input/output interface 1910.

Furthermore, this program may be provided via any wired or wireless transmission medium such as a local area network, the Internet, digital satellite broadcasting, or the like. In this case, the program may be received by the communication unit 1914 and installed in the storage unit 1913 via the input/output interface 1910.

Furthermore, the program may be installed in the ROM 1902, the storage unit 1913, or both in advance.

<Applicable target of present technology>

The present technology may be applied to any configuration. For example, the present technology may be applied to various electronic equipment.

Furthermore, for example, the present technology can also be implemented as a partial configuration of a device, such as a processor (for example, a video processor) as a system large scale integration (LSI) or the like, a module (for example, a video module) using a plurality of the processors or the like, a unit (for example, a video unit) using a plurality of the modules or the like, or a set (for example, a video set) obtained by further adding other functions to the unit.

Furthermore, for example, the present technology can also be applied to a network system including a plurality of devices. For example, the present technology may be implemented as cloud computing shared and processed in cooperation by a plurality of devices via a network. For example, the present technology may be implemented in a cloud service that provides a service related to an image (moving image) to any terminal such as a computer, an audio visual (AV) device, a portable information processing terminal, or an Internet of Things (IoT) device.

Note that, in the present specification, a system means a set of a plurality of configuration elements (devices, modules (parts) and the like), and it does not matter whether or not all the configuration elements are in the same housing. Therefore, a plurality of devices stored in different housings and connected via a network and one device in which a plurality of modules is stored in one housing are both systems.

<Others>

Note that, in this specification, the term "associating" means, for example, when processing one data, allowing other data to be used (to be linked), for example. That is, the data associated with each other may be collected as one data or may be made individual data. For example, information associated with certain data may be transmitted on a transmission path different from that of the data. Furthermore, for example, the information associated with certain data may be recorded in a recording medium different from that of the data (or another recording area of the same recording medium). Note that, this "association" may be of not entire data but a part of data. For example, moving 3D data and information corresponding to the moving 3D data may be associated with each other in any unit such as a plurality of frames, one frame, or a part within a frame.

Note that, in the present specification, terms such as "combine", "multiplex", "add", "merge", "include", "store", "put in", "introduce", and "insert" mean, for example, to combine a plurality of objects into one, such as to combine coded data and metadata into one data, and mean one method of "associating" described above.

Furthermore, the embodiments of the present technology are not limited to the above-described embodiments, and various modifications are possible without departing from the scope of the present technology.

For example, a configuration described as one device (or processing unit) may be divided and configured as a plurality of devices (or processing units). Conversely, configurations described above as a plurality of devices (or processing units) may be collectively configured as one device (or processing unit). Furthermore, it goes without saying that a configuration other than the above-described configurations may be added to the configuration of each device (or each processing unit). Moreover, as long as the configuration and operation of the entire system are substantially the same, a part of the configuration of a certain device (or processing unit) may be included in the configuration of another device (or another processing unit).

Furthermore, for example, the above-described programs may be executed in an arbitrary device. In this case, the device is only required to have a necessary function (functional block or the like) and obtain necessary information.

Furthermore, for example, each step in one flowchart may be executed by one device, or may be executed by being shared by a plurality of devices. Moreover, in a case where a plurality of pieces of processing is included in one step, the plurality of pieces of processing may be performed by one device, or may be shared and performed by a plurality of devices. In other words, the plurality of pieces of processing included in one step can also be performed as pieces of processing of a plurality of steps. Conversely, processing described as a plurality of steps can also be collectively executed as one step.

Furthermore, for example, in a program executed by the computer, processing of steps describing the program may be executed in a time-series order in the order described in the present specification, or may be executed in parallel or individually at a required timing such as when a call is made. That is, the pieces of processing of the respective steps may be performed in an order different from the above-described order as long as there is no contradiction. Moreover, this processing in steps describing program may be executed in parallel with processing of another program, or may be executed in combination with processing of another program.

Furthermore, for example, a plurality of technologies related to the present technology can be implemented independently as a single entity as long as there is no contradiction. It goes without saying that any plurality of present technologies can be implemented in combination. For example, a part or all of the present technologies described in any of the embodiments can be implemented in combination with a part or all of the present technologies described in other embodiments. Furthermore, a part or all of any of the above-described present technologies can be implemented together with another technology that is not described above.

Note that the present technology may also provide the following configurations.

(1) An information processing device including

an imaging parameter control unit that controls an imaging parameter applied to imaging for generating a captured image to be used for generation of second three-dimensional shape information on the basis of position and orientation information indicating a position and an orientation of an imaging unit and first three-dimensional shape information, in which
the first three-dimensional shape information includes information expressing a three-dimensional shape of a 3D object, and is generated on the basis of the position and orientation information and a captured image of the 3D object, and
the second three-dimensional shape information includes information expressing a three-dimensional shape of the 3D object, and is generated on the basis of the captured image of the 3D object generated by the imaging to which the imaging parameter is applied.

(2) The information processing device according to (1), in which
the imaging parameter includes a focus control parameter.
(3) The information processing device according to (2), in which
the imaging parameter control unit predicts a focus position on the basis of the position and orientation information and the first three-dimensional shape information, and reflects a prediction result in the focus control parameter.
(4) The information processing device according to (2) or (3), in which
the focus control parameter includes a command value of a focus lens position.
(5) The information processing device according to any one of (1) to (4), in which
the imaging parameter includes a diaphragm control parameter.
(6) The information processing device according to (5), in which
the imaging parameter control unit predicts an appropriate depth of field on the basis of the position and orientation information and the first three-dimensional shape information, and reflects a prediction result in the diaphragm control parameter.
(7) The information processing device according to (5) or (6), in which
the diaphragm control parameter includes a command value of a diaphragm position.
(8) The information processing device according to any one of (1) to (7), in which
the imaging parameter includes a camera shake correction control parameter.
(9) The information processing device according to (8), in which
the imaging parameter control unit estimates a motion of the imaging unit on the basis of the position and orientation information and the first three-dimensional shape information, and reflects an estimation result in the camera shake correction control parameter.
(10) The information processing device according to (8) or (9), in which
the camera shake correction control parameter includes an imager shaft position.
(11) The information processing device according to any one of (8) to (10), in which
the camera shake correction control parameter includes a camera shake correction lens position.
(12) The information processing device according to any one of (1) to (11), in which
the imaging parameter includes an exposure control parameter.
(13) The information processing device according to (12), in which
the imaging parameter control unit derives an allowable amount of change in exposure on the basis of the position and orientation information and the first three-dimensional shape information, and controls the exposure control parameter so that an amount of change in exposure is less than or equal to the allowable amount.
(14) The information processing device according to (12) or (13), in which
the exposure control parameter includes an analog gain value.

(15) The information processing device according to any one of (12) to (14), in which
the exposure control parameter includes a digital gain value.

(16) The information processing device according to any one of (12) to (15), in which
the exposure control parameter includes a shutter speed.

(17) The information processing device according to any one of (12) to (16), in which
the exposure control parameter includes a command value of a diaphragm position.

(18) The information processing device according to any one of (12) to (17), in which
the exposure control parameter includes a variable ND filter setting value.

(19) The information processing device according to any one of (12) to (18), in which
the exposure control parameter includes a strobe light emission control value.

(20) The information processing device according to any one of (1) to (19), in which
the imaging parameter includes a shadow correction parameter.

(21) The information processing device according to (20), in which
the imaging parameter control unit estimates a light source, and controls the shadow correction parameter on the basis of information of the estimated light source, the position and orientation information, and the first three-dimensional shape information.

(22) The information processing device according to (21), in which
the imaging parameter control unit estimates the light source on the basis of an illumination environment detection result.

(23) The information processing device according to any one of (20) to (22), in which
the shadow correction parameter includes an analog gain value.

(24) The information processing device according to any one of (20) to (23), in which
the shadow correction parameter includes a digital gain value.

(25) The information processing device according to any one of (20) to (24), in which
the shadow correction parameter includes a shutter speed.

(26) The information processing device according to any one of (20) to (25), in which
the shadow correction parameter includes a command value of a diaphragm position.

(27) The information processing device according to any one of (20) to (26), in which
the shadow correction parameter includes a variable ND filter setting value.

(28) The information processing device according to any one of (20) to (27), in which
the shadow correction parameter includes a strobe light emission control value.

(29) The information processing device according to any one of (1) to (28), in which
the imaging parameter includes a color matching control parameter.

(30) The information processing device according to (29), in which
the imaging parameter control unit controls the color matching control parameter on the basis of a past captured image.

(31) The information processing device according to (30), in which
the imaging parameter control unit further controls the color matching control parameter on the basis of a color information detection result.

(32) The information processing device according to any one of (29) to (31), in which
the color matching control parameter includes a white balance correction gain value.

(33) The information processing device according to any one of (29) to (32), in which
the color matching control parameter includes a color matrix coefficient value.

(34) The information processing device according to any one of (1) to (33), in which
the imaging parameter control unit detects a detection region on the basis of the position and orientation information and the first three-dimensional shape information.

(35) The information processing device according to (34), in which
the imaging parameter control unit detects a portion of the 3D object directly facing the imaging unit as the detection region.

(36) The information processing device according to (34) or (35), in which
the imaging parameter control unit detects an overlap region between a past imaging range and a current imaging range as the detection region.

(37) The information processing device according to any one of (1) to (36), further including
a first 3D modeling unit that generates the first three-dimensional shape information on the basis of the position and orientation information and the captured image of the 3D object.

(38) The information processing device according to any one of (1) to (37), further including
a first imaging unit that performs imaging for generating a captured image to be used for generation of the first three-dimensional shape information.

(39) The information processing device according to any one of (1) to (38), further including
a position and orientation detection unit that detects a position and an orientation of the imaging unit and generates the position and orientation information.

(40) The information processing device according to any one of (1) to (39), further including

a second imaging unit that performs the imaging to which the imaging parameter is applied.

(41) The information processing device according to (40), further including

an association unit that associates the imaging parameter with a second captured image generated by the second imaging unit.

(42) The information processing device according to (40) or (41), further including

a storage unit that stores a second captured image generated by the second imaging unit.

(43) The information processing device according to any one of (40) to (42), further including

a communication unit that transmits a second captured image generated by the second imaging unit.

(44) The information processing device according to any one of (40) to (43), further including

a second 3D modeling unit that generates the second three-dimensional shape information on the basis of a second captured image generated by the second imaging unit.

(45) The information processing device according to any one of (1) to (44), further including

a scoring processing unit that evaluates accuracy of the second three-dimensional shape information that can be generated by using the first three-dimensional shape information, and generates a scoring result.

(46) The information processing device according to any one of (1) to (45), further including

an imaging control unit that controls the imaging for generating the captured image to be used for generation of the second three-dimensional shape information on the basis of the first three-dimensional shape information.

(47) The information processing device according to any one of (1) to (46), further including

a guidance information output control unit that generates guidance information for the imaging to generate the captured image to be used for generation of the second three-dimensional shape information on the basis of the first three-dimensional shape information, and controls an output of the guidance information.

(48) An information processing method including

controlling an imaging parameter applied to imaging for generating a captured image to be used for generation of second three-dimensional shape information on the basis of position and orientation information indicating a position and an orientation of an imaging unit and first three-dimensional shape information, in which

the first three-dimensional shape information includes information expressing a three-dimensional shape of a 3D object, and is generated on the basis of the position and orientation information and a captured image of the 3D object, and the second three-dimensional shape information includes information expressing a three-dimensional shape of the 3D object, and is generated on the basis of the captured image of the 3D object generated by the imaging to which the imaging parameter is applied.

(51) An information processing device including:

an illumination environment detection unit that detects an illumination environment of a space in which imaging is performed;
an imaging unit that performs, in the space, the imaging for generating a captured image to be used for generation of three-dimensional shape information expressing a three-dimensional shape of a 3D object; and
an association unit that associates information regarding the detected illumination environment with the captured image.

(52) The information processing device according to (51), in which

the information regarding the illumination environment includes a captured image having a wide viewing angle.

(53) The information processing device according to (52), in which

the captured image includes a hemispherical image having a hemispherical viewing angle.

(54) The information processing device according to (52) or (53), in which

the captured image is an omnidirectional image having a spherical viewing angle.

(55) The information processing device according to any one of (51) to (54), in which

the illumination environment detection unit detects the illumination environment in an upward direction of the imaging unit.

(56) The information processing device according to any one of (51) to (55), further including

a storage unit that stores the captured image associated with the information regarding the illumination environment.

(57) The information processing device according to any one of (51) to (56), further including

a communication unit that transmits the captured image associated with the information regarding the illumination environment.

(58) The information processing device according to any one of (51) to (57), further including

an encoding unit that encodes the captured image associated with the information regarding the illumination environment.

(59) An information processing method including:

detecting an illumination environment of a space in which imaging is performed;

performing, in the space, the imaging for generating a captured image to be used for generation of three-dimensional shape information expressing a three-dimensional shape of a 3D object; and

associating information regarding the detected illumination environment with the captured image.

REFERENCE SIGNS LIST

| | |
|---|---|
| 101 | First 3D data generation processing |
| 102 | Scoring processing |
| 103 | Imaging control processing for second 3D modeling |
| 104 | Second 3D data generation processing |
| 105 | Imaging guidance output processing for second 3D modeling |
| 106 | Imaging parameter control processing |
| 1300 | Imaging device |
| 1301 | First 3D data generation unit |
| 1302 | Scoring processing unit |
| 1303 | Imaging control unit |
| 1304 | Second 3D data generation unit |
| 1305 | Encoding unit |
| 1306 | Storage unit |
| 1307 | Communication unit |
| 1308 | Imaging guidance output control unit |
| 1309 | Output unit |
| 1311 | Depth sensor |
| 1312 | Imaging unit |
| 1313 | IMU |
| 1314 | Real-time 3D modeling processing unit |
| 1321 | SLAM |
| 1322 | TSDF update unit |
| 1323 | Mesh generation unit |
| 1331 | Operation unit |
| 1332 | Imaging unit |
| 1333 | Image processing unit |
| 1334 | Photogrammetry processing unit |
| 1341 | SfM |
| 1342 | MVS |
| 1400 | Information processing system |
| 1401 | Imaging communication device |
| 1402 | Imaging device |
| 1403 | Server |
| 1404 | Network |
| 1410 | Terminal device |
| 1421 | Communication unit |
| 1431 | Communication unit |
| 1432 | Encoding unit |
| 1433 | Storage unit |
| 1441 | Communication unit |
| 1442 | Decoding unit |
| 1444 | Encoding unit |
| 1445 | Storage unit |
| 1611 | Imaging parameter control unit |
| 1612 | WB sensor |
| 1900 | Computer |

**Claims**

1. An information processing device comprising

an imaging parameter control unit that controls an imaging parameter applied to imaging for generating a captured image to be used for generation of second three-dimensional shape information on a basis of position and orientation information indicating a position and an orientation of an imaging unit and first three-dimensional shape information, wherein

the first three-dimensional shape information includes information expressing a three-dimensional shape of a 3D object, and is generated on a basis of the position and orientation information and a captured image of the 3D object, and the second three-dimensional shape information includes information expressing a three-dimensional shape of the 3D object, and is generated on a basis of the captured image of the 3D object generated by the imaging to which the imaging parameter is applied.

2. The information processing device according to claim 1, wherein
the imaging parameter includes a focus control parameter.

3. The information processing device according to claim 2, wherein
the imaging parameter control unit predicts a focus position on a basis of the position and orientation information and the first three-dimensional shape information, and reflects a prediction result in the focus control parameter.

4. The information processing device according to claim 1, wherein
the imaging parameter includes a diaphragm control parameter.

5. The information processing device according to claim 4, wherein
the imaging parameter control unit predicts an appropriate depth of field on a basis of the position and orientation information and the first three-dimensional shape information, and reflects a prediction result in the diaphragm control parameter.

6. The information processing device according to claim 1, wherein
the imaging parameter includes a camera shake correction control parameter.

7. The information processing device according to claim 6, wherein
the imaging parameter control unit estimates a motion of the imaging unit on a basis of the position and orientation information and the first three-dimensional shape information, and reflects an estimation result in the camera shake correction control parameter.

8. The information processing device according to claim 1, wherein
the imaging parameter includes an exposure control parameter.

9. The information processing device according to claim 8, wherein
the imaging parameter control unit derives an allowable amount of change in exposure on a basis of the position and orientation information and the first three-dimensional shape information, and controls the exposure control parameter so that an amount of change in exposure is less than or equal to the allowable amount.

10. The information processing device according to claim 1, wherein
the imaging parameter includes a shadow correction parameter.

11. The information processing device according to claim 10, wherein
the imaging parameter control unit estimates a light source, and controls the shadow correction parameter on a basis of information of the estimated light source, the position and orientation information, and the first three-dimensional shape information.

12. The information processing device according to claim 11, wherein
the imaging parameter control unit estimates the light source on a basis of an illumination environment detection result.

13. The information processing device according to claim 1, wherein
the imaging parameter includes a color matching control parameter.

14. The information processing device according to claim 13, wherein
the imaging parameter control unit controls the color matching control parameter on a basis of a past captured image.

15. The information processing device according to claim 1, further comprising

a first 3D modeling unit that generates the first three-dimensional shape information on a basis of the position and orientation information and the captured image of the 3D object.

16. The information processing device according to claim 1, further comprising
a second imaging unit that performs the imaging to which the imaging parameter is applied.

17. The information processing device according to claim 16, further comprising
an association unit that associates the imaging parameter with a second captured image generated by the second imaging unit.

18. An information processing method comprising

controlling an imaging parameter applied to imaging for generating a captured image to be used for generation of second three-dimensional shape information on a basis of position and orientation information indicating a position and an orientation of an imaging unit and first three-dimensional shape information, wherein the first three-dimensional shape information includes information expressing a three-dimensional shape of a 3D object, and is generated on a basis of the position and orientation information and a captured image of the 3D object, and the second three-dimensional shape information includes information expressing a three-dimensional shape of the 3D object, and is generated on a basis of the captured image of the 3D object generated by the imaging to which the imaging parameter is applied.

19. An information processing device comprising:

an illumination environment detection unit that detects an illumination environment of a space in which imaging is performed;
an imaging unit that performs, in the space, the imaging for generating a captured image to be used for generation of three-dimensional shape information expressing a three-dimensional shape of a 3D object; and
an association unit that associates information regarding the detected illumination environment with the captured image.

20. An information processing method comprising:

detecting an illumination environment of a space in which imaging is performed;
performing, in the space, the imaging for generating a captured image to be used for generation of three-dimensional shape information expressing a three-dimensional shape of a 3D object; and
associating information regarding the detected illumination environment with the captured image.

## FIG. 1

SfM+MVS+Meshing

## FIG. 2

SLAM＋TSDF＋MC

EP 4 676 072 A1

## FIG. 3

|  | REAL-TIME 3D MODELING | PHOTOGRAMMETRY |
|---|---|---|
| METHOD | SELF-LOCALIZATION + TSDF | SfM (INCLUDING SELF-LOCALIZATION) + MVS |
| DATA | DEPTH + ORIENTATION DATA (+ IMAGE) | ONLY IMAGE DATA |
| PROCESSING TIME | REAL-TIME (>30fps) | LONG TIME (SEVERAL MINUTES TO SEVERAL TENS OF HOURS) |
| REQUIRED COMPUTATION | MOBILE AP LEVEL | HIGH-END CPU + GPU LEVEL |
| DEFINITION OF MODEL | COARSE (DEPENDING ON SENSOR AND ACCURACY OF SELF-LOCALIZATION) | DEFINITION TO ULTRA-HIGH DEFINITION (DEPENDING ON INPUT IMAGE SIZE, NUMBER, AND IMAGING METHOD) |
| INTERNAL REPRESENTATION OF THREE-DIMENSIONAL DATA | Voxel-BASE | POINT CLOUD-BASE |
| SUBJECT SIZE / RESOLUTION CONSTRAINTS | THERE ARE CONSTRAINTS, SENSOR DEPENDENT (ABSOLUTE PHYSICAL QUANTITY) | THERE ARE NO CONSTRAINTS (RELATIVE BECAUSE OF IMAGE-BASED) |
| ABSOLUTE ACCURACY OF MODEL | LOW (DEPENDING ON SENSOR AND ACCURACY OF SELF-LOCALIZATION) | HIGH (OPTIMIZATION USING BUNDLE ADJUSTMENT) |
| SCALE | UNIQUELY IDENTIFIED (ABSOLUTE SIZE IS KNOWN) | VARIABLE (SIZE IS UNKNOWN) |

EP 4 676 072 A1

## FIG. 4

SCORING RESULT OUTPUT
OVERLAP INFORMATION OUTPUT
IMAGING ASSIST INFORMATION OUTPUT
CAPTURED IMAGE DISPLAY

IMAGING VIEWPOINT
INFORMATION

IMAGING GUIDANCE
OUTPUT PROCESSING FOR
SECOND 3D MODELING

105

CAPTURED IMAGE
IMAGING TIMING
INFORMATION

101    FIRST 3D DATA

FIRST 3D DATA
GENERATION
PROCESSING

102

SCORING
PROCESSING

SCORE LINK RESULT

IMAGING PARAMETER
CONTROL
PROCESSING

~106

ORIENTATION INFORMATION
FIRST 3D DATA

IMAGING PARAMETER

103

IMAGING CONTROL
PROCESSING FOR
SECOND 3D MODELING

IMAGING CONTROL
INFORMATION

104

SECOND 3D DATA
GENERATION
PROCESSING

SECOND 3D DATA

IMAGING VIEWPOINT
INFORMATION

IMAGING TIMING
INFORMATION

MANUAL IMAGING

CAMERA INFORMATION

EP 4 676 072 A1

FIG. 5

EP 4 676 072 A1

FIG. 6

FIG. 7

EP 4 676 072 A1

FIG. 8

EP 4 676 072 A1

FIG. 9

EP 4 676 072 A1

FIG. 10

EP 4 676 072 A1

FIG. 11

EP 4 676 072 A1

## FIG. 12

EP 4 676 072 A1

FIG. 13

EP 4 676 072 A1

FIG. 14

FIG. 15

EP 4 676 072 A1

FIG. 16

FIG. 17

EP 4 676 072 A1

FIG. 18

## FIG. 19

FIG. 20

EP 4 676 072 A1

FIG. 21

## FIG. 22

BACK SIDE          JUST RIGHT          FRONT SIDE

CURRENT POSITION

IDEAL POSITION

260          261

EP 4 676 072 A1

## FIG. 23

## FIG. 24

FACING DIRECTIONS ARE SAME

273

272

NEED TO GET CLOSER

273

272

IN CASE OF BEING IMAGED FROM COMPLETELY IDEAL DIRECTION

274

273

272

FACING DIRECTIONS ARE SLIGHTLY APART

273

272

WITHIN RANGE OF IDEAL POSITION

274

273

272

TOO CLOSE, NEED TO MOVE AWAY

273

272

FIG. 25

EP 4 676 072 A1

# FIG. 26

## FIG. 27

# FIG. 28

## FIG. 29

360
361

360
362

360
363

## FIG. 30

## FIG. 31

# FIG. 32

# FIG. 33

# FIG. 34

3D MODEL CANNOT
BE CONFIRMED
AT IMAGING SITE

| IMAGING | MOVE | 3D MODEL SYNTHESIS | 3D MODEL EDITING |

IMAGING SITE          OFFICE/HOME     OFFICE/HOME

IF THERE ARE ANY MISSING IMAGES,
HAVE TO GO BACK TO IMAGING SITE
AND DO IMAGING WORK AGAIN

421

| IMAGING | MOVE | 3D MODEL SYNTHESIS | 3D MODEL EDITING |

3D MODEL SYNTHESIS
(INCREMENT PROCESSING)

IMAGING SITE                        OFFICE/HOME     OFFICE/HOME

3D MODEL CAN BE
CONFIRMED
AT IMAGING SITE

422

# FIG. 35

## FIG. 36

# FIG. 37

( 3D MODELING PROCESSING START )

| ACQUIRE DEPTH, CAPTURED IMAGE, AND INERTIAL INFORMATION | S301 |

| PERFORM REAL-TIME 3D MODELING | S302 |

| PERFORM SCORING ON FIRST 3D DATA ON BASIS OF IMAGING PERFORMED SO FAR | S303 |

| GENERATE AND OUTPUT IMAGING GUIDANCE ON BASIS OF SCORING RESULT, ORIENTATION INFORMATION, AND LIKE | S304 |

| CONTROL IMAGING FOR PHOTOGRAMMETRY ON BASIS OF SCORING RESULT, ORIENTATION INFORMATION, AND LIKE | S305 |

| PERFORM IMAGING IN ACCORDANCE WITH CONTROL | S306 |

| ACQUIRE CAMERA INFORMATION AND IMAGING TIMING INFORMATION | S307 |

NO ⟨ TERMINATE IMAGING FOR PHOTOGRAMMETRY? ⟩ S308

YES

| PERFORM PHOTOGRAMMETRY | S309 |

| ENCODE | S310 |

| STORE AND TRANSMIT | S311 |

( END )

# FIG. 38

```
( REAL-TIME 3D MODELING PROCESSING START )
                    |
                    v
DERIVE THREE-DIMENSIONAL ORIENTATION      S331
    ON BASIS OF CAPTURED IMAGE AND
          INERTIAL INFORMATION
                    |
                    v
UPDATE TSDF ON BASIS OF CAPTURED IMAGE,   S332
   ORIENTATION INFORMATION, AND DEPTH
                    |
                    v
   GENERATE FIRST 3D DATA ON BASIS OF     S333
           UPDATED TSDF
                    |
                    v
              ( RETURN )
```

# FIG. 39

```
( PHOTOGRAMMETRY PROCESSING START )
                    │
                    ▼
┌─────────────────────────────────────────┐ S351
│  DETECT CORRESPONDING POINT BETWEEN      │
│           CAPTURED IMAGES                │
└─────────────────────────────────────────┘
                    │
                    ▼
┌─────────────────────────────────────────┐ S352
│ DERIVE THREE-DIMENSIONAL ORIENTATION OF  │
│    CAMERA USING EPIPOLAR CONSTRAINT      │
└─────────────────────────────────────────┘
                    │
                    ▼
┌─────────────────────────────────────────┐ S353
│    DERIVE THREE-DIMENSIONAL POINT USING  │
│             TRIANGULATION                │
└─────────────────────────────────────────┘
                    │
                    ▼
┌─────────────────────────────────────────┐ S354
│ OPTIMIZE WHOLE USING BUNDLE ADJUSTMENT   │
└─────────────────────────────────────────┘
                    │
                    ▼
┌─────────────────────────────────────────┐ S355
│     DERIVE THREE-DIMENSIONAL POINT BY    │
│ DENSE CORRESPONDING POINT SEARCH AND     │
│      GENERATE SECOND 3D DATA             │
└─────────────────────────────────────────┘
                    │
                    ▼
              ( RETURN )
```

## FIG. 40

EP 4 676 072 A1

FIG. 41

EP 4 676 072 A1

## FIG. 42

CAMERA INFORMATION

IMAGING TIMING INFORMATION

IMAGING CONTROL INFORMATION

1431 — COMMUNICATION UNIT

1332 — IMAGING UNIT → IMAGE PROCESSING UNIT (1333) → CAPTURED IMAGE → ENCODING UNIT (1432) → STORAGE UNIT (1433)

OPERATION UNIT (1331)

1402

EP 4 676 072 A1

# FIG. 43

SECOND 3D DATA

| COMMUNICATION UNIT | DECODING UNIT | SfM | MVS | ENCODING UNIT | STORAGE UNIT |

1441  1442  1341  1342  1444  1445

1334

1403

EP 4 676 072 A1

## FIG. 44

**1401**

START

ACQUIRE DEPTH, CAPTURED IMAGE, AND SENSOR INFORMATION — S401

PERFORM REAL-TIME 3D MODELING — S402

④

PERFORM SCORING ON FIRST 3D DATA ON BASIS OF IMAGING PERFORMED SO FAR — S403

GENERATE AND OUTPUT IMAGING GUIDANCE ON BASIS OF SCORING RESULT, ORIENTATION INFORMATION, AND LIKE — S404

CONTROL IMAGING FOR PHOTOGRAMMETRY ON BASIS OF SCORING RESULT, ORIENTATION INFORMATION, AND LIKE — S405

S406

S407

①

**1402**

START

S411

PERFORM IMAGING IN ACCORDANCE WITH CONTROL — S412

SUPPLY CAPTURED IMAGE — S413

SUPPLY CAMERA INFORMATION AND IMAGING TIMING INFORMATION — S414

②

**1403**

START

③

EP 4 676 072 A1

# FIG. 45

EP 4 676 072 A1

FIG. 46

EP 4 676 072 A1

FIG. 47

SCORING RESULT    SECOND 3D DATA

FIRST 3D DATA
IMAGING VIEWPOINT
INFORMATION

1302

SCORING
PROCESSING
UNIT

COMMUNICATION UNIT
1441

DECODING UNIT
1442

SfM
1341

MVS
1342

1334

ENCODING UNIT
1444

STORAGE UNIT
1445

1403

EP 4 676 072 A1

## FIG. 48

EP 4 676 072 A1

# FIG. 49

① ② ③

**S541** PERFORM IMAGING IN ACCORDANCE WITH CONTROL

S531 → **S542** SUPPLY CAPTURED IMAGE

S532 → **S543** SUPPLY CAMERA INFORMATION AND IMAGING TIMING INFORMATION

**S544** ENCODE AND STORE

SUPPLY CAPTURED IMAGE S533 → S551

S534 TERMINATE IMAGING FOR PHOTOGRAMMETRY?

④

**S552** PERFORM PHOTOGRAMMETRY

**S553** ENCODE

**S554** STORE AND TRANSMIT

END  END  END

EP 4 676 072 A1

109

FIG. 50

# FIG. 51

(3D MODELING PROCESSING START)

| | |
|---|---|
| ACQUIRE DEPTH, CAPTURED IMAGE, AND INERTIAL INFORMATION | S611 |
| PERFORM REAL-TIME 3D MODELING | S612 |
| CONTROL IMAGING PARAMETER | S613 |
| PERFORM SCORING ON FIRST 3D DATA ON BASIS OF IMAGING PERFORMED SO FAR | S614 |
| GENERATE AND OUTPUT IMAGING GUIDANCE ON BASIS OF SCORING RESULT, ORIENTATION INFORMATION, AND LIKE | S615 |
| CONTROL IMAGING FOR PHOTOGRAMMETRY ON BASIS OF SCORING RESULT, ORIENTATION INFORMATION, AND LIKE | S616 |
| PERFORM IMAGING IN ACCORDANCE WITH CONTROL USING IMAGING PARAMETER | S617 |
| ACQUIRE CAMERA INFORMATION AND IMAGING TIMING INFORMATION | S618 |

TERMINATE IMAGING FOR PHOTOGRAMMETRY? — NO (loop back to S614) / S619

YES

| | |
|---|---|
| PERFORM PHOTOGRAMMETRY | S620 |
| ASSOCIATE IMAGING PARAMETER WITH CAPTURED IMAGE | S621 |
| ENCODE | S622 |
| STORE AND TRANSMIT | S623 |

(END)

# FIG. 52

```
( FOCUS CONTROL PROCESSING START )
                  │
                  ▼
┌─────────────────────────────────────────┐ S651
│        DETECT DETECTION REGION           │
└─────────────────────────────────────────┘
                  │
                  ▼
┌─────────────────────────────────────────┐ S652
│ PREDICT DISTANCE TO SUBJECT DETECTION REGION │
│  IN CURRENT FRAME ON BASIS OF SELF-POSITION  │
│   AND ORIENTATION AND SUBJECT SHAPE IN       │
│              PAST FRAME                       │
└─────────────────────────────────────────┘
                  │
                  ▼
┌─────────────────────────────────────────┐ S653
│ CALCULATE FOCUS POSITION IN DETECTION REGION │
└─────────────────────────────────────────┘
                  │
                  ▼
┌─────────────────────────────────────────┐ S654
│  SET COMMAND VALUE OF FOCUS LENS POSITION │
│             AND DRIVE LENS                 │
└─────────────────────────────────────────┘
                  │
                  ▼
            (    END    )
```

# FIG. 53

```
( DIAPHRAGM CONTROL PROCESSING START )
```

| | |
|---|---|
| DETECT DETECTION REGION | S661 |

| | |
|---|---|
| PREDICT DEPTH OF FIELD FOCUSING ON ENTIRE DETECTION REGION IN CURRENT FRAME ON BASIS OF SELF-POSITION AND ORIENTATION AND SUBJECT SHAPE IN PAST FRAME | S662 |

| | |
|---|---|
| CALCULATE DIAPHRAGM VALUE AT WHICH DEPTH OF FIELD BECOMES DESIRED DEPTH OF FIELD | S663 |

| | |
|---|---|
| SET COMMAND VALUE OF DIAPHRAGM POSITION | S664 |

```
( END )
```

## FIG. 54

```
( CAMERA SHAKE CORRECTION CONTROL PROCESSING START )
```

↓

| DETECT DETECTION REGION | S671 |

↓

| ESTIMATE CAMERA MOTION AND THREE-DIMENSIONAL POSITION OF SUBJECT DETECTION REGION IN CURRENT FRAME ON BASIS OF TRAJECTORY OF SELF-POSITION AND ORIENTATION AND SUBJECT SHAPE IN PAST FRAME | S672 |

↓

| CONVERT CAMERA MOTION AND THREE-DIMENSIONAL POSITION INTO MOTION ON IMAGING SURFACE | S673 |

↓

| OBTAIN POSITION OF IMAGE SENSOR OR CAMERA SHAKE CORRECTION LENS THAT MAXIMIZES CORRECTION ANGLE ON BASIS OF ESTIMATION RESULT, AND MOVE IMAGE SENSOR OR CAMERA SHAKE CORRECTION LENS TO POSITION | S674 |

↓

( END )

# FIG. 55

EP 4 676 072 A1

# FIG. 56

EXPOSURE CONTROL PROCESSING START

DETECT DETECTION REGION S701

DERIVE ALLOWABLE AMOUNT OF CHANGE IN EXPOSURE OF ENTIRE SCREEN ON BASIS OF SELF-POSITION AND ORIENTATION AND SUBJECT SHAPE S702

CALCULATE CURRENT LIGHT AMOUNT IN DETECTION REGION S703

DERIVE EXPOSURE ADJUSTMENT AMOUNT NECESSARY FOR TARGET EXPOSURE VALUE OF DETECTION REGION S704

SET EXPOSURE CONTROL PARAMETER ON BASIS OF EXPOSURE ADJUSTMENT AMOUNT S705

CALCULATE CURRENT LIGHT AMOUNT OF ENTIRE SCREEN S706

NO IS EXPOSURE CHANGE AMOUNT OF ENTIRE SCREEN LESS THAN OR EQUAL TO ALLOWABLE AMOUNT? S707

YES

END

# FIG. 57

```
( SHADOW CORRECTION CONTROL PROCESSING START )
                        │
                        ▼
┌─────────────────────────────────────────────────┐ S721
│            DETECT DETECTION REGION                │
└─────────────────────────────────────────────────┘
                        │
                        ▼
┌─────────────────────────────────────────────────┐ S722
│              ESTIMATE LIGHT SOURCE                │
└─────────────────────────────────────────────────┘
                        │
                        ▼
┌─────────────────────────────────────────────────┐ S723
│       DERIVE LIGHT AMOUNT OF DETECTION REGION     │
│          ON BASIS OF LIGHT SOURCE INFORMATION,    │
│   SELF-POSITION AND ORIENTATION, AND SUBJECT SHAPE│
└─────────────────────────────────────────────────┘
                        │
                        ▼
┌─────────────────────────────────────────────────┐ S724
│        DERIVE EXPOSURE ADJUSTMENT AMOUNT OF       │
│                 DETECTION REGION                  │
└─────────────────────────────────────────────────┘
                        │
                        ▼
┌─────────────────────────────────────────────────┐ S725
│  SET SHADOW CORRECTION PARAMETER ON BASIS OF      │
│          EXPOSURE ADJUSTMENT AMOUNT               │
└─────────────────────────────────────────────────┘
                        │
                        ▼
                   (   END   )
```

117

# FIG. 58

```
( COLOR MATCHING CONTROL PROCESSING START )
                        │
                        ▼
┌─────────────────────────────────────────────────┐ S741
│           DETECT DETECTION REGION               │
└─────────────────────────────────────────────────┘
                        │
                        ▼
┌─────────────────────────────────────────────────┐ S742
│ SET WB TARGET VALUE ON BASIS OF PAST CAPTURED IMAGES │
└─────────────────────────────────────────────────┘
                        │
                        ▼
┌─────────────────────────────────────────────────┐ S743
│           DERIVE WB ADJUSTMENT AMOUNT IN         │
│    DETECTION REGION ON BASIS OF WB TARGET VALUE  │
│      AND COLOR INFORMATION DETECTION RESULT      │
└─────────────────────────────────────────────────┘
                        │
                        ▼
┌─────────────────────────────────────────────────┐ S744
│  SET COLOR MATCHING CONTROL PARAMETER ON BASIS OF │
│            WB ADJUSTMENT AMOUNT                   │
└─────────────────────────────────────────────────┘
                        │
                        ▼
                   (   END   )
```

## FIG. 59

## INTERNATIONAL SEARCH REPORT

| International application No. |
|---|
| **PCT/JP2024/005160** |

### A. CLASSIFICATION OF SUBJECT MATTER

*H04N 23/60*(2023.01)i; *G03B 5/00*(2021.01)i; *G03B 7/095*(2021.01)i; *G03B 35/08*(2021.01)i; *G06T 7/579*(2017.01)i; *H04N 23/67*(2023.01)i; *H04N 23/68*(2023.01)i; *H04N 23/71*(2023.01)i; *H04N 23/74*(2023.01)i; *H04N 23/75*(2023.01)i; *H04N 23/76*(2023.01)i

FI: H04N23/60 100; H04N23/60 300; H04N23/67; H04N23/71; H04N23/68; H04N23/76; H04N23/75; H04N23/74; G03B7/095; G03B5/00 G; G03B35/08; G06T7/579

According to International Patent Classification (IPC) or to both national classification and IPC

### B. FIELDS SEARCHED

Minimum documentation searched (classification system followed by classification symbols)

H04N23/60; G03B5/00; G03B7/095; G03B35/08; G06T7/579; H04N23/67; H04N23/68; H04N23/71; H04N23/74; H04N23/75; H04N23/76

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-166498 A (TOPPAN PRINTING CO., LTD.) 08 October 2020 (2020-10-08) paragraphs [0050], [0054], [0060]-[0070], fig. 1-5 | 1-5, 8, 10, 13-20 |
| Y | paragraphs [0050], [0054], [0060]-[0070], fig. 1-5 | 9 |
| A | paragraphs [0050], [0054], [0060]-[0070], fig. 1-5 | 6-7, 11-12 |
| Y | JP 2019-092007 A (CANON KABUSHIKI KAISHA) 13 June 2019 (2019-06-13) paragraph [0048] | 9 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/005160**

| Patent document cited in search report | | Publication date (day/month/year) | Patent family member(s) | Publication date (day/month/year) |
|---|---|---|---|---|
| JP 2020-166498 | A | 08 October 2020 | (Family: none) | |
| JP 2019-092007 | A | 13 June 2019 | US 2020/0265634 A1 paragraph [0064] | |

**EP 4 676 072 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018063693 A